# EUROPÄISCHE PATENTSCHRIFT

(11) **EP 1 565 540 B1**
(45) Veröffentlichungstag und Bekanntmachung des Hinweises auf die Patenterteilung: **26.09.2007**
(21) Anmeldenummer: 03811758.6
(22) Anmeldetag: 17.11.2003
(51) Int. Cl.: C09K 19/34

(54) **FLÜSSIGKRISTALLINE VERBINDUNGEN**
LIQUID CRYSTALLINE COMPOUNDS
COMPOSES DE CRISTAUX LIQUIDES

(30) Priorität: 27.11.2002 DE 10255311
(43) Veröffentlichungstag der Anmeldung: 24.08.2005
(73) Patentinhaber: Merck Patent GmbH, 64293 Darmstadt (DE)
(72) Erfinder: KIRSCH, Peer, 64342 Seeheim-Jugenheim (DE); HAHN, Alexander, 65428 Rüsselsheim (DE); POETSCH, Eike, 64367 Mühltal (DE); MEYER, Volker, 64846 Gross-Zimmern (DE); HECKMEIER, Michael, 69502 Hemsbach (DE); KLASEN-MEMMER, Melanie, 67259 Heuchelheim (DE); LÜSSEM, Georg, 85238 Petershausen (DE); HOCK, Christian, 63814 Mainaschaff (DE)
(86) Internationale Anmeldenummer: PCT/EP2003/012813
(87) Internationale Veröffentlichungsnummer: WO 2004/048501

(56) Entgegenhaltungen:
- EP-A- 0 117 476
- EP-A- 1 182 186
- EP-A- 1 302 523
- DE-A- 10 008 712
- DE-A- 10 050 071
- DE-A- 10 229 476
- DE-A- 10 243 776
- DE-A- 10 303 638

## Beschreibung

Die vorliegende Erfindung betrifft flüssigkristalline Verbindungen sowie ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitem wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfemseher) oder für hochinformative Displays für Rechner anwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

In der Druckschrift DE 10008712 A1 werden flüssigkristalline Medien mit wenigstens einer Verbindung, die einen Oxa-Cyclohexanring und eine -CF₂O-Gruppe mit umfasst, offenbart. Die Druckschrift EP 1182186 A2 offenbart ein Verfahren zur Herstellung von Verbindungen mit einer CF₂O-Gruppe zwischen einem Cyclohexanring und einem Benzolring auf der Seite des O-Atoms. Als weitere Substituenten sind weitere Ringe möglich, darunter auch ein Oxa-Cyclohexan-1,4-diyl. In der Druckschrift DE 10050071 A1 wird eine Flüssigkristallzusammensetzung mit Verbindungen, die einen 2.5-substituierten Tetrahydropyranring enthalten, offenbart.

Der Erfindung liegt die Aufgabe zugrunde, Medien insbesondere für derartige MFK-, IPS-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen. Für diese Aufgabe werden flüssigkristalline Verbindungen benötigt, die einen hohen Klärpunkt und eine niedrige Rotationsviskosität besitzen.

Es wurde nun gefunden, dass diese Aufgabe gelöst werden kann, wenn man die erfindungsgemäßen flüssigkristallinen Verbindungen verwendet.

Gegenstand der Erfindung sind somit flüssigkristalline Verbindungen der Formel I, 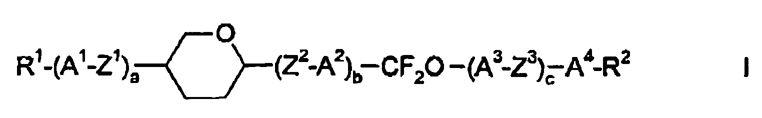 worin
- R¹ und R²: jeweils unabhängig voneinander H, Halogen, einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -0-, -CO-O- oder -O-CO- so ersetzt sein können, dass O-Atome nicht direkt miteinander verknüpft sind, wobei einer der Reste R¹ und R² auch CN, OCN, SCN, NCS oder SF₅ bedeuten kann,
- A¹, A², A³ und A⁴: jeweils unabhängig voneinander 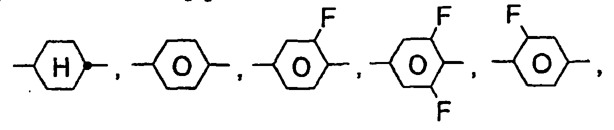 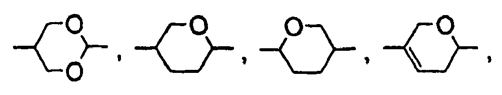 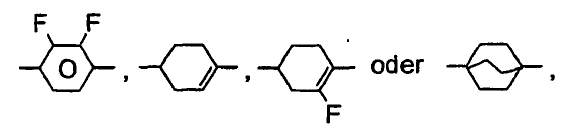
- Z¹, Z² und Z³: jeweils unabhängig voneinander -CO-O-, -O-CO-, -CF₂O-, -OCF₂₋, -CH₂O₋, -OCH₂-, -CH₂CH₂-, -(CH₂)₄-, -C₂F₄-. -CH₂CF₂-, -CF₂CH₂-, -CF=CF-, -CH=CH-, -C≡C- oder eine Einfachbindung, und
- a, b und c: jeweils unabhängig voneinander 0,1,2 oder 3, wobei a + b + c ≤ 3 ist,
bedeuten.

Gegenstand der Erfindung ist weiterhin die Verwendung der Verbindungen der Formel I in flüssigkristallinen Medien.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Insbesondere zeichnen sich die erfindungsgemäßen Verbindungen durch ihren breiten nematischen Phasenbereich aus. In flüssigkristallinen Mischungen unterdrücken die erfindungsgemäßen Substanzen die smektischen Phasen und führen zu einer deutlichen Verbesserung der Tieftemperatur-Lagerstabilität. Chemisch, thermisch und gegen Licht sind sie stabil.

Gegenstand der Erfindung sind insbesondere die Verbindungen der Formel I, worin R¹ Alkyl oder Alkenyl und R² Halogen oder OCF₃ bedeutet. Halogen bedeutet vorzugsweise F, ferner CI.

Insbesondere bevorzugt sind Verbindungen der Formel I, worin a = 0, ferner a = 1, ist. Z¹, Z² und/oder Z³ ist vorzugsweise eine Einfachbindung, ferner -CF₂O- -OCF₂-, -C₂F₄-, -CH₂O-, -OCH₂- oder -COO-. A¹, A², A³ und A⁴ bedeuten vorzugsweise 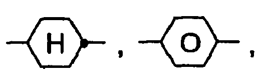 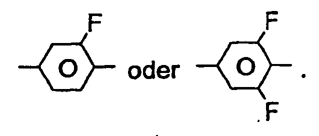 A⁴ bedeutet insbesondere

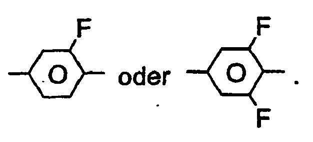

Besonders bevorzugt sind Verbindungen der Formeln IA 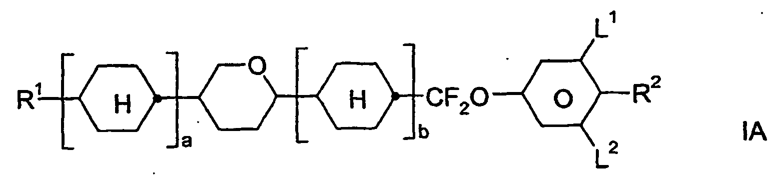 worin a und b jeweils 0, 1 oder 2 und a + b = 1 oder 2 bedeuten. Vorzugsweise bedeutet a =1 und b = 0 oder a = 0 und b = 1. Vorzugsweise ist L¹ = F und L² = H oder Fluor, insbesondere bedeuten L¹ = L² = Fluor.

R¹ bedeutet vorzugsweise Alkyl, Alkoxy, Alkenyl, Alkenyloxy. Vorzugsweise bedeutet R² F, Cl, OCF₃, OCHF₂, OCHFCF₃, OCF₂CHFCF₃, CN, SF₅, NCS, SCN, insbesondere F oder OCF₃, R¹ bedeutet vorzugsweise geradkettiges Alkyl oder Alkenyl. L¹ und L² bedeuten jeweils unabhängig voneinander H oder F. Besonders bevorzugt sind Verbindungen worin X = L¹ = L² = Fluor, ferner X = OCF₃ und L¹ = L² = F bedeuten.

Besonders bevorzugte Verbindungen der Formel I sind die Verbindungen der Formeln l1 bis l31, 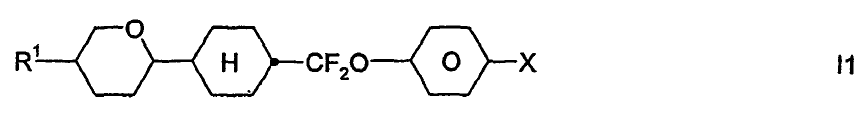 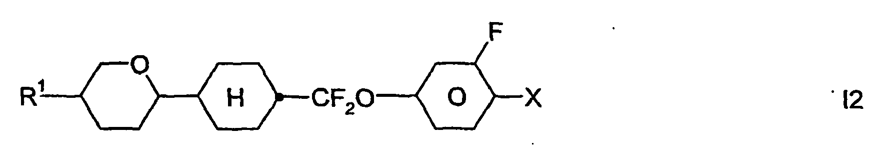 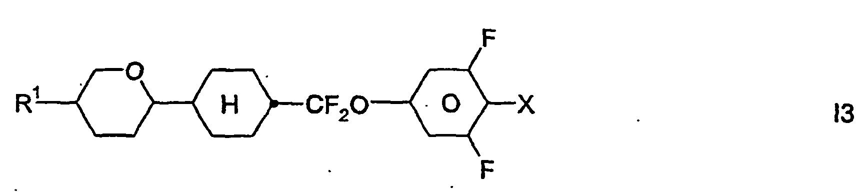 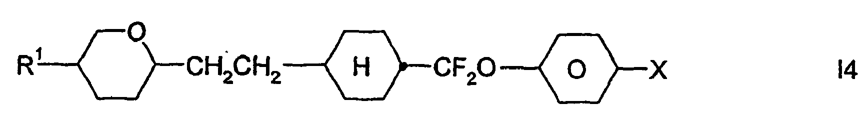 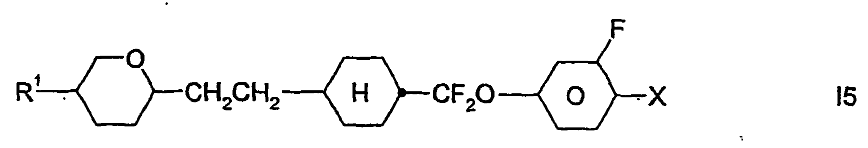 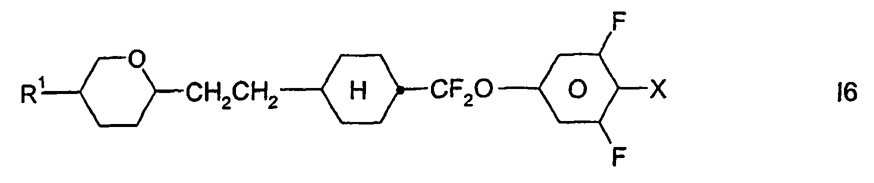 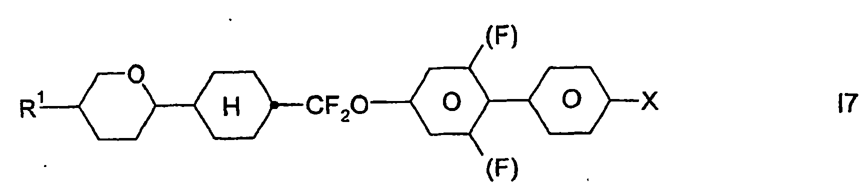 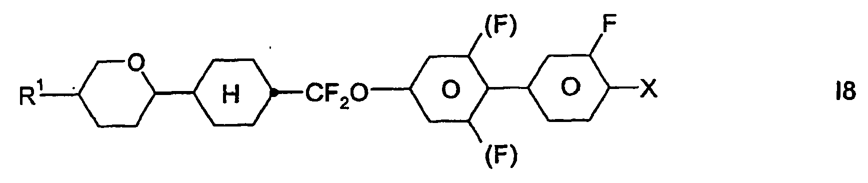 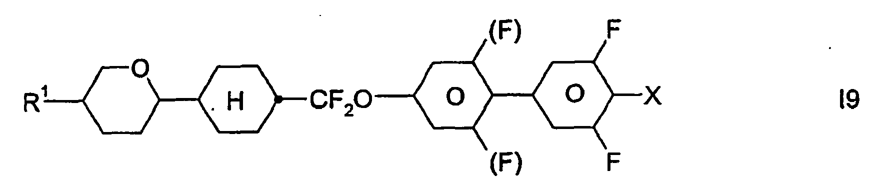 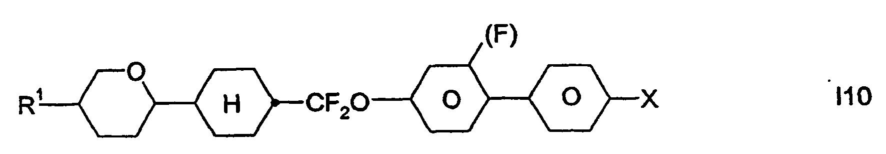 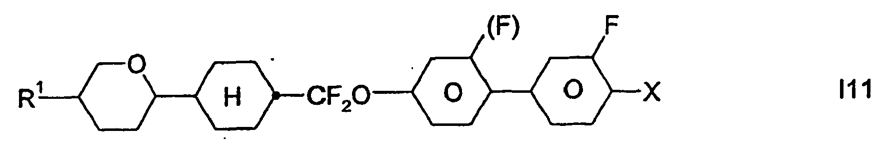 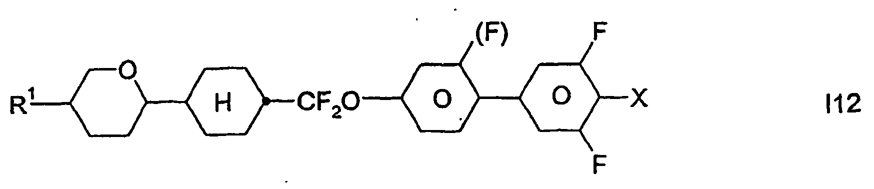 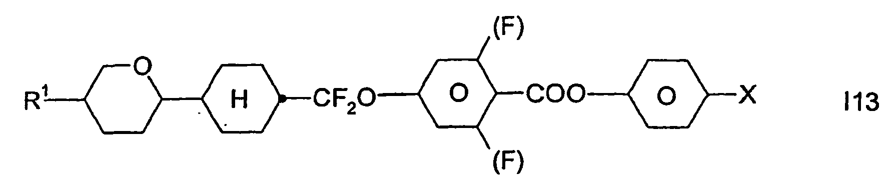 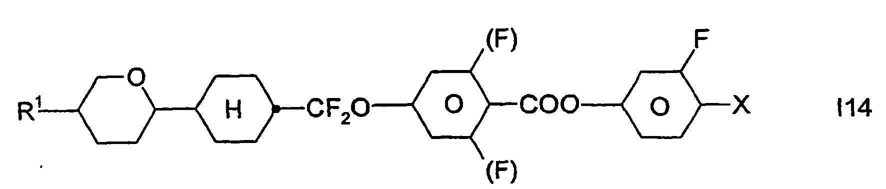 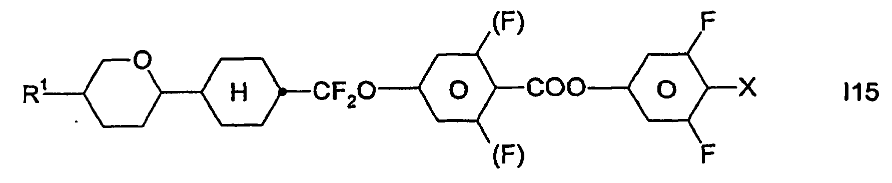 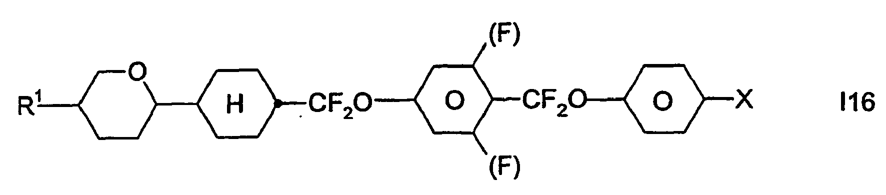 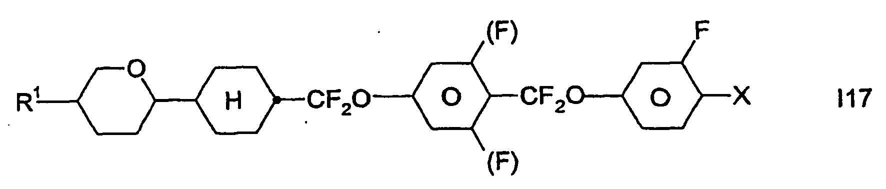 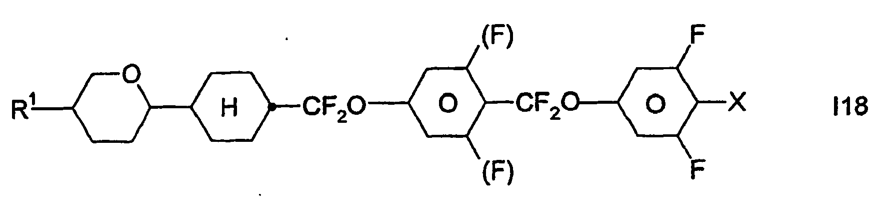 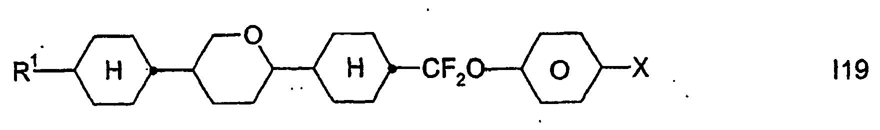 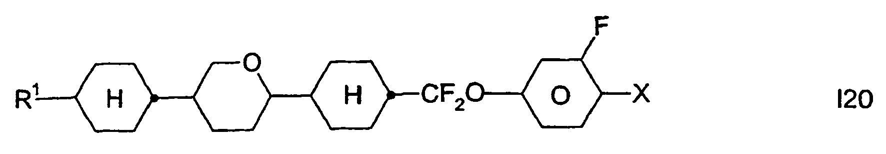 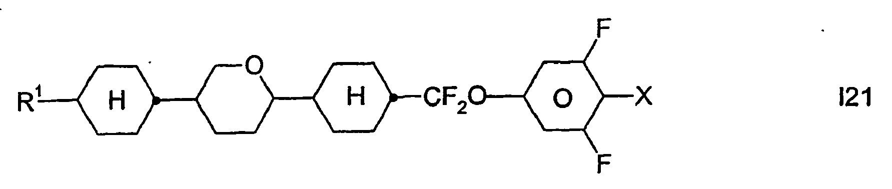 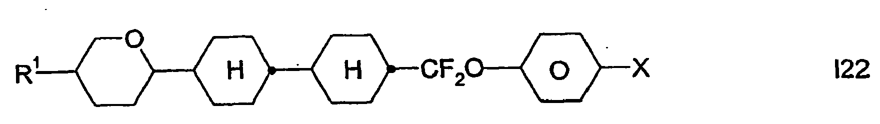 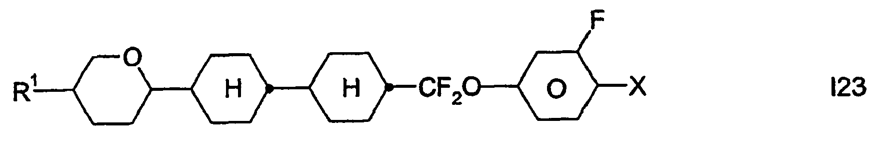 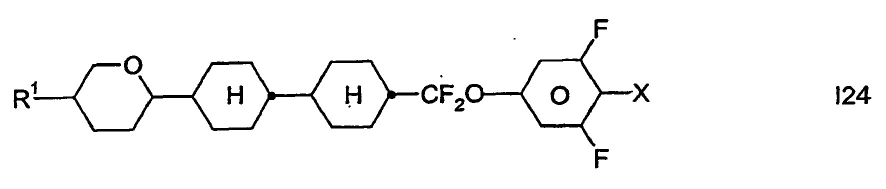 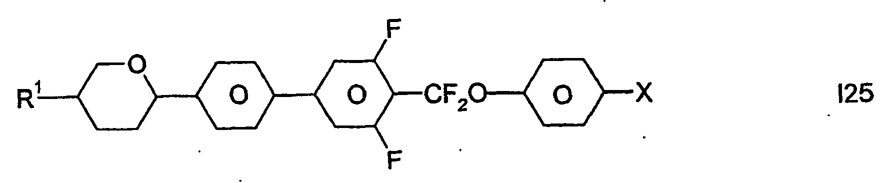 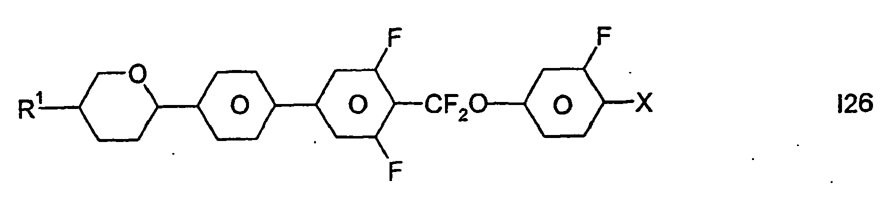 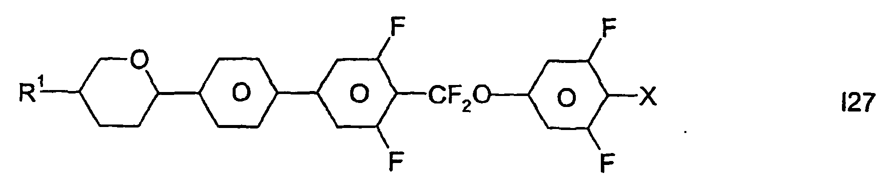 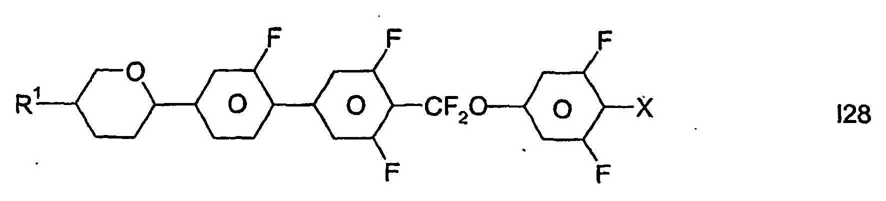 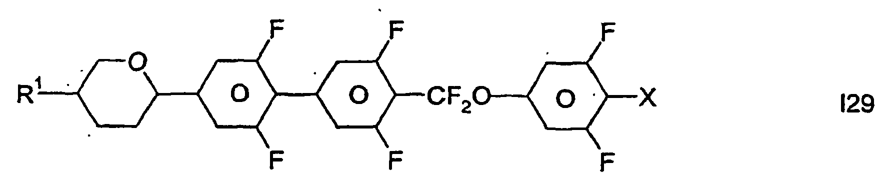 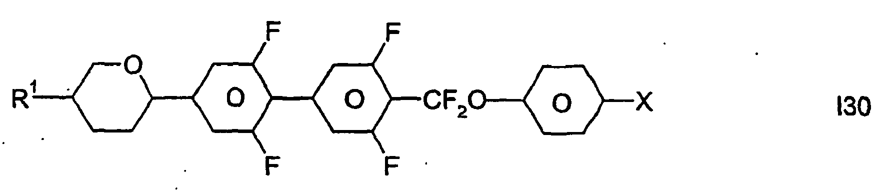 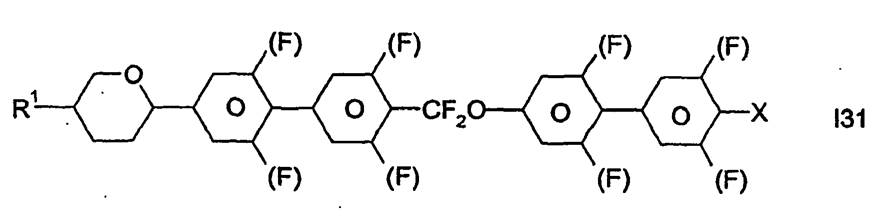 worin R¹ die oben angegebenen Bedeutungen hat X besitzt die Bedeutungen von R².

Die Verbindungen der Formel I lassen sich sehr leicht in die Enantiomere auftrennen, in dem man das Racemat z. B. über eine chirale HPLC-Säule gibt. Gegenstand der Erfindung sind daher die Verbindungen der Formel I, die sowohl als Racemat als auch als Enantiomer vorliegen.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Verbindungen der Formel I können z.B. wie folgt hergestellt werden:

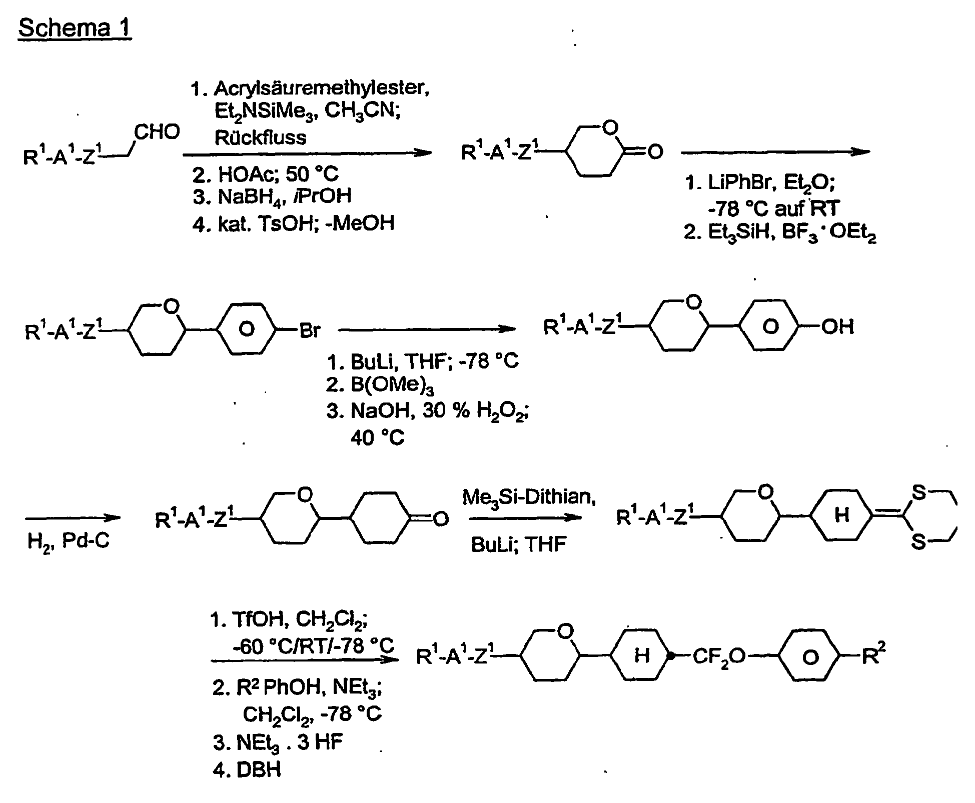

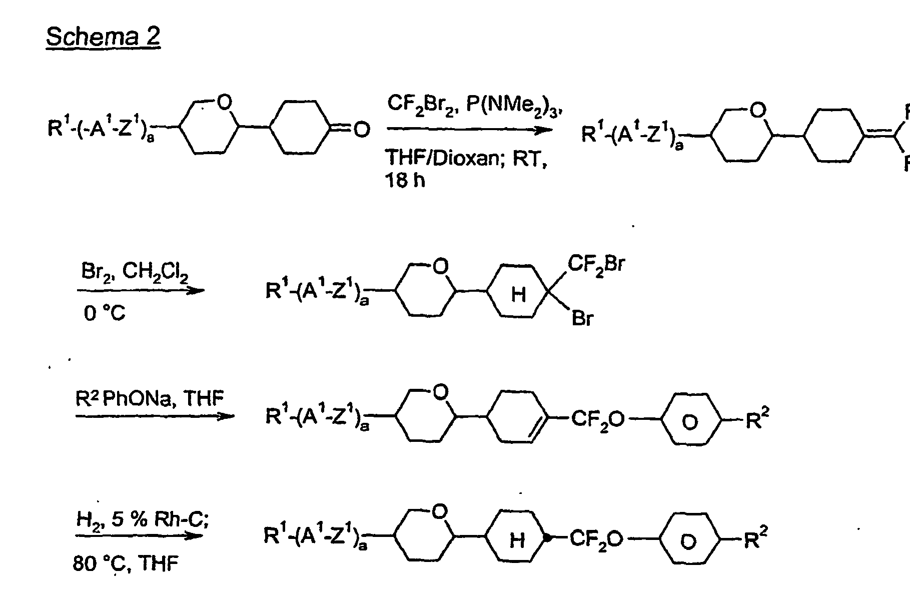

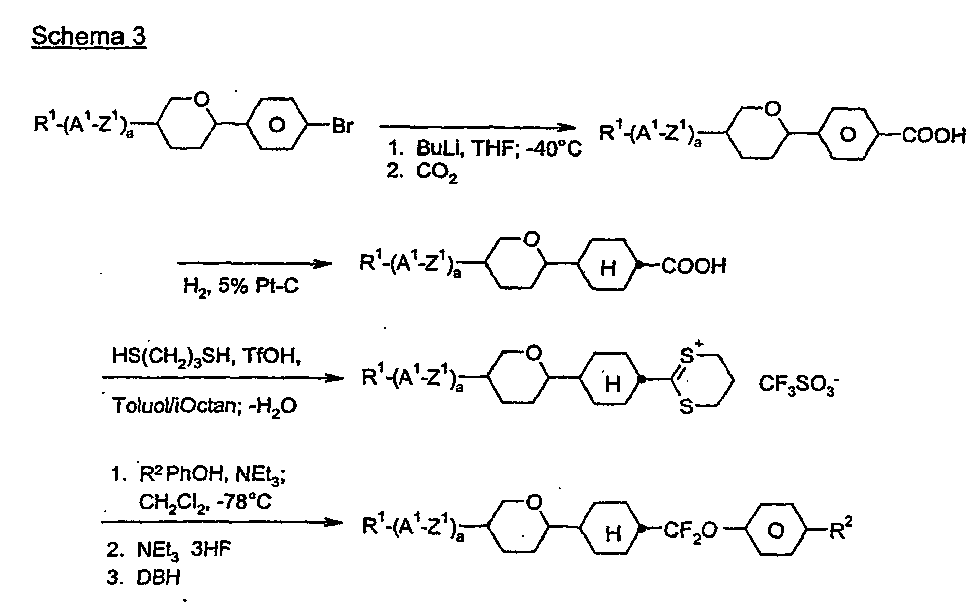

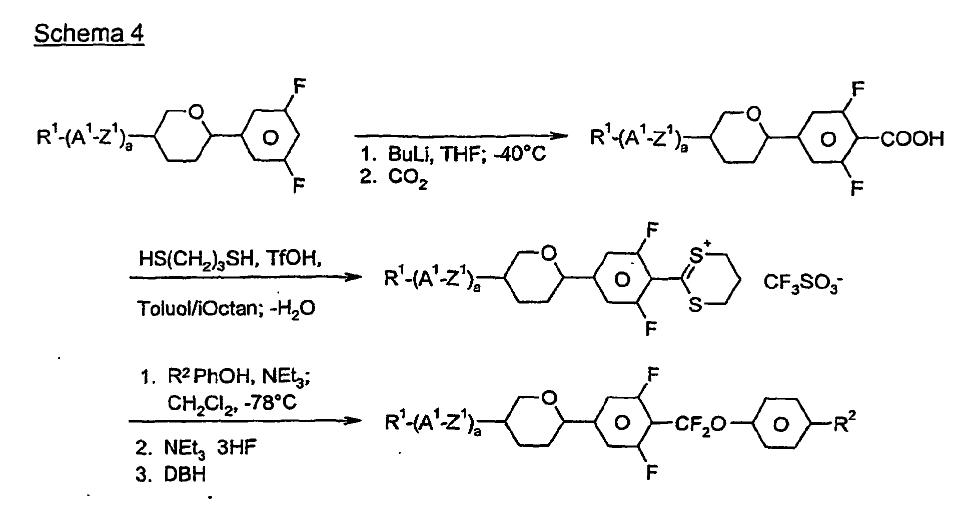

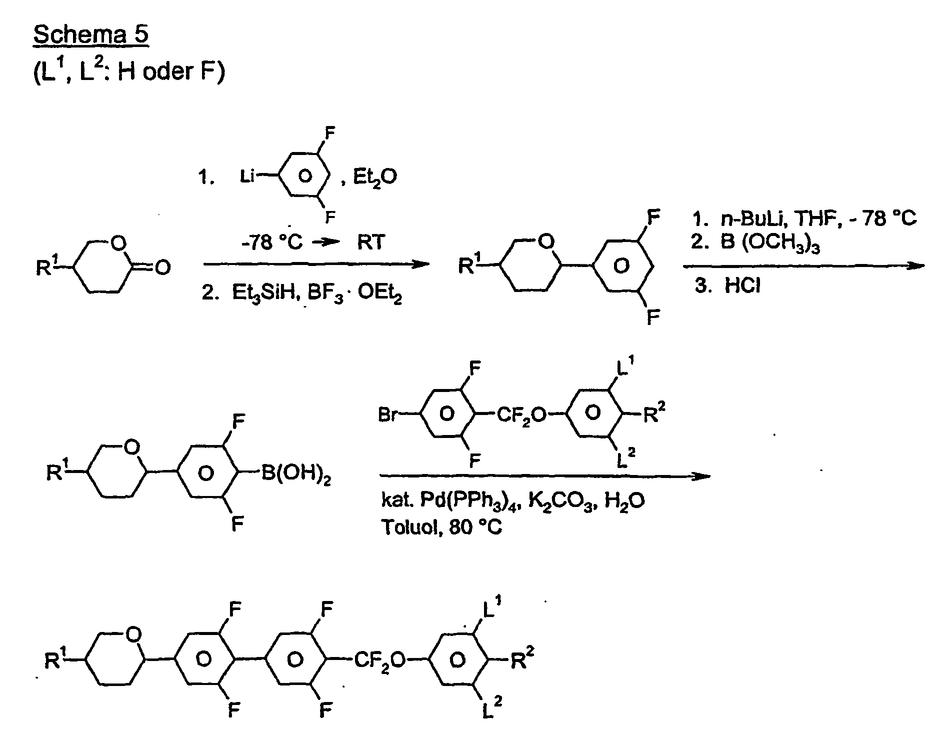

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Flüssigkristallmischungen, wie z. B. MS 99295 (Merck KGaA, Darmstadt, Deutschland) weisen zwar vergleichbare Klärpunkte und Tieftemperaturstabilitäten auf, sie haben jedoch relativ hohe An-Werte als auch höhere Schwellenspannungen von ca. ≥ 1,7 V.

Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40°C, Klärpunkte oberhalb 80°, vorzugsweise oberhalb 90°, besonders bevorzugt oberhalb 100 °C, gleichzeitig dielektrische Anisotropiewerte △ε ≥ 4, vorzugsweise ≥ 6 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 1,5 V, vorzugsweise unterhalb 1,3 V.

Es versteht sich, dass durch geeignete Wahl der Komponenten der erfindungsgemäßen Mischungen auch höhere Klärpunkte (z.B. oberhalb 110°) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm² · s⁻¹, besonders bevorzugt < 50 mm² · s⁻¹. Der nematische Phasenbereich ist vorzugsweise mindestens 90°, insbesondere mindestens 100°. Vorzugsweise erstreckt sich dieser Bereich mindestens von -30° bis +80°. Die Rotationsviskosität γ₁ bei 20 °C ist vorzugsweise < 200 mPa·s, besonders bevorzugt < 180 mPa·s, insbesondere < 160 mPa·s.

Messungen des "Capacity Holding-ratio" (HR) [S. Matsumoto et al., Liquid Crystals 5,1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 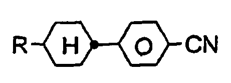 oder Ester der Formel

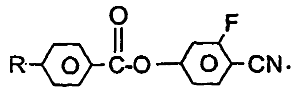

Auch die UV-Stabilität der erfindungsgemäßen Mischungen ist erheblich besser, d. h. sie zeigen eine deutlich kleinere Abnahme des HR unter UV-Belastung.

Vorzugsweise basieren die erfindungsgemäßen Medien auf mehreren (vorzugsweise zwei, drei oder mehr) Verbindungen der Formel I, d.h. der Anteil dieser Verbindungen ist 5-95 %, vorzugsweise 10-60 % und besonders bevorzugt im Bereich von 15-40 %.

Die einzelnen Verbindungen der Formeln I bis IX und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Das Medium enthält vorzugsweise ein, zwei oder drei homologe Verbindungen der Formel I, wobei jedes Homologe zu maximal 10 % in der Mischung enthalten ist.
- Medium enthält zusätzlich eine oder mehrere Verbindungen ausgewählt aus der Gruppe bestehend aus den allgemeinen Formeln II bis IX: 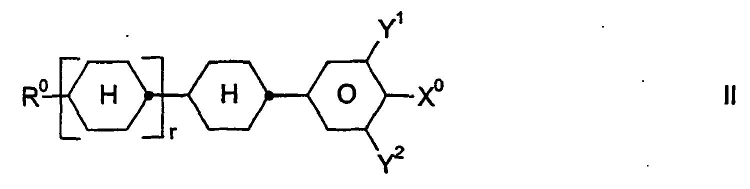 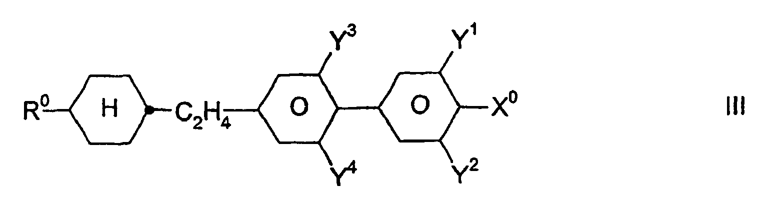 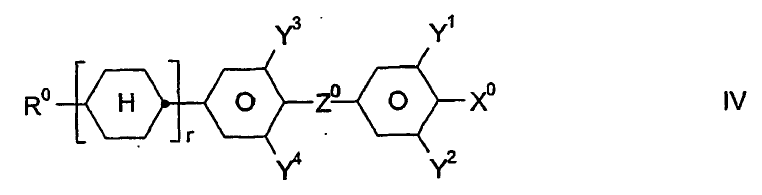 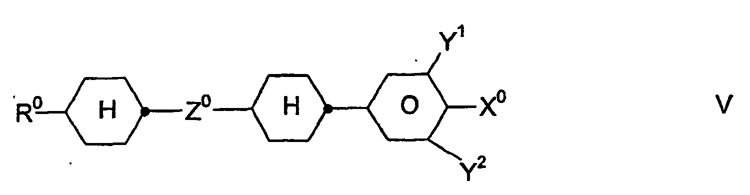 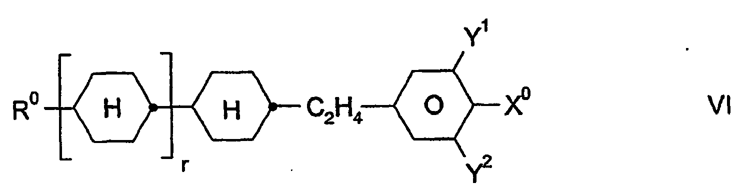 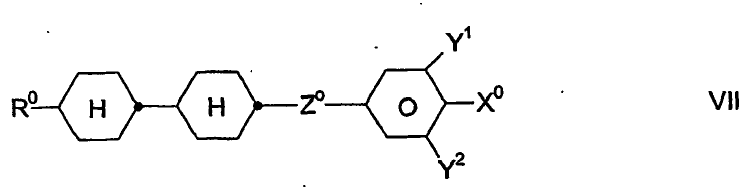 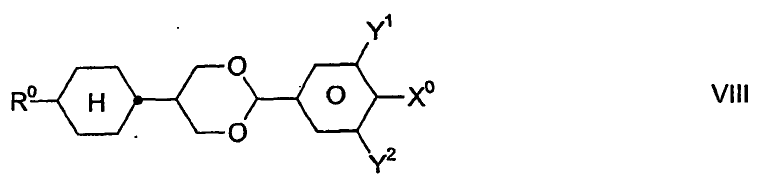 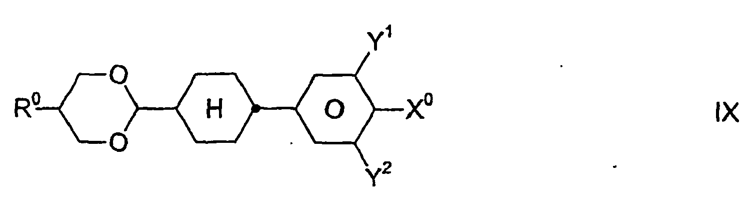
worin die einzelnen Reste die folgenden Bedeutungen haben:
- R⁰: n-Alkyl, Oxaalkyl, Fluoralkyl, Alkenyloxy oder Alkenyl mit jeweils bis zu 9 C-Atomen
- X⁰: F, Cl, halogeniertes Alkyl, halogeniertes Alkenyl, halogeniertes Alkenyloxy oder halogeniertes Alkoxy mit bis zu 7 C-Atomen,
- Z°: -CH=CH-, -C₂H₄-, -(CH₂)₄-, -C₂F₄-, -CH₂O-, -OCH₂-, -CF=CF-, -CF₂O-, -OCF₂- oder -COO-,
- Y1,Y2, Y³ und Y⁴: jeweils unabhängig voneinander H oder F, und
- r: 0 oder 1.

Die Verbindung der Formel IV ist vorzugsweise 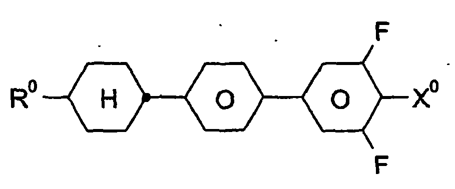 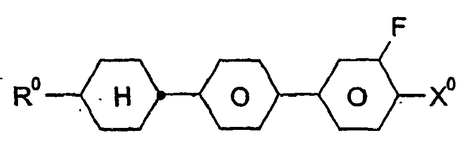 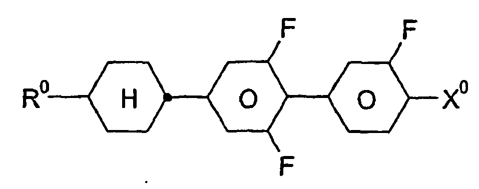 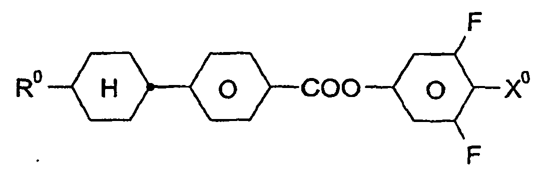 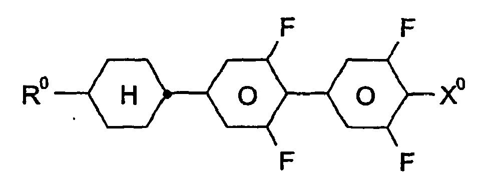 oder 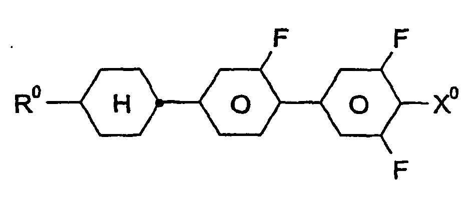
- Das Medium enthält vorzugsweise eine oder mehrere Verbindungen der Formeln 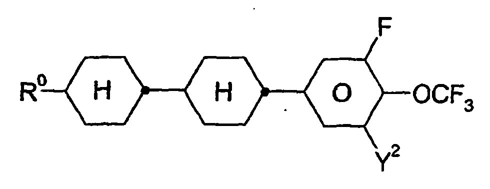 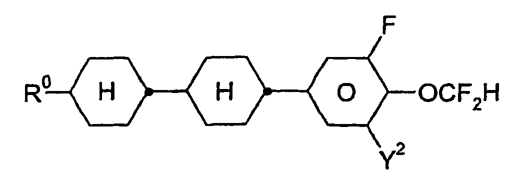 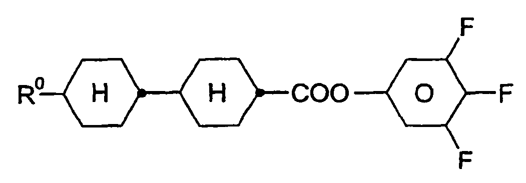 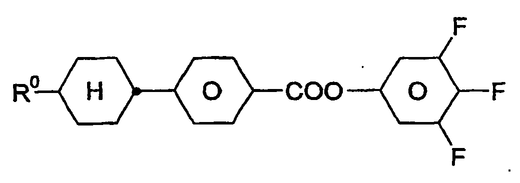 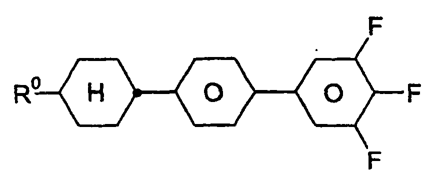 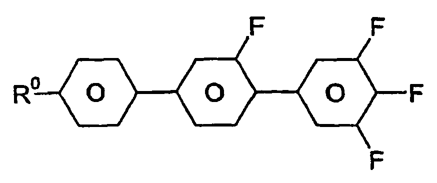 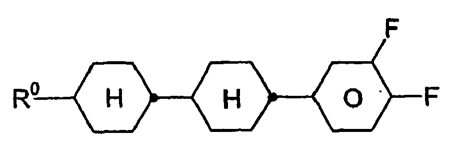 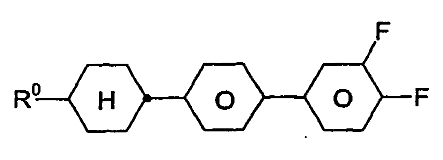 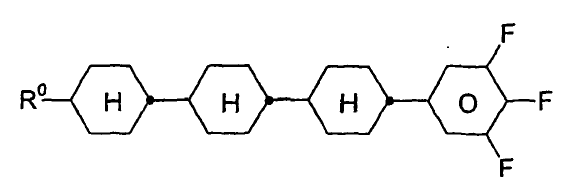 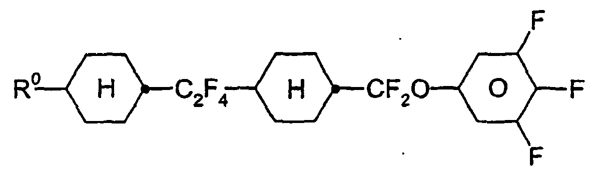 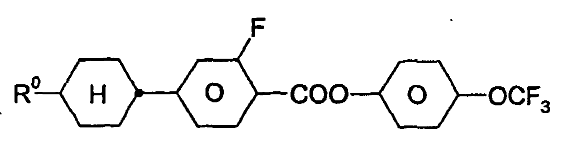 und/oder 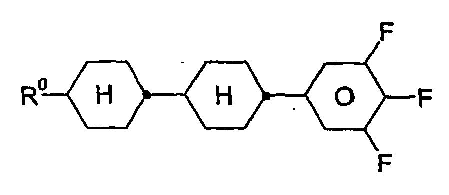 worin R⁰ und Y² die oben angegebene Bedeutung haben.
- Das Medium enthält vorzugsweise ein, zwei oder drei, ferner vier, Homologe der Verbindungen ausgewählt aus der Gruppe H1 bis H19 (n = 1-7): 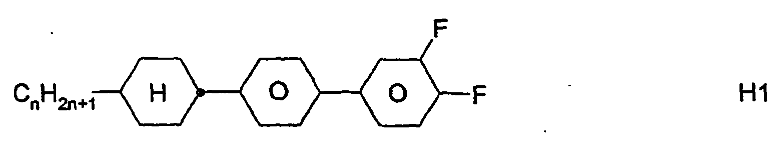 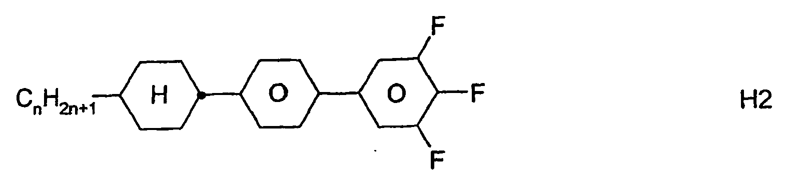 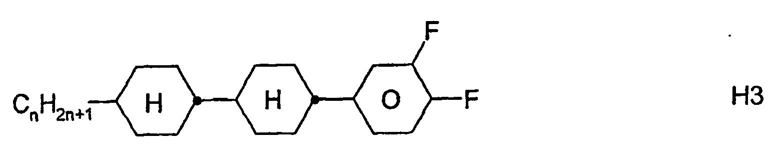 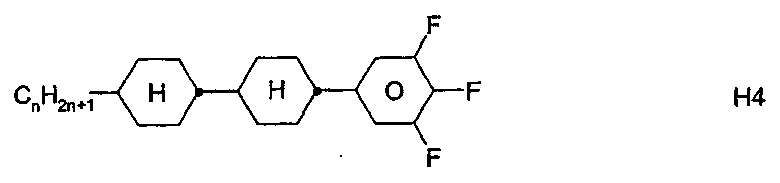 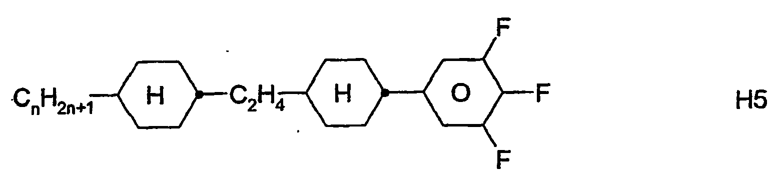 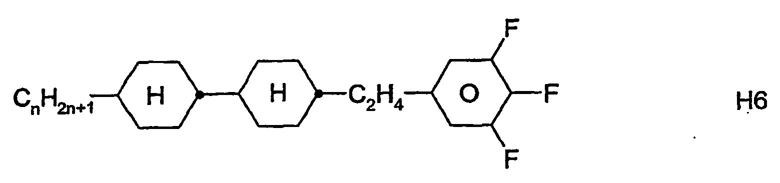 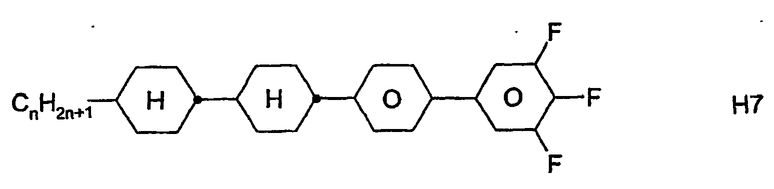 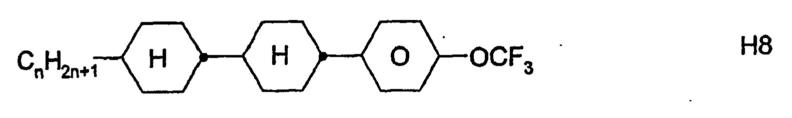 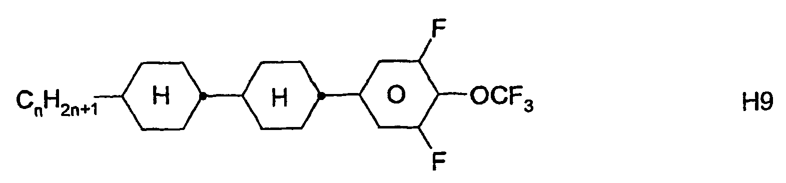 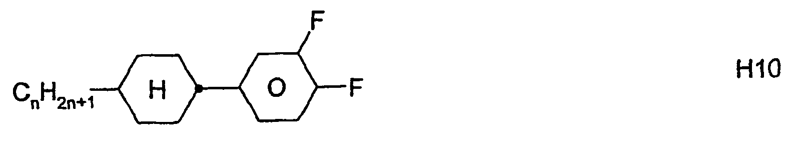 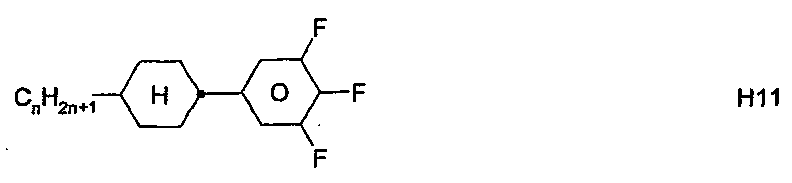 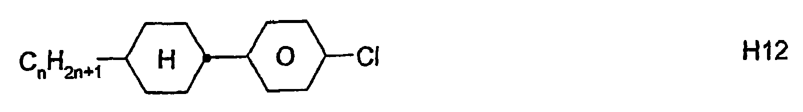 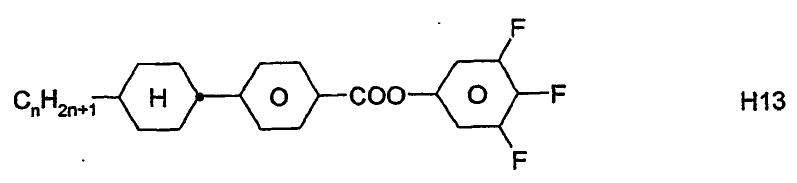 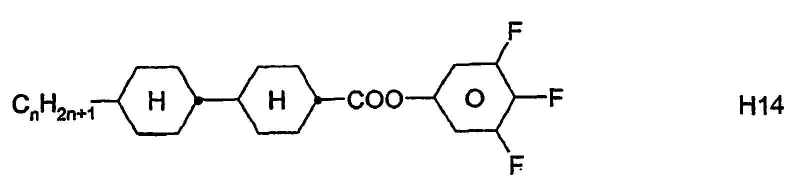 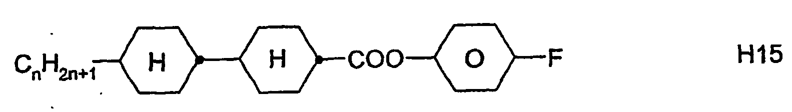 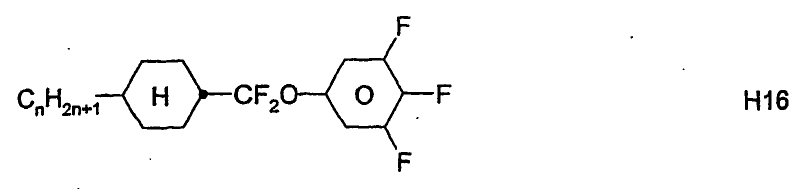 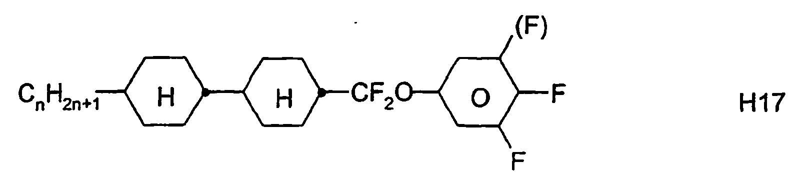 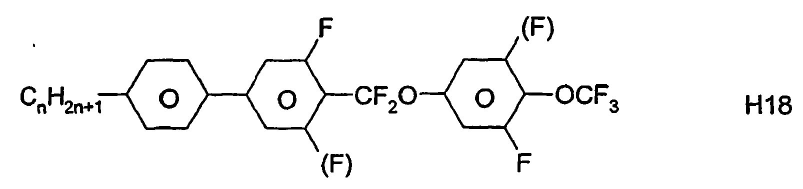 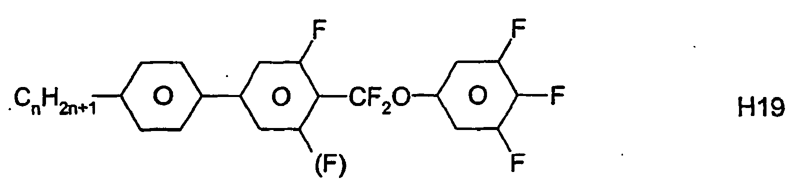
- Das Medium enthält zusätzlich eine oder mehrere Verbindungen ausgewählt aus der Gruppe bestehend aus den allgemeinen Formeln X bis XV: 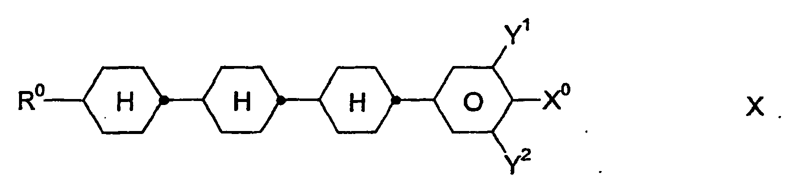 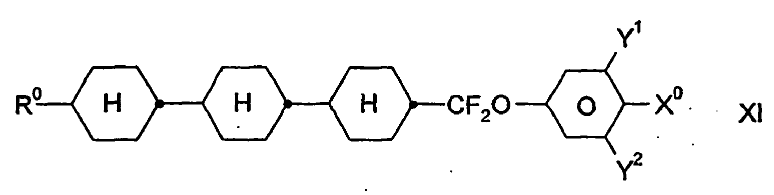 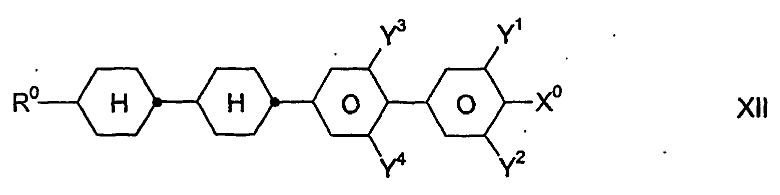 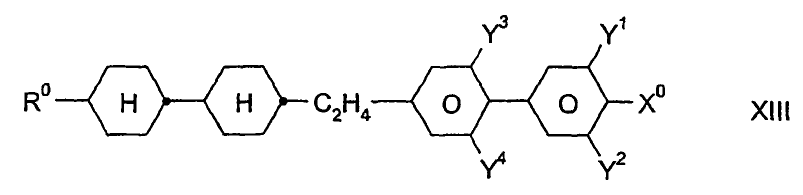 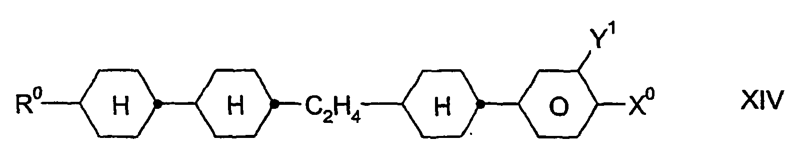 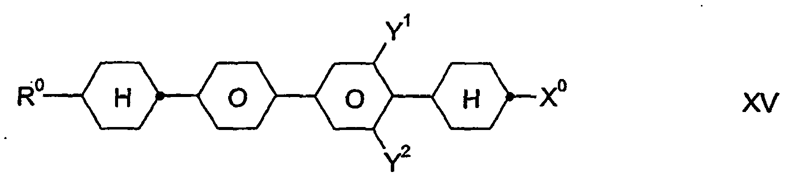 worin R⁰, X⁰, Y¹, Y², Y³ und Y⁴ jeweils unabhängig voneinander eine der in Anspruch 8 angegebene Bedeutung haben. Vorzugsweise bedeutet X⁰ F, Cl, CF₃, OCF₃, OCHF₂. R⁰ bedeutet vorzugsweise Alkyl, Oxaalkyl, Fluoralkyl, Alkenyl oder Alkenyloxy.
- Der Anteil an Verbindungen der Formeln I bis IX zusammen beträgt im Gesamtgemisch mindestens 50 Gew.-%.
- Der Anteil an Verbindungen der Formel I beträgt im Gesamtgemisch 5 bis 50 Gew.-%.
- Der Anteil an Verbindungen der Formel II beträgt im Gesamtgemisch 3-40 Gew.-%.
- Der Anteil an Verbindungen der Formeln II bis IX im Gesamtgemisch beträgt 30 bis 70 Gew.-%. 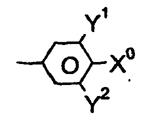 ist vorzugsweise 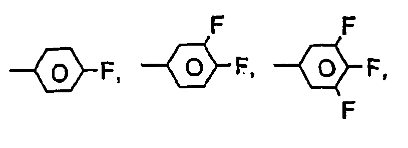 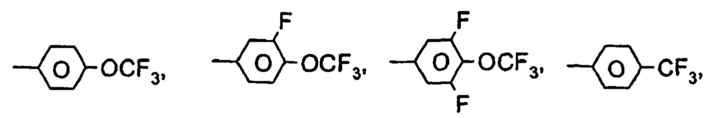 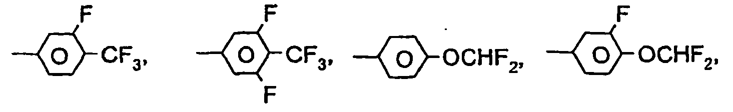 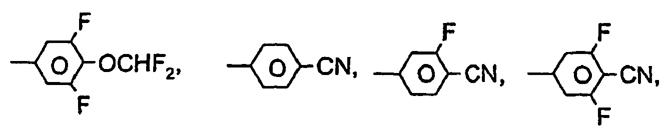 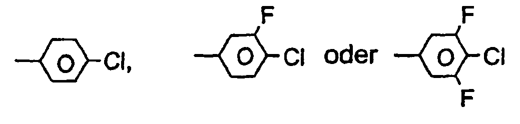
- Das Medium enthält Verbindungen der Formeln II, III, IV, V, VI, VII, VIII und/oder IX.
- R⁰ ist geradkettiges Alkyl oder Alkenyl mit 2 bis 7 C-Atomen.
- Das Medium besteht im wesentlichen aus Verbindungen der Formeln I bis XV.
- Das Medium enthält 5-40 Gew.-% an Verbindungen der Formeln H17 und/oder H18.
- Das Medium enthält weitere Verbindungen, vorzugsweise ausgewählt aus der folgenden Gruppe bestehend aus den allgemeinen Formeln XVI bis XX: 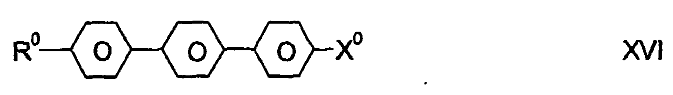 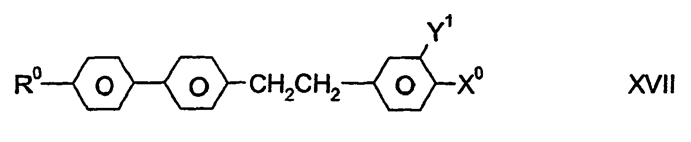 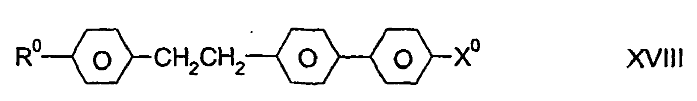 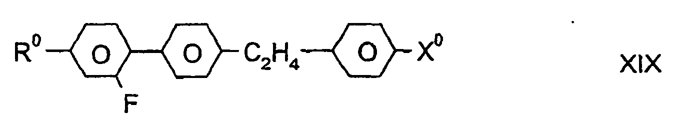 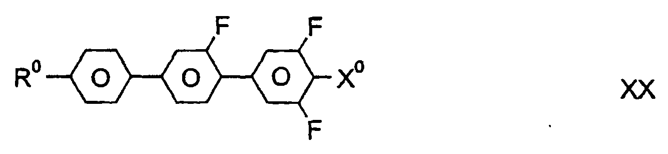
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält weitere Verbindungen, vorzugsweise ausgewählt aus der folgenden Gruppe bestehend aus den Formeln RI bis RIX, 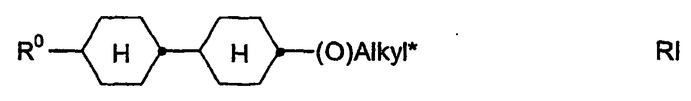 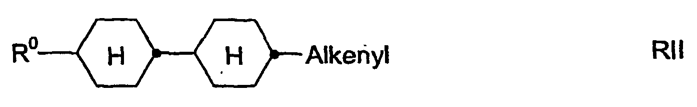 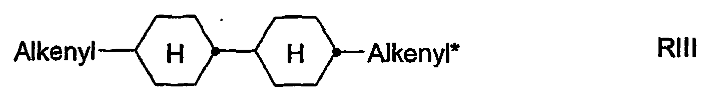 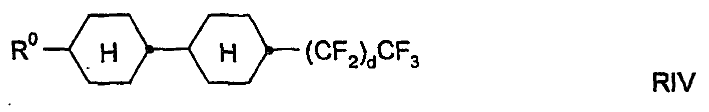 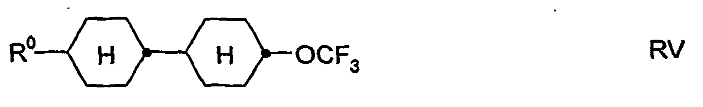 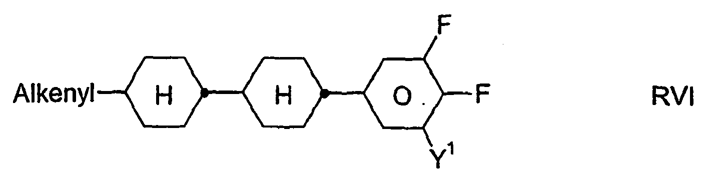 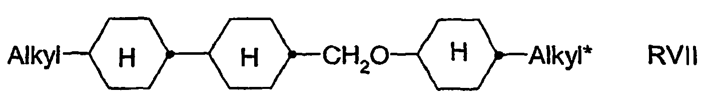 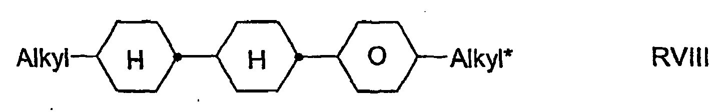 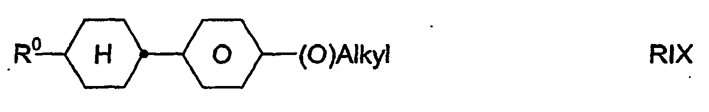 worin
   - R⁰: n-Alkyl, Oxaalkyl, Fluoralkyl, Alkenyloxy oder Alkenyl mit jeweils bis zu 9 C-Atomen,
   - d: 0, 1 oder 2,
   - Y¹: H oder F,
   - Alkyl oder Alkyl*: jeweils unabhängig voneinander ein geradkettiger oder verzweigter Alkylrest mit 1-9 C-Atomen,
   - Alkenyl oder Alkenyl*: jeweils unabhängig voneinander einen geradkettigen oder verzweigten Alkenylrest mit bis zu 9 C-Atomen
   bedeuten.
- Das Medium enthält vorzugsweise eine oder mehrere Verbindungen der Formeln 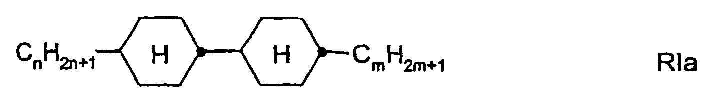 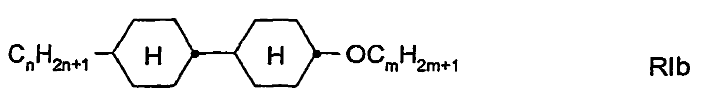 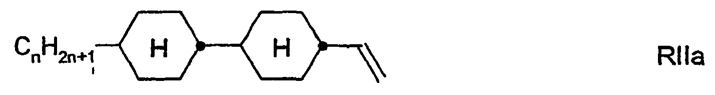 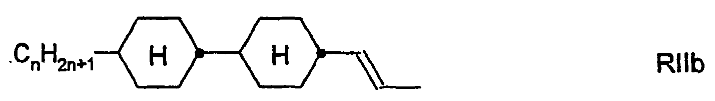 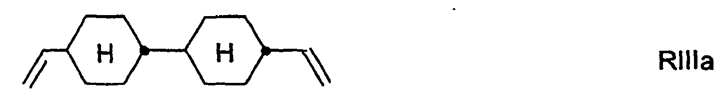 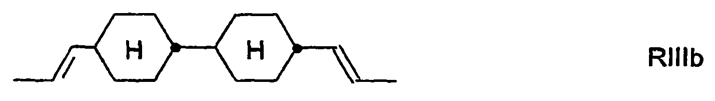 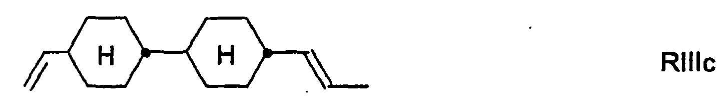 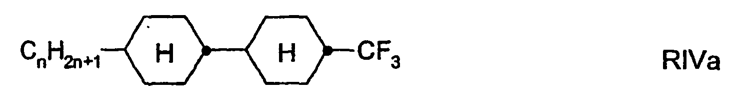 worin n und m jeweils eine ganze Zahl von 1-9 bedeuten.
- Das Gewichtsverhältnis I: (II + III + IV + V + VI + VII + VIII + IX) ist vorzugsweise 1 : 10 bis 10 : 1.
- Das Medium besteht im wesentlichen aus Verbindungen ausgewählt aus der Gruppe bestehend aus den allgemeinen Formeln I bis XV.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formel II, III, IV, V, VI, VII, VIII oder IX zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Die Verbindungen der Formeln I bis IX sind farblos, stabil und untereinander und mit anderen Flüssigkristallmaterialien gut mischbar.

Der Ausdruck "Alkyl" oder "Alkyl*" umfasst geradkettige und verzweigte Alkylgruppen mit 1-9 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" oder "Alkenyl*" umfasst geradkettige und verzweigte Alkenylgruppen mit bis zu 9 Kohlenstoffatomen, insbesondere die geradkettigen Gruppen. Besonders bevorzugte Alkenylgruppen sind C₂- C₇- 1E-Alkenyl, C₄-C₇-3E-Alkenyl, C₅-C₇-4-Alkenyl, C₆-C₇-5-Alkenyl und C₇-6-Alkenyl, insbesondere C₂C₇-1 E-Alkenyl, C₄-C₇-3E-Alkenyl und C₅-C₇-4-Alkenyl. Beispiele bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ und/oder Z² führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VII + VII + VIII + IX hängt weitgehend von den gewünschten Eigenschaften, von der Wahl der Komponenten der Formeln I, II, III, IV, V, VI, VII, VIII und/oder IX und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XV ist.

In einer besonders bevorzugten Ausführungsform enthalten die erfindungsgemäßen Medien Verbindungen der Formel II bis IX (vorzugsweise II und/oder III), worin X⁰ OCF₃, OCHF₂, F, OCH=CF₂, OCF=CF₂, OCF₂CHFCF₃, oder OCF₂-CF₂H bedeutet. Eine günstige synergistische Wirkung mit den Verbindungen der Formel I führt zu besonders vorteilhaften Eigenschaften.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, Antioxidation, enthalten. Beispielsweise können 0-15 % pleochroitische Farbstoffe oder chirale Dotierstoffe zugesetzt werden.

C bedeutet eine kristalline, S eine smektische, S_{C} eine smektische C, S_{B} eine smektische B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2fachen Wert von V₁₀. Δn bezeichnet die optische Anisotropie und nₒ den Brechungsindex. Δε bezeichnet die dielektrische Anisotropie (Δε = ε_{||}- ε_{⊥}, wobei εₗₗ die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. n und m bedeuten jeweils unabhängig voneinander 1, 2, 3, 4, 5, 6, 7, 8, 9, 10, 11, 12, 13, 14 oder 15. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H. | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | H | F |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Bevorzugte Mischungskomponenten finden sich in den Tabellen A und B.

**Tabelle A:**

| | |
|---|---|
| 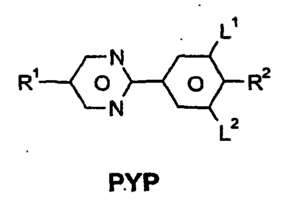 | 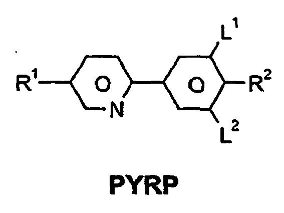 |
| 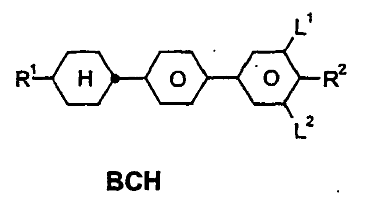 | 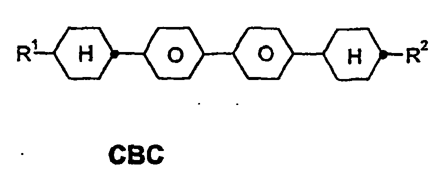 |
| 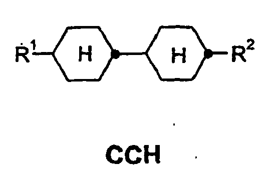 | 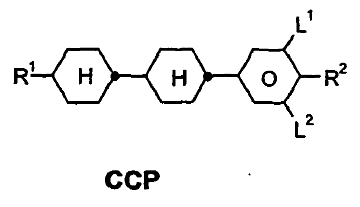 |
| 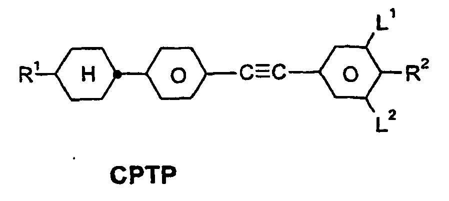 | |
| 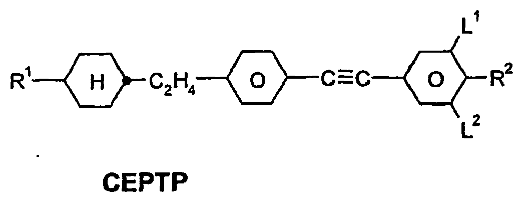 | |
| 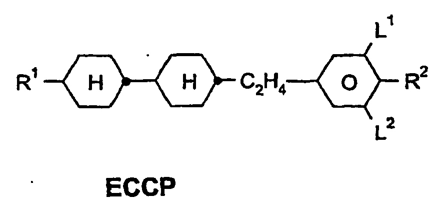 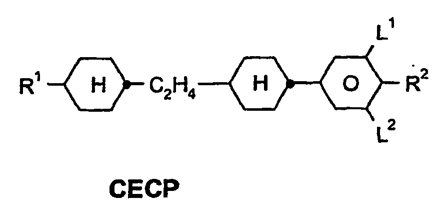 | |
| 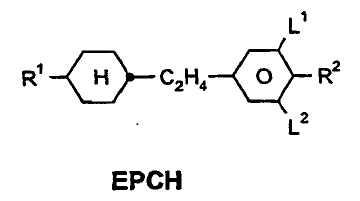 | 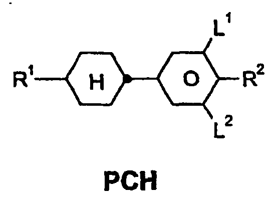 |
| 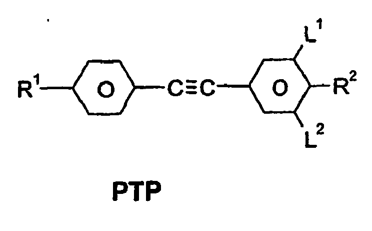 | 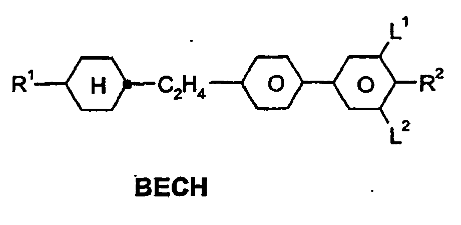 |
| 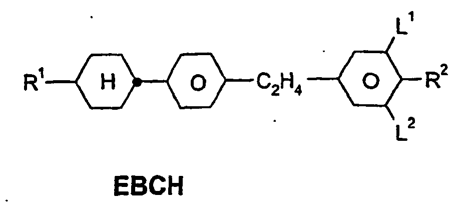 | 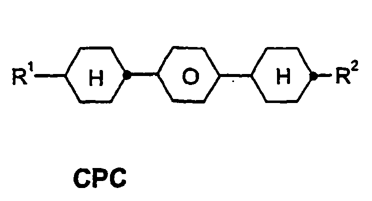 |
| 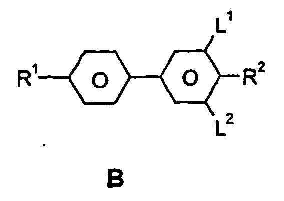 | 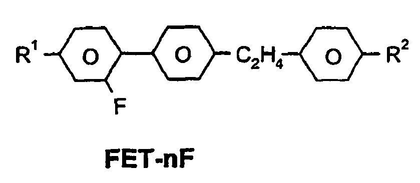 |
| 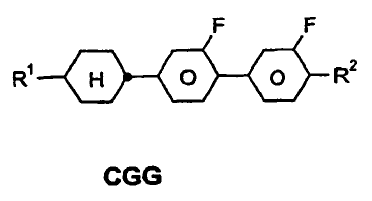 | 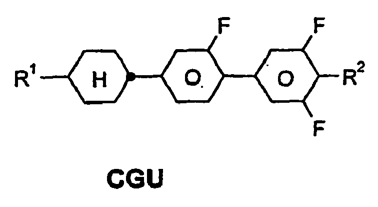 |
| 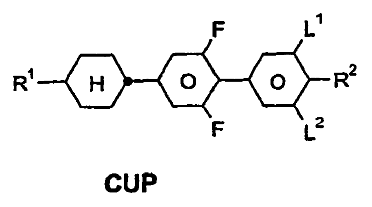 | |
| 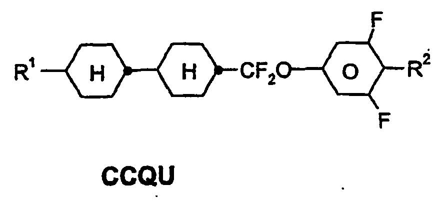 | |
| 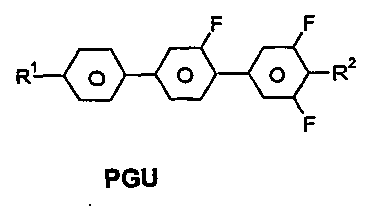 | |
| 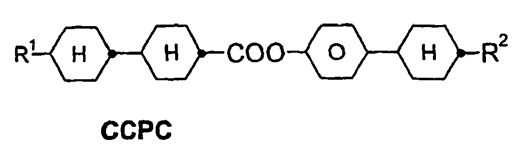 | |

**Tabelle B:**

| | |
|---|---|
| 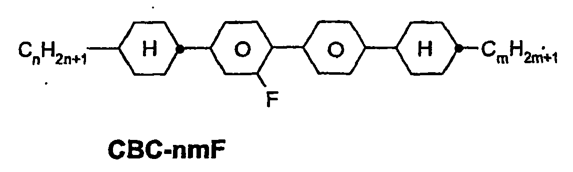 | |
| 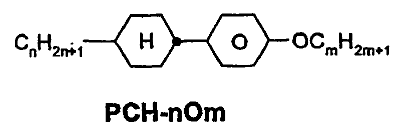 | |
| 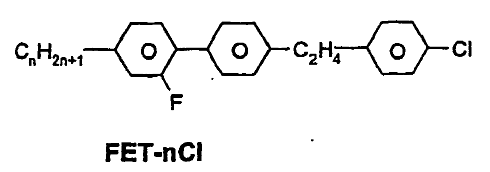 | |
| 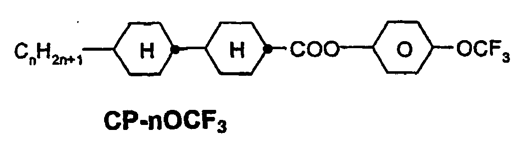 | |
| 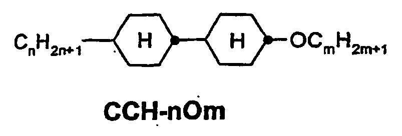 | |
| 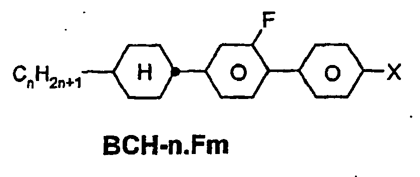 | |
| 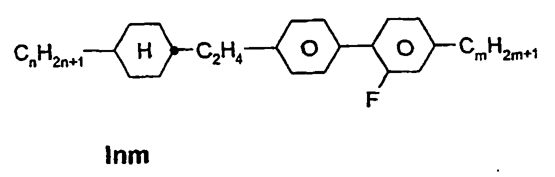 | |
| 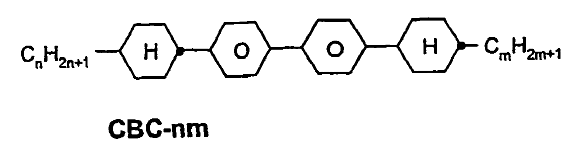 | |
| 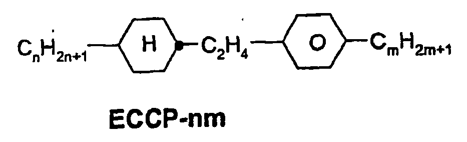 | |
| 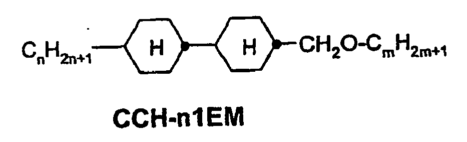 | |
| 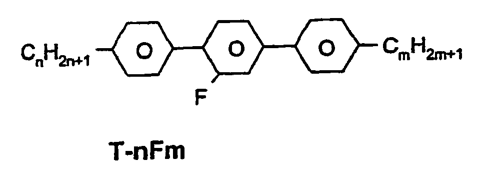 | |
| 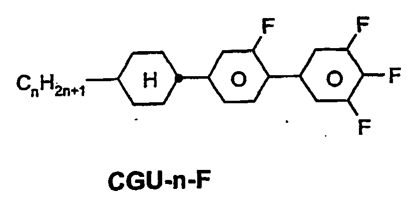 | 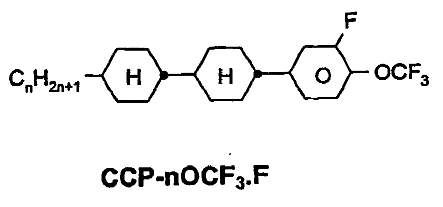 |
| 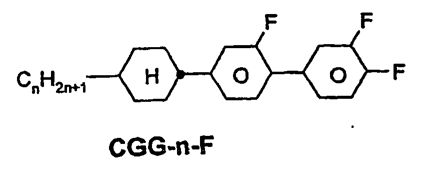 | |
| 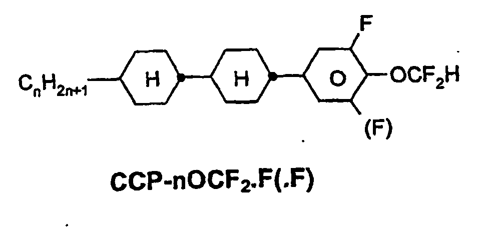 | |
| 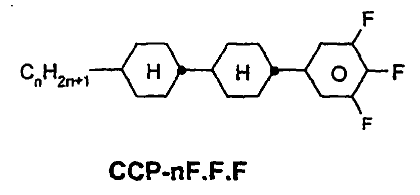 | |
| 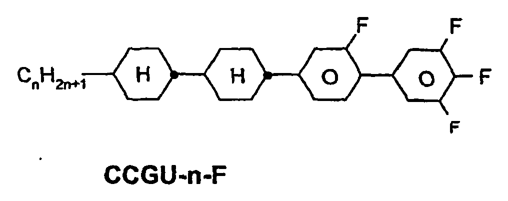 | |
| 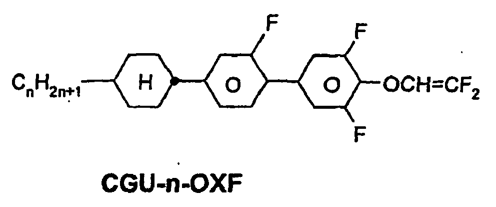 | |
| 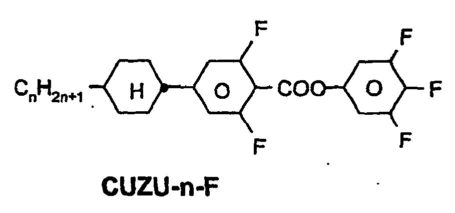 | |
| 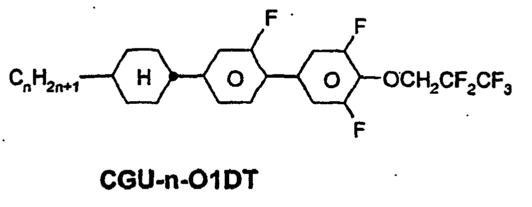 | |
| 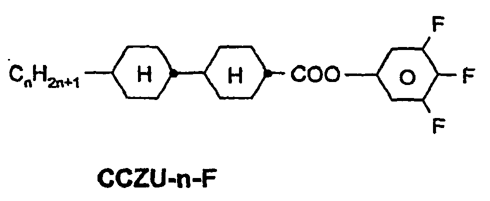 | |
| 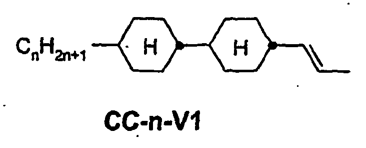 | 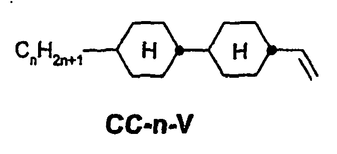 |
| 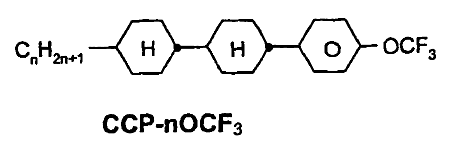 | |
| 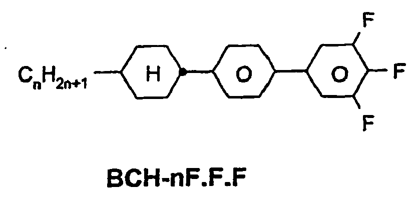 | |
| 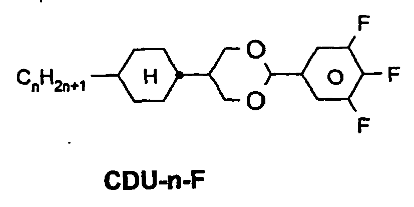 | |
| 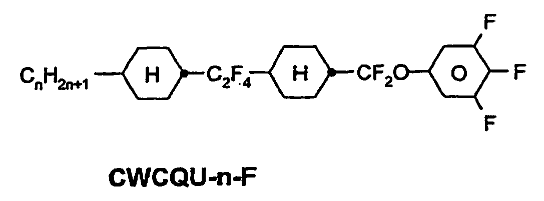 | |
| 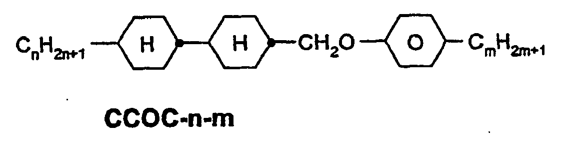 | |
| 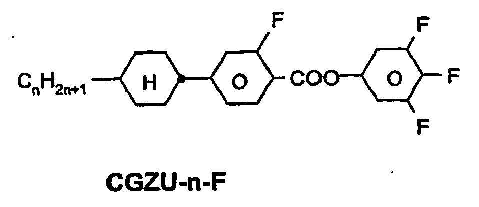 | |
| 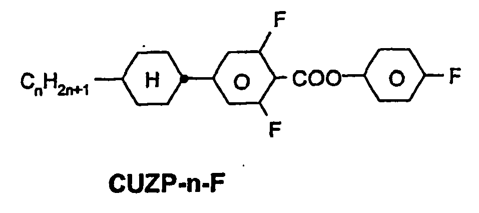 | |
| 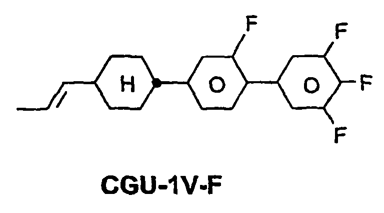 | 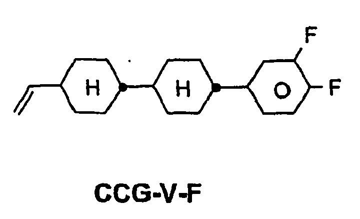 |
| 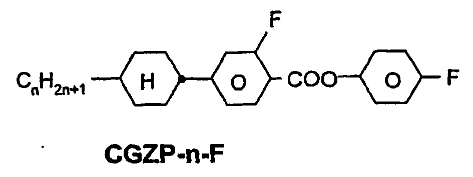 | |
| 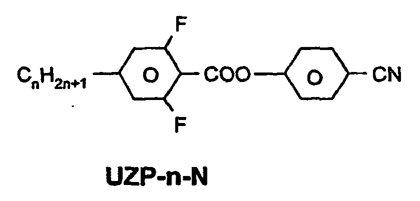 | |
| 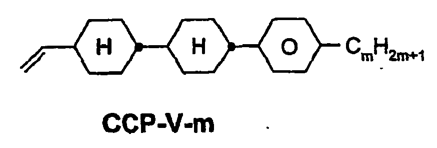 | |
| 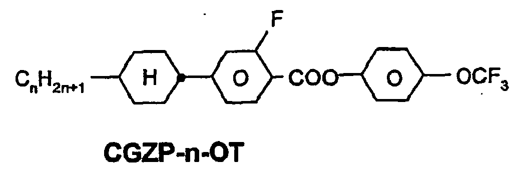 | |
| 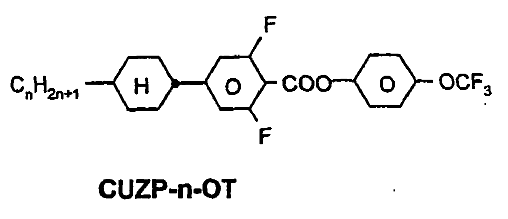 | |
| 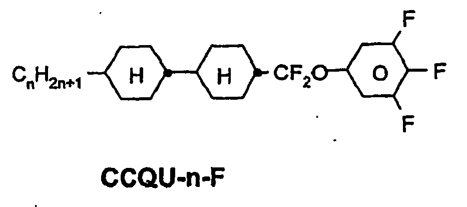 | |
| 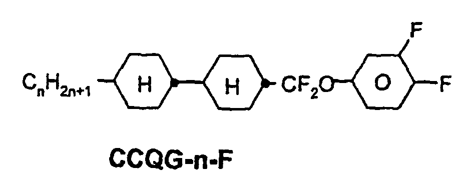 | |
| 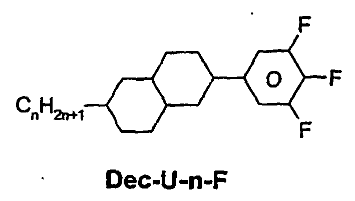 | 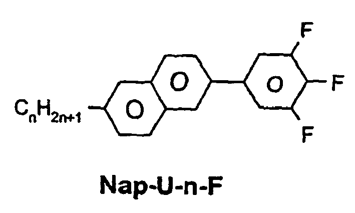 |
| 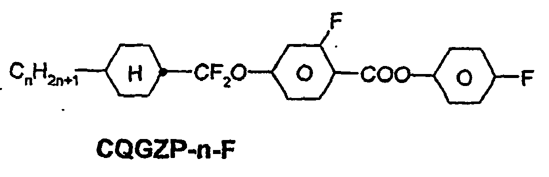 | |
| 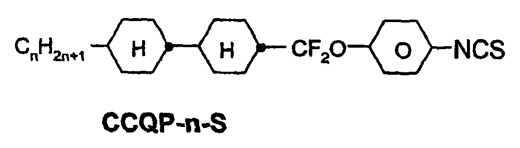 | |
| 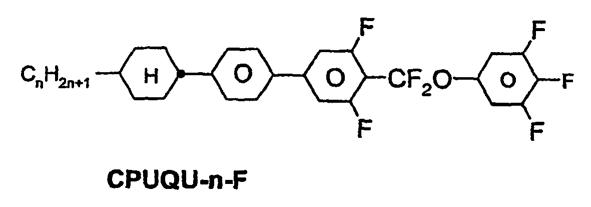 | |
| 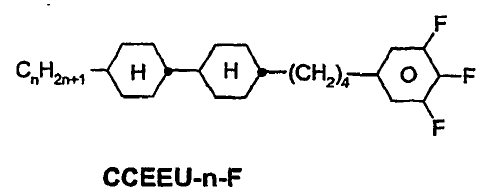 | |
| 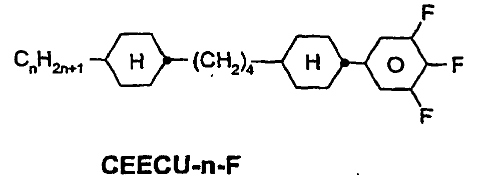 | |
| 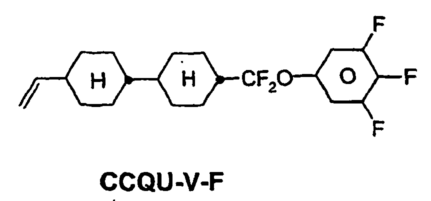 | |
| 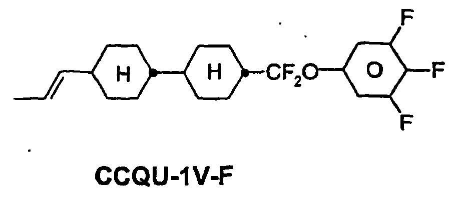 | |
| 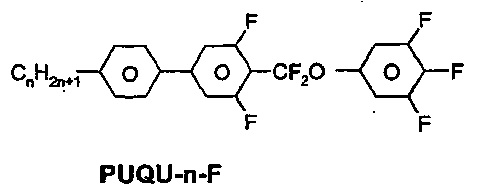 | |
| 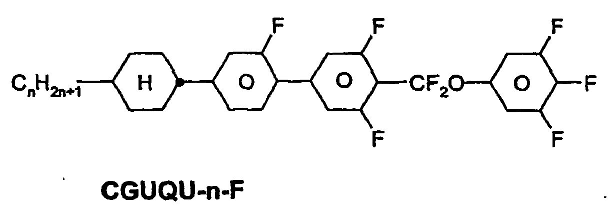 | |
| 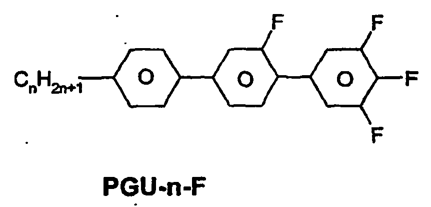 | |
| 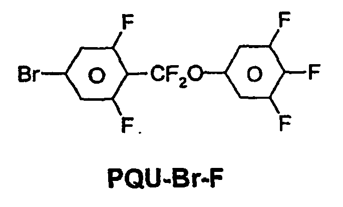 | |
| 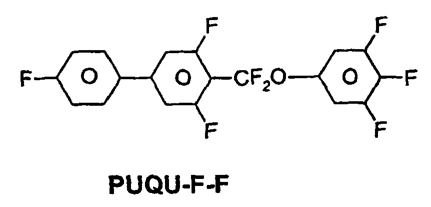 | |
| 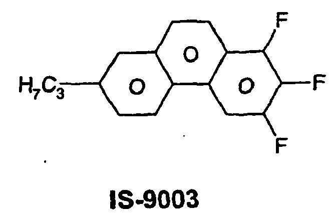 | |
| 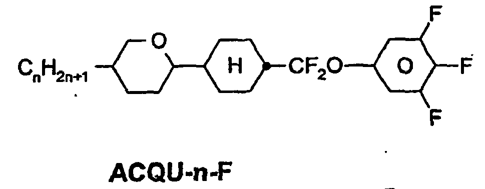 | |
| 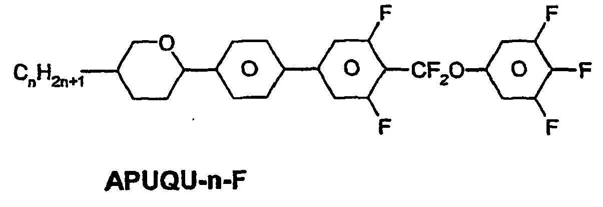 | |
| 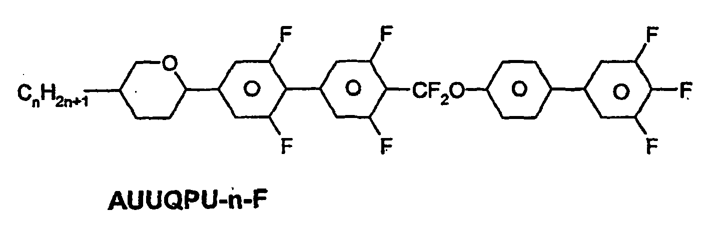 | |
| 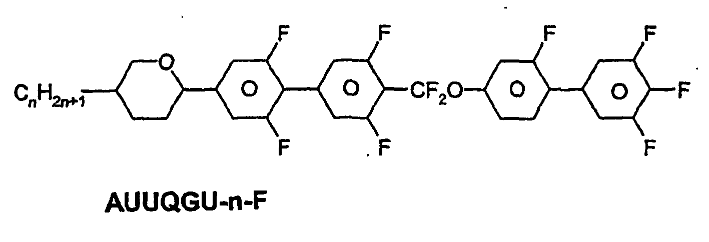 | |
| 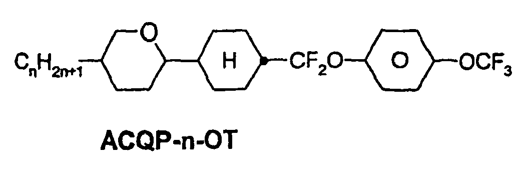 | |
| 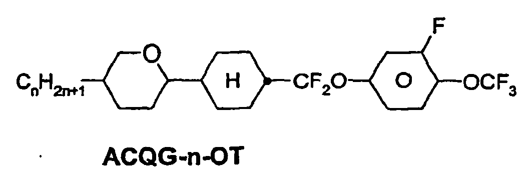 | |
| 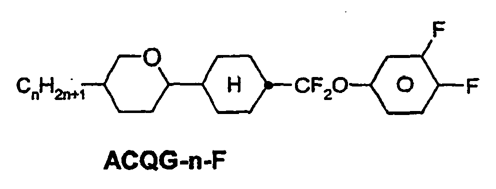 | |
| 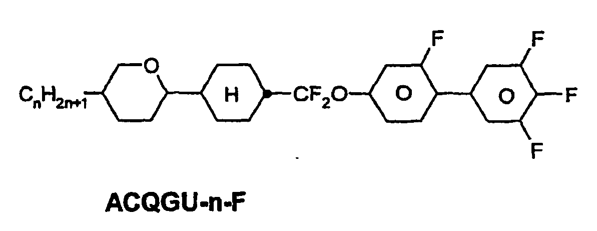 | |
| 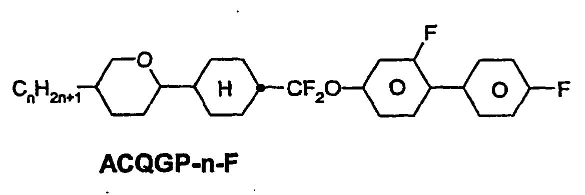 | |
| 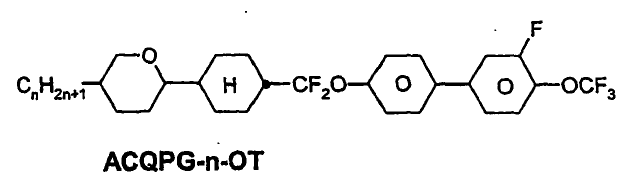 | |
| 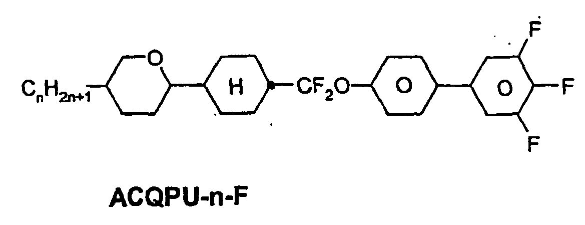 | |
| 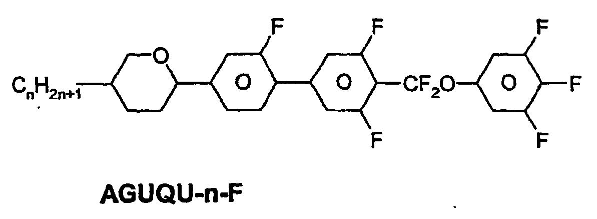 | |
| 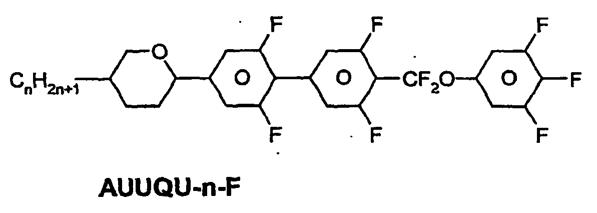 | |
| 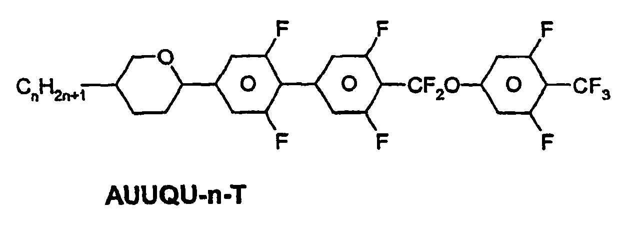 | |
| 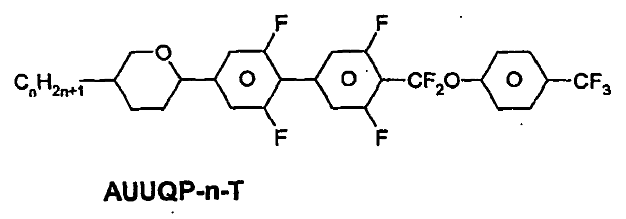 | |
| 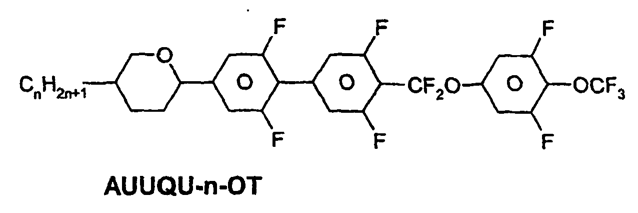 | |
| 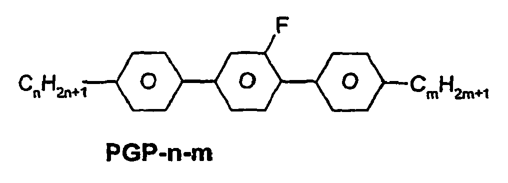 | |

**Tabelle C:**

| | |
|---|---|
| In der Tabelle C werden mögliche Dotierstoffe angegeben, die in der Regel den erfindungsgemäßen Mischungen in Mengen von 0,1 bis 10 Gew.% zugesetzt werden. | |
| 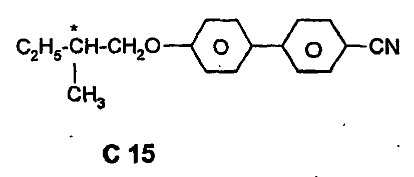 | |
| 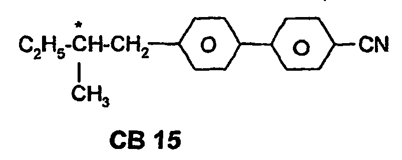 | |
| 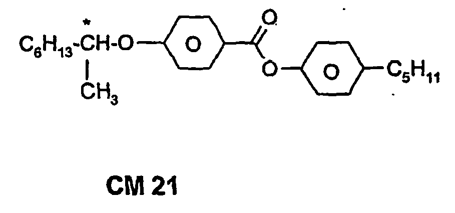 | |
| 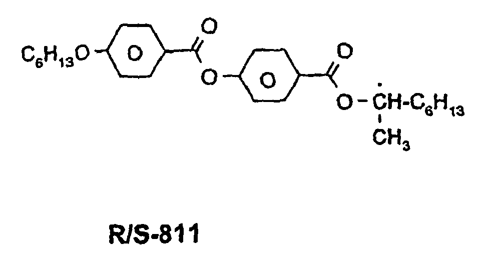 | |
| 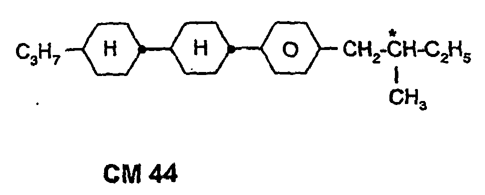 | |
| 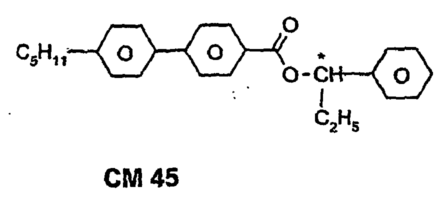 | |
| 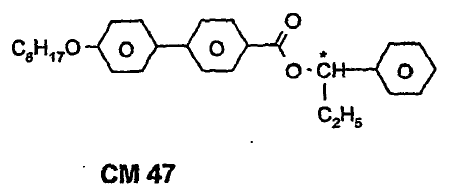 | |
| 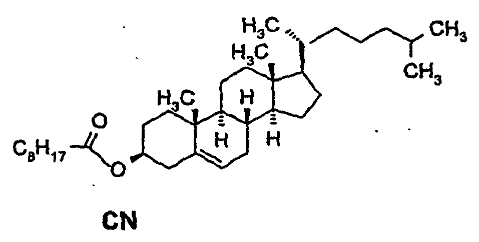 | |
| 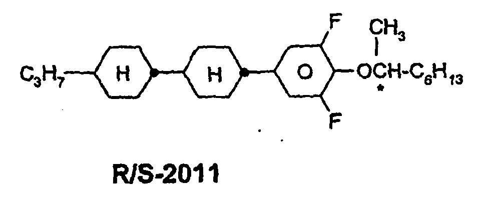 | |
| 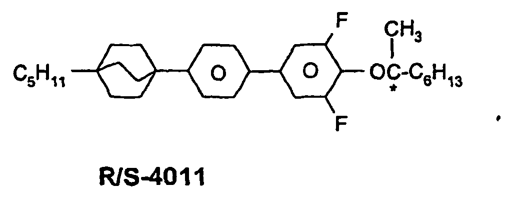 | |
| 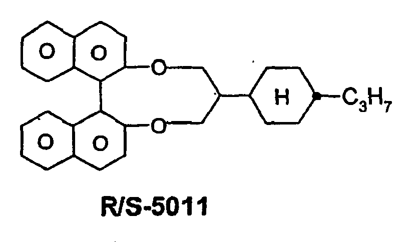 | |

**Tabelle D**

| | |
|---|---|
| Stabilisatoren, die beispielsweise den erfindungsgemäßen Mischungen zugesetzt werden können, werden nachfolgend genannt. | |
| 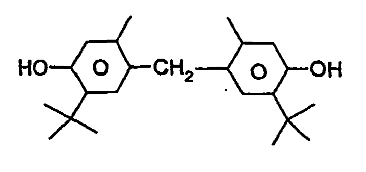 | 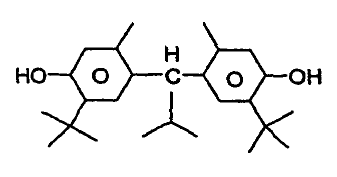 |
| 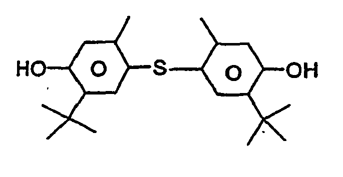 | 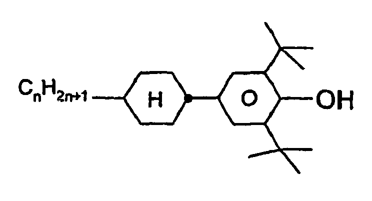 |
| 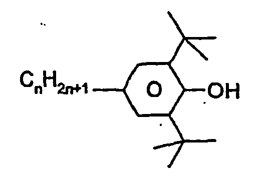 | 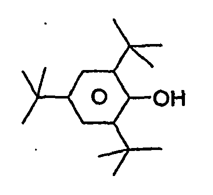 |
| 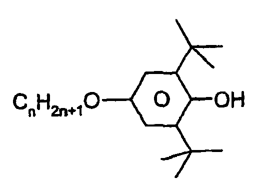 | 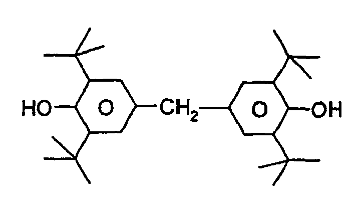 |
| 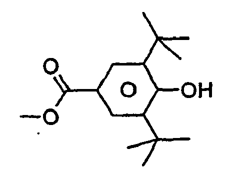 | 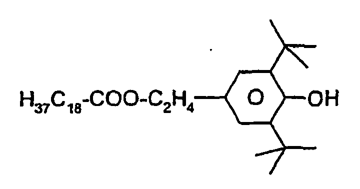 |
| 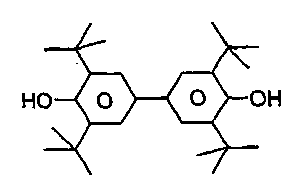 | 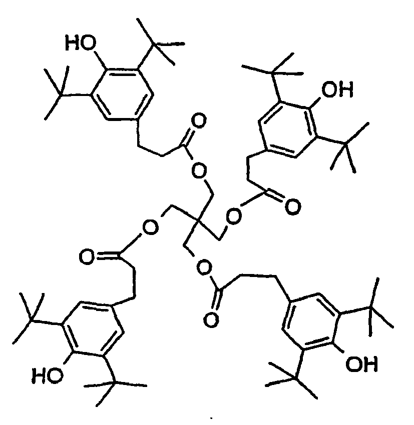 |
| 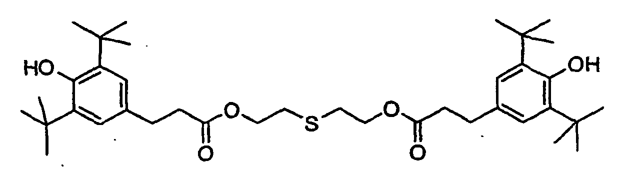 | |
| 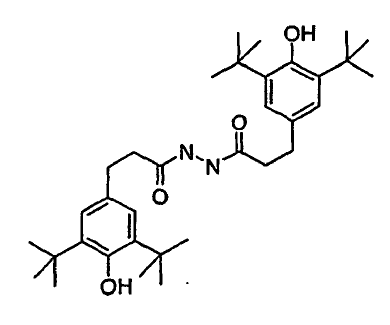 | 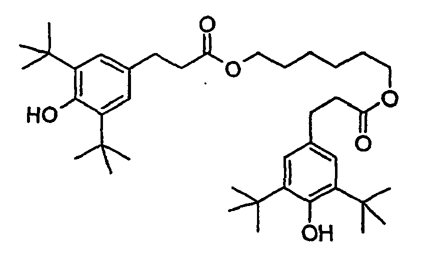 |
| 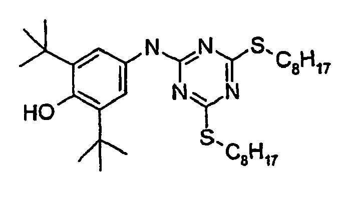 | 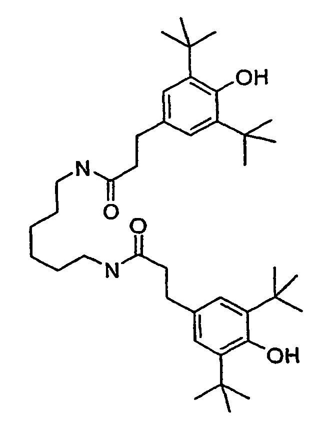 |
| 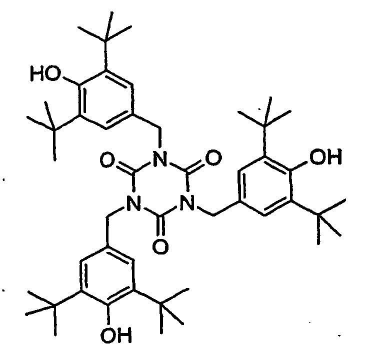 | 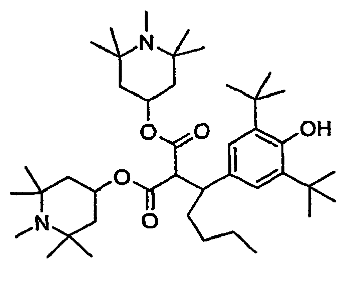 |
| 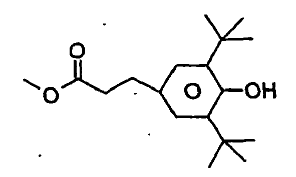 | 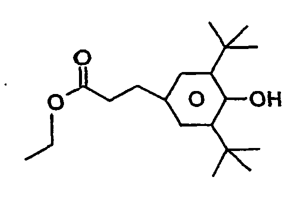 |
| 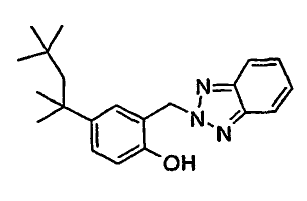 | 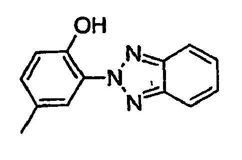 |
| 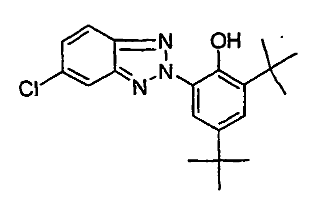 | 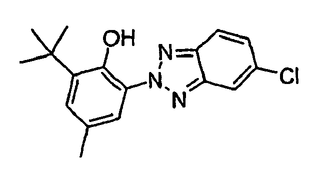 |
| 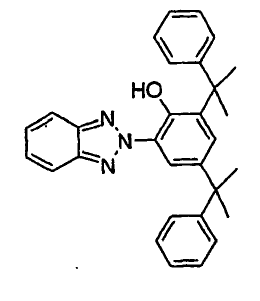 | 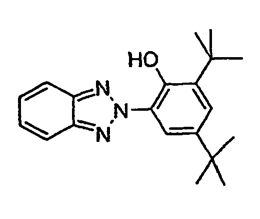 |
| 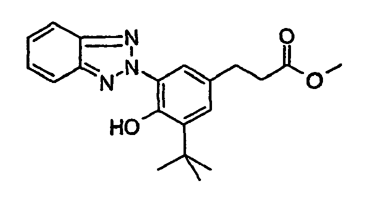 | 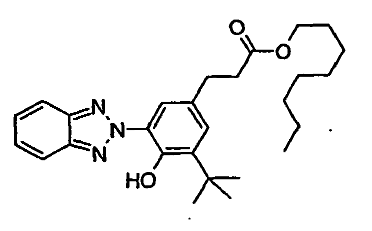 |
| 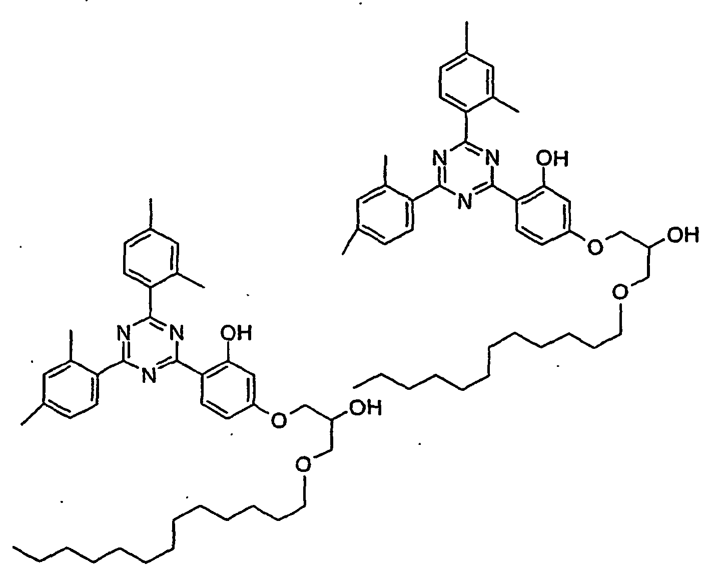 | |
| 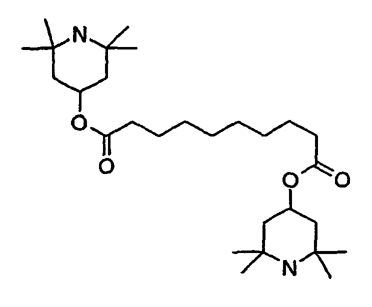 | 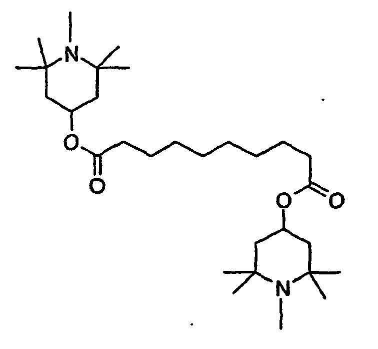 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie 1kHz, 20 °C), die Fließviskosität ν₂₀ (mm²/sec) wurde bei 20 °C bestimmt. Die Rotationsviskosität γ₁ (mPa·s) wurde ebenfalls bei 20 °C bestimmt.

"Übliche Aufarbeitung" bedeutet: man gibt gegebenenfalls Wasser hinzu, extrahiert mit Dichlormethan, Diethylether, Methyl-tert.Butylether oder Toluol, trennt ab, trocknet die organische Phase, dampft ein und reinigt das Produkt durch Destillation unter reduziertem Druck oder Kristallisation und/oder Chromatographie. Folgende Abkürzungen werden verwendet:

| | |
|---|---|
| n-BuLi | 1,6 molare Lösung von n-Butyllithium in n-Hexan |
| DMAP | 4-(Dimethylamino)-pyridin |
| THF | Tetrahydrofuran |
| DCC | N,N'-Dicyclohexylcarbodiimid |
| LDA | Lithiumdimethylamid |
| RT | Raumtemperatur |

### Beispiel 1

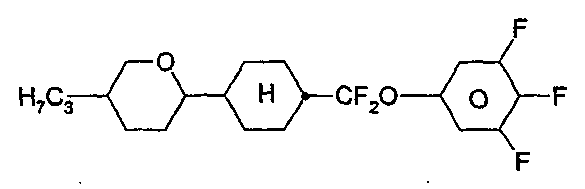

### Schritt 1.1

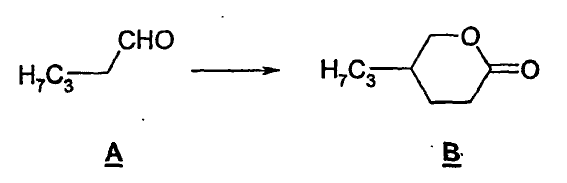

Die Herstellung von **B** erfolgt analog zu Lit. a) R. Baker, A. L. Boyes, C. J. Swain, J. Chem. Soc. Perkin Trans. 1, 1990, 1415-1421; b) H. Hagiwara, T. Okabe, H. Ono, V. P. Kamat. T. Hoshi, T. Suzuku, M. Ando, J Chem. Soc. Perkin Trans. 1, 2002, 895-900.

### Schritt 1.2

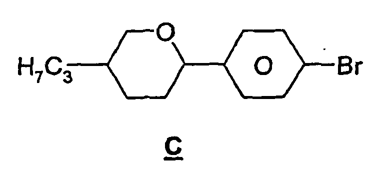

Eine Lösung von 207 mmol 1,4-Dibrombenzol in 250 ml Diethylether wird bei -50 °C tropfenweise mit 207 mmol BuLi (15 % in Hexan) versetzt. Dann tropft man eine Lösung von 170 mmol **B** in 50 ml Diethylether bei derselben Temperatur zu, rührt 30 min nach, lässt auf 0 °C kommen und arbeitet wie üblich wässrig auf. Das Rohprodukt (51 g) wird in 400 ml CH₂Cl₂ gelöst und bei -75 °C mit 400 mmol Triethylsilan versetzt. Man tropft 400 mmol Bortrifluorid-Etherat zu, wobei die Temperatur nicht über -70 °C steigen darf. Danach lässt man auf -10 °C kommen, hydrolysiert mit ges. NaHCO₃-Lösung und arbeitet wie üblich wässrig auf. Das Rohprodukt enthält die trans/cis-Isomere in einem Verhältnis 9:1. Man kristallisiert aus Pentan bei -20 °C µm.

### Schritt 1.3

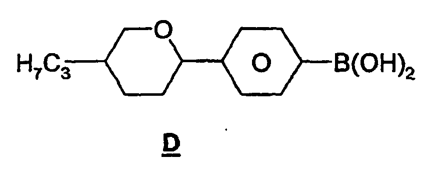

73 mmol **C** werden in 200 ml THF gelöst und auf -70 °C gekühlt. Man tropft zuerst 73 mmol BuLi (15 % in Hexan) zu, gefolgt von 73 mmol Trimethylborat in 50 ml THF. Man lässt auf -20 °C kommen, stellt durch Zugabe von 2N HCl auf pH = 2 ein und arbeitet wässrig auf: Das Rohprodukt wird mit heißem Heptan digeriert und bei 0 °C kristallisiert.

### Schritt 1.4

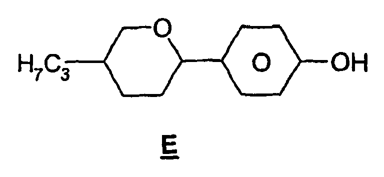

Eine Mischung von 60 mmol **D**, 300 ml Toluol, 120 mmol NaOH, 50 ml Wasser und 30 ml 30 % H₂O₂ wird 2 h bei 45 °C gerührt. Die Mischung wird mit 10 % HCl auf pH = 2 eingestellt und wässrig aufgearbeitet. Das Rohprodukt wird aus Heptan umkristallisiert.

### Schritt 1.5

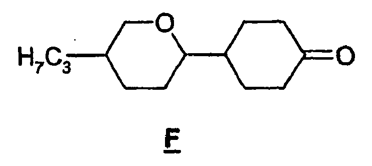

22 mmol **E** werden in 100 ml Xylol in Gegenwart von 1,5 g Wasser feuchtem 5 % Pd-C-Katalysator bei 5 bar und 130 °C für 27,5 h hydriert. Die Aufarbeitung erfolgt wie üblich. Man erhält ein farbloses Öl.

### Schritt 1.6

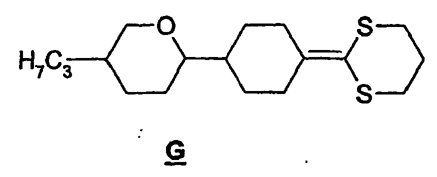

Eine Lösung von 17 mmol 2-Trimethylsilyl-1,3-dithian in 75 ml THF wird bei -70 °C mit 17 mmol BuLi (15 % in Hexan) versetzt. Man lässt innerhalb von 4 h auf 0 °C kommen, kühlt dann wieder auf -70 °C und tropft 17 mmol **F** in 25 ml THF zu, man lässt auf Raumtemperatur kommen, rührt 18 h nach und arbeitet wie üblich wässrig auf. Das Rohprodukt wird aus Heptan kristallisiert. Man erhält farblose Kristalle.

### Schritt 1.7

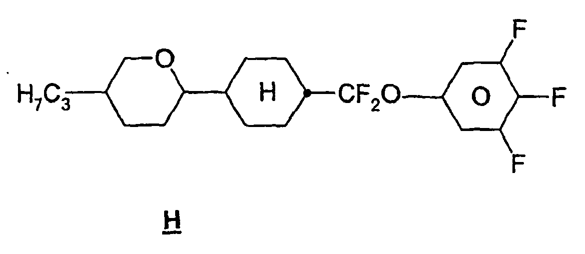

Eine Lösung von 6,12 mmol **G** in 50 ml CH₂Cl₂ wird bei -20 °C tropfenweise mit 6,27 mmol Trifluormethansulfonsäure versetzt. Man lässt für 30 min auf Raumtemperatur kommen und kühlt dann auf-70°C. Nun werden zuerst eine Lösung von 9,1 mmol 3,4,5-Trifluorphenol und 10,1 mmol Triethylamin in 20l CH₂Cl₂, 5 min später 31 mmol Triethylamin-Tris(hydrofluorid) zugegeben. Nach weiteren 5 min gibt man in kleinen Portionen eine Suspension von 31,5 mmol DBH (1,3-Dibrom-5,5-dimethylhydanthoin) zu und rührt 1 h bei -70 °C nach. Man lässt auf -10 °C kommen und gießt die Reaktionsmischung in 400 ml eiskalte NaOH. Man arbeitet wie üblich wässrig auf und reinigt das Rohprodukt durch Chromatographie an Kieselgel (Heptan/Toluol 3:2) und Kristallisation aus Pentan bei -70 °C. Man erhält farblose Kristalle: K 35 N 66,3 I; Δn = 0,0570; Δε = 13,4

Analog werden die folgenden Verbindungen der Formel 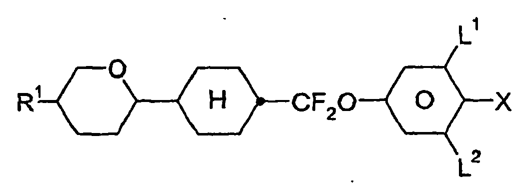 hergestellt:

| R¹ | X | L¹ | L² | |
|---|---|---|---|---|
| H | F | H | H | |
| CH₃ | F | H | H | |
| C₂H₅ | F | H | H | |
| n-C₄H₉ | F | H | H | |
| n-C₅H₁₁ | F | H | H | |
| n-C₆H₁₃ | F | H | H | |
| H | F | F | H | |
| CH₃ | F | F | H | |
| C₂H₅ | F | F | H | |
| n-C₃H₇ | F | F | H | K 41 S_{B} 51 N 95,9 I; |
| | | | | Δε = 9,7; Δn = 0,0688 |
| n-C₄H₉ | F | F | H | K 31 S_{B} 64 N 97,1 I; |
| | | | | Δε = 9,3; Δn = 0,0621 |
| n-C₅H₁₁ | F | F | H | |
| n-C₆H₁₃ | F | F | H | |
| H | F | F | F | |
| CH₃ | F | F | F | K 54 I, |
| | | | | Δε = 14,8; △n = 0,0490 |
| C₂H₅ | F | F | F | K 48 N (34,7) I; |
| | | | | △ε = 14,1; △n = 0,054.0 |
| n-C₃H₇ | F | F | F | |
| n-C₄H₉ | F | F | F | K 43 N 66,1 I, |
| | | | | △ε = 13,3; △n = 0,0590 |
| n-C₅H₁₁ | F | F | F | K 39 N 75,3 I; |
| | | | | Δε =11,8; △n = 0,0568 |
| n-C₆H₁₃ | F | F | F | |
| H | Cl | H | H | |
| CH₃ | Cl | H | H | |
| C₂H₅ | Cl | H | H | |
| n-C₃H₇ | Cl | H | H | |
| n-C₄H₉ | Cl | H | H | |
| n-C₅H₁₁ | Cl | H | H | |
| n-C₆H₁₃ | Cl | H | H | |
| H | Cl | F | H | |
| CH₃ | Cl | F | H | |
| C₂H₅ | Cl | F | H | |
| n-C₃H₇ | Cl | F | H | |
| n-C₄H₉ | Cl | F | H | |
| n-C₅H₁₁ | Cl | F | H | |
| n-C₆H₁₃ | Cl | F | H | |
| H | Cl | F | F | |
| CH₃ | Cl | F | F | |
| C₂H₅ | Cl | F | F | |
| n-C₃H₇ | Cl | F | F | |
| n-C₄H₉ | Cl | F | F | |
| n-C₅H₁₁ | Cl | F | F | |
| n-C₆H₁₃ | Cl | F | F | |
| H | OCF₃ | H | H | |
| CH₃ | OCF₃ | H | H | |
| C₂H₅ | OCF₃ | H | H | |
| n-C₃H₇ | OCF₃ | H | H | K -41 S_{B} 123 N 129,3 I; |
| | | | | Δε = 9,1; Δn = 0,0780 |
| n-C₄H₉ | OCF₃ | H | H | KC -54 S_{B} 129 I; |
| | | | | Δε = 9,1; An = 0,0689 |
| n-C₅H₁₁ | OCF₃ | H | H | |
| n-C₆H₁₃ | OCF₃ | H | H | |
| H | OCF₃ | F | H | |
| CH₃ | OCF₃ | F | H | |
| C₂H₅ | OCF₃ | F | H | |
| n-C₃H₇ | OCF₃ | F | H | S_{B} 74 N 105,8 I; |
| | | | | Δε = 11,7; Δn = 0,0701 |
| n-C₄H₉ | OCF₃ | F | H | S_{B} 81 N 105,8 I; |
| | | | | Δε =11,5; Δn = 0,0623 |
| n-C₅H₁₁ | OCF₃ | F | H | |
| n-C₆H₁₃ | OCF₃ | F | H | |
| H | OCF₃ | F | F | |
| CH₃ | OCF₃ | F | F | |
| C₂H₅ | OCF₃ | F | F | |
| n-C₃H₇ | OCF₃ | F | F | |
| n-C₄H₉ | OCF₃ | F | F | |
| n-C₅H₁₁ | OCF₃ | F | F | |
| n-C₆H₁₃ | OCF₃ | F | F | |
| H | OCHF₂ | H | H | |
| CH₃ | OCHF₂ | H | H | |
| C₂H₅ | OCHF₂ | H | H | |
| n-C₃H₇ | OCHF₂ | H | H | |
| n-C₄H₉ | OCHF₂ | H | H | |
| n-C₅H₁₁ | OCHF₂ | H | H | |
| n-C₆H₁₃ | OCHF₂ | H | H | |
| H | OCHF₂ | F | H | |
| CH₃ | OCHF₂ | F | H | |
| C₂H₅ | OCHF₂ | F | H | |
| n-C₃H₇ | OCHF₂ | F | H | |
| n-C₄H₉ | OCHF₂ | F | H | |
| n-C₅H₁₁ | OCHF₂ | F | H | |
| n-C₆H₁₃ | OCHF₂ | F | H | |
| H | OCHF₂ | F | F | |
| CH₃ | OCHF₂ | F | F | |
| C₂H₅ | OCHF₂ | F | F | |
| n-C₃H₇ | OCHF₂ | F | F | |
| n-C₄H₉ | OCHF₂ | F | F | |
| n-C₅H₁₁ | OCHF₂ | F | F | |
| n-C₆H₁₃ | OCHF₂ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₅H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄H₉ | OCHFCF₃ | F | H | |
| n-C₅H₁₁ | OCHFCF₃ | F | H | |
| n-C₆H₁₃ | OCHFCF₃ | F | H | |
| H | OCHFCF3 | F | F | |
| CH₃ | OCHFCF₃ | F | F | |
| C₂H₅ | OCHFCF₃ | F | F | |
| n-C₃H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₆H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄H₉ | OCHFCF₃ | F | H | |
| n-C₅H₁₁ | OCHFCF₃ | F | H | |
| n-C₆H₁₃ | OCHFCF₃ | F | H | |
| H | OCHFCF₃ | F | F | |
| CH₃ | OCHFCF₃ | F | F | |
| C₂H₅ | OCHFCF₃ | F | F | |
| n-C₃H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCF₂CHFCF₃ | H | H | |
| CH₃ | OCF₂CHFCF₃ | H | H | |
| C₂H₅ | OCF₂CHFCF₃ | H | H | |
| n-C₃H₇ | OCF₂CHFCF₃ | H | H | |
| n-C₄H₉ | OCF₂CHFCF₃ | H | H | |
| n-C₅H₁₁ | OCF₂CHFCF₃ | H | H | |
| n-C₆H₁₃ | OCF₂CHFCF₃ | H | H | |
| H | OCF₂CHFCF₃ | F | H | |
| CH₃ | OCF₂CHFCF₃ | F | H | |
| C₂H₅ | OCF₂CHFCF₃ | F | H | |
| n-C₃H₇ | OCF₂CHFCF₃ | F | H | |
| n-C₄H₉ | OCF₂CHFCF3 | F | H | |
| n-C₅H₁₁ | OCF₂CHFCF₃ | F | H | |
| n-C₆H₁₃ | OCF₂CHFCF₃ | F | H | |
| H | OCF₂CHFCF₃ | F | F | |
| CH₃ | OCF₂CHFCF₃ | F | F | |
| C₂H₅ | OCF₂CHFCF₃ | F | F | |
| n-C₃H₇ | OCF₂CHFCF₃ | F | F | |
| n-C₄H₉ | OCF₂CHFCF₃ | F | F | |
| n-C₅H₁₁ | OCF₂CHFCF₃ | F | F | |
| n-C₆H₁₃ | OCF₂CHFCF₃ | F | F | |
| H | NCS | H | H | |
| CH₃ | NCS | H | H | |
| C₂H₅ | NCS | H | H | |
| n-C₃H₇ | NCS | H | H | |
| n-C₄H₉ | NCS | H | H | |
| n-C₅H₁₁ | NCS | H | H | |
| n-C₆H₁₃ | NCS | H | H | |
| H | NCS | F | H | |
| CH₃ | NCS | F | H | |
| C₂H₅ | NCS | F | H | |
| n-C₃H₇ | NCS | F | H | |
| n-C₄H₉ | NCS | F | H | |
| n-C₅H₁₁ | NCS | F | H | |
| n-C₆H₁₃ | NCS | F | H | |
| H | NCS | F | F | |
| CH₃ | NCS | F | F | |
| C₂H₅ | NCS | F | F | |
| n-C₃H₇ | NCS | F | F | |
| n-C₄H₉ | NCS | F | F | |
| n-C₅H₁₁ | NCS | F | F | |
| n-C₆H₁₃ | NCS | F | F | |
| H | C₂F₅ | H | H | |
| CH₃ | C₂F₅ | H | H | |
| C₂H₅ | C₂F₅ | H | H | |
| n-C₃H₇ | C₂F₅ | H | H | |
| n-C₄H₉ | C₂F₅ | H | H | |
| n-C₅H₁₁ | C₂F₅ | H | H | |
| n-C₆H₁₃ | C₂F₅ | H | H | |
| H | C₂F₅ | F | H | |
| CH₃ | C₂F₅ | F | H | |
| C₂H₅ | C₂F₅ | F | H | |
| n-C₃H₇ | C₂F₅ | F | H | |
| n-C₄H₉ | C₂F₅ | F | H | |
| n-C₅H₁₁ | C₂F₅ | F | H | |
| n-C₆H₁₃ | C₂F₅ | F | H | |
| H | C₂F₅ | F | F | |
| CH₃ | C₂F₅ | F | F | |
| C₂H₅ | C₂F₅ | F | F | |
| n-C₃H₇ | C₂F₅ | F | F | |
| n-C₄H₉ | C₂F₅ | F | F | |
| n-C₅H₁₁ | C₂F₅ | F | F | |
| n-C₆H₁₃ | C₂F₅ | F | F | |
| H | C₃F₇ | H | H | |
| CH₃ | C₃F₇ | H | H | |
| C₂H₅ | C₃F₇ | H | H | |
| n-C₃H₇ | C₃F₇ | H | H | |
| n-C₄H₉ | C₃F₇ | H | H | |
| n-C₅H₁₁ | C₃F₇ | H | H | |
| n-C₆H₁₃ | C₃F₇ | H | H | |
| H | C₃F₇ | F | H | |
| CH₃ | C₃F₇ | F | H | |
| C₂H₅ | C₃F₇ | F | H | |
| n-C₃H₇ | C₃F₇ | F | H | |
| n-C₄H₉ | C₃F₇ | F | H | |
| n-C₅H₁₁ | C₃F₇ | F | H | |
| n-C₆H₁₃ | C₃F₇ | F | H | |
| H | C₃F₇ | F | F | |
| CH₃ | C₃F₇ | F | F | |
| C₂H₅ | C₃F₇ | F | F | |
| n-C₃H₇ | C₃F₇ | F | F | |
| n-C₄H₉ | C₃F₇ | F | F | |
| n-C₅H₁₁ | C₃F₇ | F | F | |
| n-C₆H₁₃ | C₃F₇ | F | F | |
| H | SF₅ | H | H | |
| CH₃ | SF₅ | H | H | |
| C₂H₅ | SF₅ | H | H | |
| n-C₃H₇ | SF₅ | H | H | |
| n-C₄H₉ | SF₅ | H | H | |
| n-C₅H₁₁ | SF₅ | H | H | |
| n-C₆H₁₃ | SF₅ | H | H | |
| H | SF₅ | F | H | |
| CH₃ | SF₅ | F | H | |
| C_{2H5} | SF₅ | F | H | |
| n-C₃H₇ | SF₅ | F | H | |
| n-C₄H₉ | SF₅ | F | H | |
| n-C₅H₁₁ | SF₅ | F | H | |
| n-C₆H₁₃ | SF₅ | F | H | |
| H | SF₅ | F | F | |
| CH₃ | SF₅ | F | F | |
| C₂H₅ | SF₅ | F | F | |
| n-C₃H₇ | SF₅ | F | F | |
| n-C₄H₉ | SF₅ | F | F | |
| n-C₅H₁₁ | SF₅ | F | F | |
| n-C₆H₁₃ | SF₅ | F | F | |
| H | CN | H | H | |
| CH₃ | CN | H | H | |
| C₂H₅ | CN | H | H | |
| n-C₃H₇ | CN | H | H | |
| n-C₄H₉ | CN | H | H | |
| n-C₅H₁₁ | CN | H | H | |
| n-C₆H₁₃ | CN | H | H | |
| H | CN | F | H | |
| CH₃ | CN | F | H | |
| C₂H₅ | CN | F | H | |
| n-C₃H₇ | CN | F | H | |
| n-C₄H₉ | CN | F | H | |
| n-C₅H₁₁ | CN | F | H | |
| n-C₆H₁₃ | CN | F | H | |
| H | CN | F | F | |
| CH₃ | CN | F | F | |
| C₂H₅ | CN | F | F | |
| n-C₃H₇ | CN | F | F | |
| n-C₄H₉ | CN | F | F | |
| n-C₅H₁₁ | CN | F | F | |
| n-C₆H₁₃ | CN | F | F | |

### Beispiel 2

### Schritt 2.1

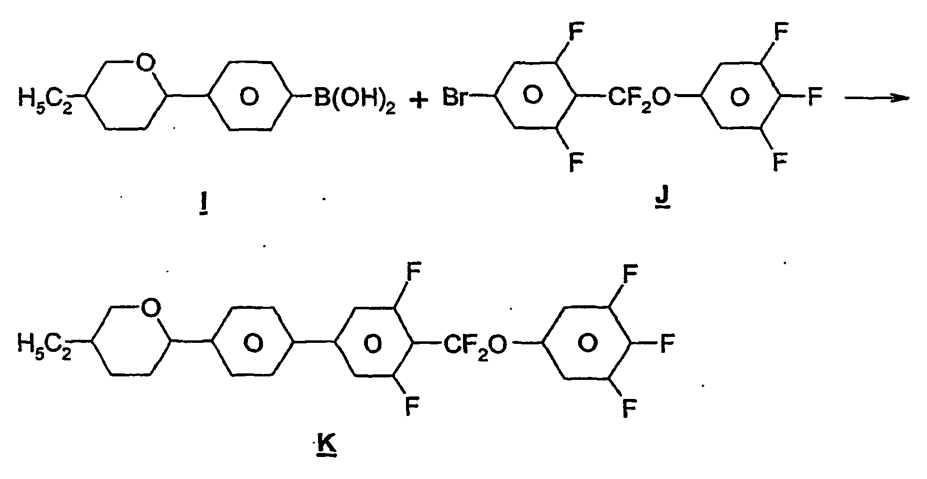

Eine Mischung aus 50 mmol **I,** 50 mmol **J,** 2,5 mmol Pd(PPh₃)₄, 300 ml Toluol und 300 ml Na-Boratpuffer (pH=9) wird 18 h bei 80 °C gerührt. Man gießt die Mischung in 500 ml 0,1 N HCl, extrahiert das Produkt mit CH₂Cl₂, trocknet über Na₂SO₄ und rotiert zur Trockene ein. Das Rohprodukt wird in n-Heptan über Kiegelgel chromatographiert und anschließend zweimal bei -20 °C aus n-Heptan umkristallisiert. K 78 N 93,1 I; Δn = 0,1493; Δε = 27,3

Analog werden die folgenden Verbindungen der Formel 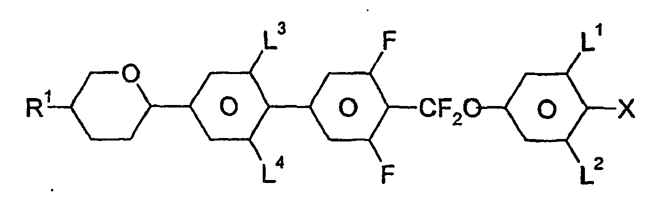 hergestellt:

| R¹ | X | L¹ | L² | L³ | L⁴ | |
|---|---|---|---|---|---|---|
| H | F | H | H | H | H | |
| CH₃ | F | H | H | H | H | |
| C₂H₅ | F | H | H | H | H | |
| C₃H₇ | F | H | H | H | H | |
| n-C₄H₉ | F | H | H | H | H | |
| n-C₅H₁₁ | F | H | H | H | H | |
| n-C₆H₁₃ | F | H | H | H | H | |
| H | F | F | H | H | H | |
| CH₃ | F | F | H | H | H | |
| C₂H₅ | F | F | H | H | H | |
| n-C₃H₇ | F | F | H | H | H | |
| n-C₄H₉ | F | F | H | H | H | |
| n-C₅H₁₁ | F | F | H | H | H | |
| n-C₆H₁₃ | F | F | H | H | H | |
| H | F | F | F | H | H | |
| CH₃ | F | F | F | H | H | |
| n-C₃H₇ | F | F | F | H | H | K 75 N 118,0 I; |
| | | | | | | Δε = 23,2; Δn = 0,1450 |
| n-C₄H₉ | F | F | F | H | H | |
| n-C₅H₁₁ | F | F | F | H | H | |
| n-C₆H₁₃ | F | F | F | H | H | |
| H | Cl | H | H | H | H | |
| CH₃ | Cl | H | H | H | H | |
| C₂H₅ | Cl | H | H | H | H | |
| n-C₃H₇ | Cl | H | H | H | H | |
| n-C₄H₉ | Cl | H | H | H | H | |
| n-C₅H₁₁ | Cl | H | H | H | H | |
| n-C₆H₁₃ | Cl | H | H | H | H | |
| H | Cl | F | H | H | H | |
| CH₃ | Cl | F | H | H | H | |
| C₂H₅ | Cl | F | H | H | H | |
| n-C₃H₇ | Cl | F | H | H | H | |
| n-C₄H₉ | Cl | F | H | H | H | |
| n-C₅H₁₁ | Cl | F | H | H | H | |
| n-C₆H₁₃ | Cl | F | H | H | H | |
| H | Cl | F | F | H | H | |
| CH₃ | Cl | F | F | H | H | |
| C₂H₅ | Cl | F | F | H | H | |
| n-C₃H₇ | Cl | F | F | H | H | |
| n-C₄H₉ | Cl | F | F | H | H | |
| n-C₅H₁₁ | Cl | F | F | H | H | |
| n-C₆H₁₃ | Cl | F | F | H | H | |
| H | OCF₃ | H | H | H | H | |
| CH₃ | OCF₃ | H | H | H | H | |
| C₂H₅ | OCF₃ | H | H | H | H | |
| n-C₃H₇ | OCF₃ | H | H | H | H | |
| n-C₄H₉ | OCF₃ | H | H | H | H | |
| n-C₅H₁₁ | OCF₃ | H | H | H | H | |
| n-C₆H₁₃ | OCF₃ | H | H | H | H | |
| H | OCF₃ | F | H | H | H | |
| CH₃ | OCF₃ | F | H | H | H | |
| C₂H₅ | OCF₃ | F | H | H | H | |
| n-C₃H₇ | OCF₃ | F | H | H | H | |
| n-C₄H₉ | OCF₃ | F | H | H | H | |
| n-C₅H₁₁ | OCF₃ | F | H | H | H | |
| n-C₆H₁₃ | OCF₃ | F | H | H | H | |
| H | OCF₃ | F | F | H | H | |
| CH₃ | OCF₃ | F | F | H | H | |
| C₂H₅ | OCF₃ | F | F | H | H | |
| n-C₃H₇ | OCF₃ | F | F | H | H | |
| n-C₄H₉ | OCF₃ | F | F | H | H | |
| n-C₅H₁₁ | OCF₃ | F | F | H | H | |
| n-C₆H₁₃ | OCF₃ | F | F | H | H | |
| H | OCHF₂ | H | H | H | H | |
| CH₃ | OCHF₂ | H | H | H | H | |
| C₂H₅ | OCHF₂ | H | H | H | H | |
| n-C₃H₇ | OCHF₂ | H | H | H | H | |
| n-C₄H₉ | OCHF₂ | H | H | H | H | |
| n-C₅H₁₁ | OCHF₂ | H | H | H | H | |
| n-C₆H₁₃ | OCHF₂ | H | H | H | H | |
| H | OCHF₂ | F | H | H | H | |
| CH₃ | OCHF₂ | F | H | H | H | |
| C₂H₅ | OCHF₂ | F | H | H | H | |
| n-C₃H₇ | OCHF₂ | F | H | H | H | |
| n-C₄H₉ | OCHF₂ | F | H | H | H | |
| n-C₅H₁₁ | OCHF₂ | F | H | H | H | |
| n-C₆H₁₃ | OCHF₂ | F | H | H | H | |
| H | OCHF₂ | F | F | H | H | |
| CH₃ | OCHF₂ | F | F | H | H | |
| C₂H₅ | OCHF₂ | F | F | H | H | |
| n-C₃H₇ | OCHF₂ | F | F | H | H | |
| n-C₄H₉ | OCHF₂ | F | F | H | H | |
| n-C₅H₁₁ | OCHF₂ | F | F | H | H | |
| n-C₆H₁₃ | OCHF₂ | F | F | H | H | |
| H | OCHFCF₃ | H | H | H | H | |
| CH₃ | OCHFCF₃ | H | H | H | H | |
| C₂H₅ | OCHFCF₃ | H | H | H | H | |
| n-C₃H₇ | OCHFCF₃ | H | H | H | H | |
| n-C₄H₉ | OCHFCF₃ | H | H | H | H | |
| n-C₅H₁₁ | OCHFCF₃ | H | H | H | H | |
| n-C₆H₁₃ | OCHFCF₃ | H | H | H | H | |
| H | OCHFCF₃ | F | H | H | H | |
| CH₃ | OCHFCF₃ | F | H | H | H | |
| C₂H₅ | OCHFCF₃ | F | H | H | H | |
| n-C₃H₇ | OCHFCF₃ | F | H | H | H | |
| n-C₄H₉ | OCHFCF₃ | F | H | H | H | |
| n-C₅H₁₁ | OCHFCF₃ | F | H | H | H | |
| n-C₆H₁₃ | OCHFCF₃ | F | H | H | H | |
| H | OCHFCF₃ | F | F | H | H | |
| CH₃ | OCHFCF₃ | F | F | H | H | |
| C₂H₅ | OCHFCF₃ | F | F | H | H | |
| n-C₃H₇ | OCHFCF₃ | F | F | H | H | |
| n-C₄H₉ | OCHFCF₃ | F | F | H | H | |
| n-C₅H₁₁ | OCHFCF₃ | F | F | H | H | |
| n-C₆H₁₃ | OCHFCF₃ | F | F | H | H | |
| H | OCHFCF₃ | H | H | H | H | |
| CH₃ | OCHFCF₃ | H | H | H | H | |
| C₂H₅ | OCHFCF₃ | H | H | H | H | |
| n-C₃H₇ | OCHFCF₃ | H | H | H | H | |
| n-C₄H₉ | OCHFCF₃ | H | H | H | H | |
| n-C₅H₁₁ | OCHFCF₃ | H | H | H | H | |
| n-C₆H₁₃ | OCHFCF₃ | H | H | H | H | |
| H | OCHFCF₃ | F | H | H | H | |
| CH₃ | OCHFCF₃ | F | H | H | H | |
| C₂H₅ | OCHFCF₃ | F | H | H | H | |
| n-C₃H₇ | OCHFCF₃ | F | H | H | H | |
| n-C₄H₉ | OCHFCF₃ | F | H | H | H | |
| n-C₅H₁₁ | OCHFCF₃ | F | H | H | H | |
| n-C₆H₁₃ | OCHFCF₃ | F | H | H | H | |
| H | OCHFCF₃ | F | F | H | H | |
| CH₃ | OCHFCF₃ | F | F | H | H | |
| C₂H₅ | OCHFCF₃ | F | F | H | H | |
| n-C₃H₇ | OCHFCF₃ | F | F | H | H | |
| n-C₄H₉ | OCHFCF₃ | F | F | H | H | |
| n-C₅H₁₁ | OCHFCF₃ | F | F | H | H | |
| n-C₆H₁₃ | OCHFCF₃ | F | F | H | H | |
| H | OCF₂CHFCF₃ | H | H | H | H | |
| CH₃ | OCF₂CHFCF₃ | H | H | H | H | |
| C₂H₅ | OCF₂CHFCF₃ | H | H | H | H | |
| n-C₃H₇ | OCF₂CHFCF₃ | H | H | H | H | |
| n-C₄H₉ | OCF₂CHFCF₃ | H | H | H | H | |
| n-C₅H₁₁ | OCF₂CHFCF₃ | H | H | H | H | |
| n-C₆H₁₃ | OCF₂CHFCF₃ | H | H | H | H | |
| H | OCF₂CHFCF₃ | F | H | H | H | |
| CH₃ | OCF₂CHFCF₃ | F | H | H | H | |
| C₂H₅ | OCF₂CHFCF₃ | F | H | H | H | |
| n-C₃H₇ | OCF₂CHFCF₃ | F | H | H | H | |
| n-C₄H₉ | OCF₂CHFCF₃ | F | H | H | H | |
| n-C₅H₁₁ | OCF₂CHFCF₃ | F | H | H | H | |
| n-C₆H₁₃ | OCF₂CHFCF₃ | F | H | H | H | |
| H | OCF₂CHFCF₃ | F | F | H | H | |
| CH₃ | OCF₂CHFCF₃ | F | F | H | H | |
| C₂H₅ | OCF₂CHFCF₃ | F | F | H | H | |
| n-C₃H₇ | OCF₂CHFCF₃ | F | F | H | H | |
| n-C₄H₉ | OCF₂CHFCF₃ | F | F | H | H | |
| n-C₅H₁₁ | OCF₂CHFCF₃ | F | F | H | H | |
| n-C₆H₁₃ | OCF₂CHFCF₃ | F | F | H | H | |
| H | NCS | H | H | H | H | |
| CH₃ | NCS | H | H | H | H | |
| C₂H₅ | NCS | H | H | H | H | |
| n-C₃H₇ | NCS | H | H | H | H | |
| n-C₄H₉ | NCS | H | H | H | H | |
| n-C₅H₁₁ | NCS | H | H | H | H | |
| n-C₆H₁₃ | NCS | H | H | H | H | |
| H | NCS | F | H | H | H | |
| CH₃ | NCS | F | H | H | H | |
| C₂H₅ | NCS | F | H | H | H | |
| n-C₃H₇ | NCS | F | H | H | H | |
| n-C₄H₉ | NCS | F | H | H | H | |
| n-C₅H₁₁ | NCS | F | H | H | H | |
| n-C₆H₁₃ | NCS | F | H | H | H | |
| H | NCS | F | F | H | H | |
| CH₃ | NCS | F | F | H | H | |
| C₂H₅ | NCS | F | F | H | H | |
| n-C₃H₇ | NCS | F | F | H | H | |
| n-C₄H₉ | NCS | F | F | H | H | |
| n-C₅H₁₁ | NCS | F | F | H | H | |
| n-C₆H₁₃ | NCS | F | F | H | H | |
| H | C₂F₅ | H | H | H | H | |
| CH₃ | C₂F₅ | H | H | H | H | |
| C₂H₅ | C₂F₅ | H | H | H | H | |
| n-C₃H₇ | C₂F₅ | H | H | H | H | |
| n-C₄H₉ | C₂F₅ | H | H | H | H | |
| n-C₅H₁₁ | C₂F₅ | H | H | H | H | |
| n-C₆H₁₃ | C₂F₅ | H | H | H | H | |
| H | C₂F₅ | F | H | H | H | |
| CH₃ | C₂F₅ | F | H | H | H | |
| C₂H₅ | C₂F₅ | F | H | H | H | |
| n-C₃H₇ | C₂F₅ | F | H | H | H | |
| n-C₄H₉ | C₂F₅ | F | H | H | H | |
| n-C₅H₁₁ | C₂F₅ | F | H | H | H | |
| n-C₆H₁₃ | C₂F₅ | F | H | H | H | |
| H | C₂F₅ | F | F | H | H | |
| CH₃ | C₂F₅ | F | F | H | H | |
| C₂H₅ | C₂F₅ | F | F | H | H | |
| n-C₃H₇ | C₂F₅ | F | F | H | H | |
| n-C₄H₉ | C₂F₅ | F | F | H | H | |
| n-C₅H₁₁ | C₂F₅ | F | F | H | H | |
| n-C₆H₁₃ | C₂F₅ | F | F | H | H | |
| H | C₃F₇ | H | H | H | H | |
| CH₃ | C₃F₇ | H | H | H | H | |
| C₂H₅ | C₃F₇ | H | H | H | H | |
| n-C₃H₇ | C₃F₇ | H | H | H | H | |
| n-C₄H₉ | C₃F₇ | H | H | H | H | |
| n-C₅H₁₁ | C₃F₇ | H | H | H | H | |
| n-C₆H₁₃ | C₃F₇ | H | H | H | H | |
| H | C₃F₇ | F | H | H | H | |
| CH₃ | C₃F₇ | F | H | H | H | |
| C₂H₅ | C₃F₇ | F | H | H | H | |
| n-C₃H₇ | C₃F₇ | F | H | H | H | |
| n-C₄H₉ | C₃F₇ | F | H | H | H | |
| n-C₅H₁₁ | C₃F₇ | F | H | H | H | |
| n-C₆H₁₃ | C₃F₇ | F | H | H | H | |
| H | C₃F₇ | F | F | H | H | |
| CH₃ | C₃F₇ | F | F | H | H | |
| C₂H₅ | C₃F₇ | F | F | H | H | |
| n-C₃H₇ | C₃F₇ | F | F | H | H | |
| n-C₄H₉ | C₃F₇ | F | F | H | H | |
| n-C₅H₁₁ | C₃F₇ | F | F | H | H | |
| n-C₆H₁₃ | C₃F₇ | F | F | H | H | |
| H | SF₅ | H | H | H | H | |
| CH₃ | SF₅ | H | H | H | H | |
| C₂H₅ | SF₅ | H | H | H | H | |
| n-C₃H₇ | SF₅ | H | H | H | H | |
| n-C₄H₉ | SF₅ | H | H | H | H | |
| n-C₅H₁₁ | SF₅ | H | H | H | H | |
| n-C₆H₁₃ | SF₅ | H | H | H | H | |
| H | SF₅ | F | H | H | H | |
| CH₃ | SF₅ | F | H | H | H | |
| C₂H₅ | SF₅ | F | H | H | H | |
| n-C₃H₇ | SF₅ | F | H | H | H | |
| n-C₄H₉ | SF₅ | F | H | H | H | |
| n-C₅H₁₁ | SF₅ | F | H | H | H | |
| n-C₆H₁₃ | SF₅ | F | H | H | H | |
| H | SF₅ | F | F | H | H | |
| CH₃ | SF₅ | F | F | H | H | |
| C₂H₅ | SF₅ | F | F | H | H | |
| n-C₃H₇ | SF₅ | F | F | H | H | |
| n-C₄H₉ | SF₅ | F | F | H | H | |
| n-C₅H₁₁ | SF₅ | F | F | H | H | |
| n-C₆H₁₃ | SF₅ | F | F | H | H | |
| H | CN | H | H | H | H | |
| CH₃ | CN | H | H | H | H | |
| C₂H₅ | CN | H | H | H | H | |
| n-C₃H₇ | CN | H | H | H | H | |
| n-C₄H₉ | CN | H | H | H | H | |
| n-C₅H₁₁ | CN | H | H | H | H | |
| n-C₆H₁₃ | CN | H | H | H | H | |
| H | CN | F | H | H | H | |
| CH₃ | CN | F | H | H | H | |
| C₂H₅ | CN | F | H | H | H | |
| n-C₃H₇ | CN | F | H | H | H | |
| n-C₄H₉ | CN | F | H | H | H | |
| n-C₅H₁₁ | CN | F | H | H | H | |
| n-C₆H₁₃ | CN | F | H | H | H | |
| H | CN | F | F | H | H | |
| CH₃ | CN | F | F | H | H | |
| C₂H₅ | CN | F | F | H | H | |
| n-C₃H₇ | CN | F | F | H | H | |
| n-C₄H₉ | CN | F | F | H | H | |
| n-C₅H₁₁ | CN | F | F | H | H | |
| n-C₆H₁₃ | CN | F | F | H | H | |
| H | F | H | H | F | H | |
| CH₃ | F | H | H | F | H | |
| C₂H₅ | F | H | H | F | H | |
| C₃H₇ | F | H | H | F | H | |
| n-C₄H₉ | F | H | H | F | H | |
| n-C₅H₁₁ | F | H | H | F | H | |
| n-C₆H₁₃ | F | H | H | F | H | |
| H | F | F | H | F | H | |
| CH₃ | F | F | H | F | H | |
| C₂H₅ | F | F | H | F | H | |
| n-C₃H₇ | F | F | H | F | H | |
| n-C₄H₉ | F | F | H | F | H | |
| n-C₅H₁₁ | F | F | H | F | H | |
| n-C₆H₁₃ | F | F | H | F | H | |
| H | F | F | F | F | H | |
| CH₃ | F | F | F | F | H | |
| C₂H₅ | F | F | F | F | H | K 89 N (76,8) I, |
| | | | | | | Δε = 29,9; Δn = 0,1310 |
| n-C₃H₇ | F | F | F | F | H | K 70 N 102,3 I; |
| | | | | | | Δε = 29,7; Δn = 0,1364 |
| n-C₄H₉ | F | F | F | F | H | |
| n-C₅H₁₁ | F | F | F | F | H | |
| n-C₆H₁₃ | F | F | F | F | H | |
| H | Cl | H | H | F | H | |
| CH₃ | Cl | H | H | F | H | |
| C₂H₅ | Cl | H | H | F | H | |
| n-C₃H₇ | Cl | H | H | F | H | |
| n-C₄H₉ | Cl | H | H | F | H | |
| n-C₅H₁₁ | Cl | H | H | F | H | |
| n-C₆H₁₃ | Cl | H | H | F | H | |
| H | Cl | F | H | F | H | |
| CH₃ | Cl | F | H | F | H | |
| C₂H₅ | Cl | F | H | F | H | |
| n-C₃H₇ | Cl | F | H | F | H | |
| n-C₄H₉ | Cl | F | H | F | H | |
| n-C₅H₁₁ | Cl | F | H | F | H | |
| n-C₆H₁₃ | Cl | F | H | F | H | |
| H | Cl | F | F | F | H | |
| CH₃ | Cl | F | F | F | H | |
| C₂H₅ | Cl | F | F | F | H | |
| n-C₃H₇ | Cl | F | F | F | H | |
| n-C₄H₉ | Cl | F | F | F | H | |
| n-C₅H₁₁ | Cl | F | F | F | H | |
| n-C₆H₁₃ | Cl | F | F | F | H | |
| H | OCF₃ | H | H | F | H | |
| CH₃ | OCF₃ | H | H | F | H | |
| C₂H₅ | OCF₃ | H | H | F | H | |
| n-C₃H₇ | OCF₃ | H | H | F | H | |
| n-C₄H₉ | OCF₃ | H | H | F | H | |
| n-C₅H₁₁ | OCF₃ | H | H | F | H | |
| n-C₆H₁₃ | OCF₃ | H | H | F | H | |
| H | OCF₃ | F | H | F | H | |
| CH₃ | OCF₃ | F | H | F | H | |
| C₂H₅ | OCF₃ | F | H | F | H | |
| n-C₃H₇ | OCF₃ | F | H | F | H | |
| n-C₄H₉ | OCF₃ | F | H | F | H | |
| n-C₅H11 | OCF₃ | F | H | F | H | |
| n-C₆H₁₃ | OCF₃ | F | H | F | H | |
| H | OCF₃ | F | F | F | H | |
| CH₃ | OCF₃ | F | F | F | H | |
| C₂H₅ | OCF₃ | F | F | F | H | |
| n-C₃H₇ | OCF₃ | F | F | F | H | |
| n-C₄Hₛ | OCF₃ | F | F | F | H | |
| n-C₅H₁₁ | OCF₃ | F | F | F | H | |
| n-C₆H₁₃ | OCF₃ | F | F | F | H | |
| H | OCHF₂ | H | H | F | H | |
| CH₃ | OCHF₂ | H | H | F | H | |
| C₂H₅ | OCHF₂ | H | H | F | H | |
| n-C₃H₇ | OCHF₂ | H | H | F | H | |
| n-C₄H₉ | OCHF₂ | H | H | F | H | |
| n-C₅H₁₁ | OCHF₂ | H | H | F | H | |
| n-C₆H₁₃ | OCHF₂ | H | H | F | H | |
| H | OCHF₂ | F | H | F | H | |
| CH₃ | OCHF₂ | F | H | F | H | |
| C₂H₅ | OCHF₂ | F | H | F | H | |
| n-C₃H₇ | OCHF₂ | F | H | F | H | |
| n-C₄H₉ | OCHF₂ | F | H | F | H | |
| n-C₅H₁₁ | OCHF₂ | F | H | F | H | |
| n-C₆H₁₃ | OCHF₂ | F | H | F | H | |
| H | OCHF₂ | F | F | F | H | |
| CH₃ | OCHF₂ | F | F | F | H | |
| C₂H₅ | OCHF₂ | F | F | F | H | |
| n-C₃H₇ | OCHF₂ | F | F | F | H | |
| n-C₄H₉ | OCHF₂ | F | F | F | H | |
| n-C₅H₁₁ | OCHF₂ | F | F | F | H | |
| n-C₆H₁₃ | OCHF₂ | F | F | F | H | |
| H | OCHFCF₃ | H | H | F | H | |
| CH₃ | OCHFCF₃ | H | H | F | H | |
| C₂H₅ | OCHFCF₃ | H | H | F | H | |
| n-C₃H₇ | OCHFCF₃ | H | H | F | H | |
| n-C₄H₉ | OCHFCF₃ | H | H | F | H | |
| n-C₅H₁₁ | OCHFCF₃ | H | H | F | H | |
| n-C₆H₁₃ | OCHFCF₃ | H | H | F | H | |
| H | OCHFCF₃ | F | H | F | H | |
| CH₃ | OCHFCF₃ | F | H | F | H | |
| C₂H₅ | OCHFCF₃ | F | H | F | H | |
| n-C₃H₇ | OCHFCF₃ | F | H | F | H | |
| n-C₄H₉ | OCHFCF₃ | F | H | F | H | |
| n-C₅H₁₁ | OCHFCF₃ | F | H | F | H | |
| n-C₆H₁₃ | OCHFCF₃ | F | H | F | H | |
| H | OCHFCF₃ | F | F | F | H | |
| CH₃ | OCHFCF₃ | F | F | F | H | |
| C₂H₅ | OCHFCF₃ | F | F | F | H | |
| n-C₃H₇ | OCHFCF₃ | F | F | F | H | |
| n-C₄H₉ | OCHFCF₃ | F | F | F | H | |
| n-C₅H₁₁ | OCHFCF₃ | F | F | F | H | |
| n-C₆H₁₃ | OCHFCF₃ | F | F | F | H | |
| H | OCHFCF₃ | H | H | F | H | |
| CH₃ | OCHFCF₃ | H | H | F | H | |
| C₂H₅ | OCHFCF₃ | H | H | F | H | |
| n-C₃H₇ | OCHFCF₃ | H | H | F | H | |
| n-C₄H₉ | OCHFCF₃ | H | H | F | H | |
| n-C₅H₁₁ | OCHFCF₃ | H | H | F | H | |
| n-C₆H₁₃ | OCHFCF₃ | H | H | F | H | |
| H | OCHFCF₃ | F | H | F | H | |
| CH₃ | OCHFCF₃ | F | H | F | H | |
| C₂H₅ | OCHFCF₃ | F | H | F | H | |
| n-C₃H₇ | OCHFCF₃ | F | H | F | H | |
| n-C₄H₉ | OCHFCF₃ | F | H | F | H | |
| n-C₅H₁₁ | OCHFCF₃ | F | H | F | H | |
| n-C₆H₁₃ | OCHFCF₃ | F | H | F | H | |
| H | OCHFCF₃ | F | F | F | H | |
| CH₃ | OCHFCF₃ | F | F | F | H | |
| C₂H₅ | OCHFCF₃ | F | F | F | H | |
| n-C₃H₇ | OCHFCF₃ | F | F | F | H | |
| n-C₄H₉ | OCHFCF₃ | F | F | F | H | |
| n-C₅H₁₁ | OCHFCF₃ | F | F | F | H | |
| n-C₆H₁₃ | OCHFCF₃ | F | F | F | H | |
| H | OCF₂CHFCF₃ | H | H | F | H | |
| CH₃ | OCF₂CHFCF₃ | H | H | F | H | |
| C₂H₅ | OCF₂CHFCF₃ | H | H | F | H | |
| n-C₃H₇ | OCF₂CHFCF₃ | H | H | F | H | |
| n-C₄H₉ | OCF₂CHFCF₃ | H | H | F | H | |
| n-C₅H₁₁ | OCF₂CHFCF₃ | H | H | F | H | |
| n-C₆H₁₃ | OCF₂CHFCF₃ | H | H | F | H | |
| H | OCF₂CHFCF₃ | F | H | F | H | |
| CH₃ | OCF₂CHFCF₃ | F | H | F | H | |
| C₂H₅ | OCF₂CHFCF₃ | F | H | F | H | |
| n-C₃H₇ | OCF₂CHFCF₃ | F | H | F | H | |
| n-C₄H₉ | OCF₂CHFCF₃ | F | H | F | H | |
| n-C₅H₁₁ | OCF₂CHFCF₃ | F | H | F | H | |
| n-C₆H₁₃ | OCF₂CHFCF₃ | F | H | F | H | |
| H | OCF₂CHFCF₃ | F | F | F | H | |
| CH₃ | OCF₂CHFCF₃ | F | F | F | H | |
| C₂H₅ | OCF₂CHFCF₃ | F | F | F | H | |
| n-C₃H₇ | OCF₂CHFCF₃ | F | F | F | H | |
| n-C₄H₉ | OCF₂CHFCF₃ | F | F | F | H | |
| n-C₅H₁₁ | OCF₂CHFCF₃ | F | F | F | H | |
| n-C₆H₁₃ | OCF₂CHFCF₃ | F | F | F | H | |
| H | NCS | H | H | F | H | |
| CH₃ | NCS | H | H | F | H | |
| C₂H₅ | NCS | H | H | F | H | |
| n-C₃H₇ | NCS | H | H | F | H | |
| n-C₄H₉ | NCS | H | H | F | H | |
| n-C₅H₁₁ | NCS | H | H | F | H | |
| n-C₆H₁₃ | NCS | H | H | F | H | |
| H | NCS | F | H | F | H | |
| CH₃ | NCS | F | H | F | H | |
| C₂H₅ | NCS | F | H | F | H | |
| n-C₃H₇ | NCS | F | H | F | H | |
| n-C₄H₉ | NCS | F | H | F | H | |
| n-C₅H₁₁ | NCS | F | H | F | H | |
| n-C₆H₁₃ | NCS | F | H | F | H | |
| H | NCS | F | F | F | H | |
| CH₃ | NCS | F | F | F | H | |
| C₂H₅ | NCS | F | F | F | H | |
| n-C₃H₇ | NCS | F | F | F | H | |
| n-C₄H₉ | NCS | F | F | F | H | |
| n-C₅H₁₁ | NCS | F | F | F | H | |
| n-C₆H₁₃ | NCS | F | F | F | H | |
| H | C₂F₅ | H | H | F | H | |
| CH₃ | C₂F₅ | H | H | F | H | |
| C₂H₅ | C₂F₅ | H | H | F | H | |
| n-C₃H₇ | C₂F₅ | H | H | F | H | |
| n-C₄H₉ | C₂F₅ | H | H | F | H | |
| n-C₅H₁₁ | C₂F₅ | H | H | F | H | |
| n-C₆H₁₃ | C₂F₅ | H | H | F | H | |
| H | C₂F₅ | F | H | F | H | |
| CH₃ | C₂F₅ | F | H | F | H | |
| C₂H₅ | C₂F₅ | F | H | F | H | |
| n-C₃H₇ | C₂F₅ | F | H | F | H | |
| n-C₄H₉ | C₂F₅ | F | H | F | H | |
| n-C₅H₁₁ | C₂F₅ | F | H | F | H | |
| n-C₆H₁₃ | C₂F₅ | F | H | F | H | |
| H | C₂F₅ | F | F | F | H | |
| CH₃ | C₂F₅ | F | F | F | H | |
| C₂H₅ | C₂F₅ | F | F | F | H | |
| n-C₃H₇ | C₂F₅ | F | F | F | H | |
| n-C4H9 | C₂F₅ | F | F | F | H | |
| n-C₅H₁₁ | C₂F₅ | F | F | F | H | |
| n-C₆H₁₃ | C₂F₅ | F | F | F | H | |
| H | C₃F₇ | H | H | F | H | |
| CH₃ | C₃F₇ | H | H | F | H | |
| C₂H₅ | C₃F₇ | H | H | F | H | |
| n-C₃H₇ | C₃F₇ | H | H | F | H | |
| n-C₄H₉ | C₃F₇ | H | H | F | H | |
| n-C₅H₁₁ | C₃F₇ | H | H | F | H | |
| n-C₆H₁₃ | C₃F₇ | H | H | F | H | |
| H | C₃F₇ | F | H | F | H | |
| CH₃ | C₃F₇ | F | H | F | H | |
| C₂H₅ | C₃F₇ | F | H | F | H | |
| n-C₃H₇ | C₃F₇ | F | H | F | H | |
| n-C₄H₉ | C₃F₇ | F | H | F | H | |
| n-C₅H₁₁ | C₃F₇ | F | H | F | H | |
| n-C₆H₁₃ | C₃F₇ | F | H | F | H | |
| H | C₃F₇ | F | F | F | H | |
| CH₃ | C₃F₇ | F | F | F | H | |
| C₂H₅ | C₃F₇ | F | F | F | H | |
| n-C₃H₇ | C₃F₇ | F | F | F | H | |
| n-C₄H₉ | C₃F₇ | F | F | F | H | |
| n-C₅H₁₁ | C₃F₇ | F | F | F | H | |
| n-C₆H₁₃ | C₃H₇ | F | F | F | H | |
| H | SF₅ | H | H | F | H | |
| CH₃ | SF₅ | H | H | F | H | |
| C₂H₅ | SF₅ | H | H | F | H | |
| n-C₃H₇ | SF₅ | H | H | F | H | |
| n-C₄H₉ | SF₅ | H | H | F | H | |
| n-C₅H₁₁ | SF₅ | H | H | F | H | |
| n-C₆H₁₃ | SF₅ | H | H | F | H | |
| H | SF₅ | F | H | F | H | |
| CH₃ | SF₅ | F | H | F | H | |
| C₂H₅ | SF₅ | F | H | F | H | |
| n-C₃H₇ | SF₅ | F | H | F | H | |
| n-C₄H₉ | SF₅ | F | H | F | H | |
| n-C₅H₁₁ | SF₅ | F | H | F | H | |
| n-C₆H₁₃ | SF₅ | F | H | F | H | |
| H | SF₅ | F | F | F | H | |
| CH₃ | SF₅ | F | F | F | H | |
| C₂H₅ | SF₅ | F | F | F | H | |
| n-C₃H₇ | SF₅ | F | F | F | H | |
| n-C₄H₉ | SF₅ | F | F | F | H | |
| n-C₅H₁₁ | SF₅ | F | F | F | H | |
| n-C₆H₁₃ | SF₅ | F | F | F | H | |
| H | CN | H | H | F | H | |
| CH₃ | CN | H | H | F | H | |
| C₂H₅ | CN | H | H | F | H | |
| n-C₃H₇ | CN | H | H | F | H | |
| n-C₄H₉ | CN | H | H | F | H | |
| n-C₅H₁₁ | CN | H | H | F | H | |
| n-C₆H₁₃ | CN | H | H | F | H | |
| H | CN | F | H | F | H | |
| CH₃ | CN | F | H | F | H | |
| C₂H₅ | CN | F | H | F | H | |
| n-C₃H₇ | CN | F | H | F | H | |
| n-C₄H₉ | CN | F | H | F | H | |
| n-C₅H₁₁ | CN | F | H | F | H | |
| n-C₆H₁₃ | CN | F | H | F | H | |
| H | CN | F | F | F | H | |
| CH₃ | CN | F | F | F | H | |
| C₂H₅ | CN | F | F | F | H | |
| n-C₃H₇ | CN | F | F | F | H | |
| n-C₄H₉ | CN | F | F | F | H | |
| n-C₅H₁₁ | CN | F | F | F | H | |
| n-C₆H₁₃ | CN | F | F | F | H | |
| H | F | H | H | F | F | |
| CH₃ | F | H | H | F | F | |
| C₂H₅ | F | H | H | F | F | |
| n-C₄H₉ | F | H | H | F | F | |
| n-C₅H₁₁ | F | H | H | F | F | |
| n-C₆H₁₃ | F | H | H | F | F | |
| H F | F | F | H | F | F | |
| CH₃ | F | F | H | F | F | |
| C₂H₅ | F | F | H | F | F | |
| n-C₃H₇ | F | F | H | F | F | |
| n-C₄H₉ | F | F | H | F | F | |
| n-C₅H₁₁ | F | F | H | F | F | |
| n-C₆H₁₃ | F | F | H | F | F | |
| H | F | F | F | F | F | |
| CH₃ | F | F | F | F | F | |
| C₂H₅ | F | F | F | F | F | |
| C₂H₅ | F | F | F | F | F | K 91 N (58,8) I; |
| | | | | | | Δε = 35, 0; Δn = 0,1149 |
| n-C₃H₇ | F | F | F | F | F | K 83 N (83,0) I; |
| | | | | | | Δε = 34,9; Δn = 0,1231 |
| n-C₄H₉ | F | F | F | F | F | K 90 N 79,4 I; |
| | | | | | | Δε = 32,4; Δn = 0,1171 |
| n-C₅H₁₁ | F | F | F | F | F | K 82 N 84,3 I; |
| | | | | | | Δε = 31,9; Δn = 0,1205 |
| n-C₆H₁₃ | F | F | F | F | F | K 89 N (83,4) I; |
| | | | | | | Δε = 30,6; Δn = 0,1116 |
| n-C₇H₁₅ | F | F | F | F | F | K 82 N 84,3 I; |
| | | | | | | Δε =30,3; Δn = 0,1130 |
| H | Cl | H | H | F | F | |
| CH₃ | Cl | H | H | F | F | |
| C₂H₅ | Cl | H | H | F | F | |
| n-C₃H₇ | Cl | H | H | F | F | |
| n-C₄H₉ | Cl | H | H | F | F | |
| n-C₅H₁₁ | Cl | H | H | F | F | |
| n-C₆H₁₃ | Cl | H | H | F | F | |
| H | Cl | F | H | F | F | |
| CH₃ | Cl | F | H | F | F | |
| C₂H₅ | Cl | F | H | F | F | |
| n-C₃H₇ | Cl | F | H | F | F | |
| n-C₄H₉ | Cl | F | H | F | F | |
| n-C₅H₁₁ | Cl | F | H | F | F | |
| n-C₆H₁₃ | Cl | F | H | F | F | |
| H | Cl | F | F | F | F | |
| CH₃ | Cl | F | F | F | F | |
| C₂H₅ | Cl | F | F | F | F | |
| n-C₃H₇ | Cl | F | F | F | F | K 80 N 106,7 I; |
| | | | | | | Δε = 31,5; Δn = 0,1372 |
| n-C₄H₉ | Cl | F | F | F | F | |
| n-C₅H₁₁ | Cl | F | F | F | F | |
| n-C₆H₁₃ | Cl | F | F | F | F | |
| H | OCF₃ | H | H | F | F | |
| CH₃ | OCF₃ | H | H | F | F | |
| C₂H₅ | OCF₃ | H | H | F | F | |
| n-C₃H₇ | OCF₃ | H | H | F | F | K 80 N 119,8 I; |
| | | | | | | Δε = 25,3; Δn = 0,1330 |
| n-C₄H₉ | OCF₃ | H | H | F | F | |
| n-C₅H₁₁ | OCF₃ | H | H | F | F | |
| n-C₆H₁₃ | OCF₃ | H | H | F | F | |
| H | OCF₃ | F | H | F | F | |
| CH₃ | OCF₃ | F | H | F | F | |
| C₂H₅ | OCF₃ | F | H | F | F | |
| n-C₃H₇ | OCF₃ | F | H | F | F | K 48 S_{A} (46) N 105,1 I; |
| | | | | | | Δε = 29,8; An = 0,1180 |
| n-C₄H₉ | OCF₃ | F | H | F | F | |
| n-C₅H₁₁ | OCF₃ | F | H | F | F | |
| n-C₆H₁₃ | OCF₃ | F | H | F | F | |
| H | OCF₃ | F | F | F | F | |
| CH₃ | OCF₃ | F | F | F | F | |
| C₂H₅ | OCF₃ | F | F | F | F | |
| n-C₃H₇ | OCF₃ | F | F | F | F | K 73 N 97,5 I; |
| | | | | | | Δε = 35,6; Δn = 0,1158 |
| n-C₄H₉ | OCF₃ | F | F | F | F | |
| n-C₅H₁₁ | OCF₃ | F | F | F | F | |
| n-C₆H₁₃ | OCF₃ | F | F | F | F | |
| H | OCHF₂ | H | H | F | F | |
| CH₃ | OCHF₂ | H | H | F | F | |
| C₂H₅ | OCHF₂ | H | H | F | F | |
| n-C₃H₇ | OCHF₂ | H | H | F | F | |
| n-C₄H₉ | OCHF₂ | H | H | F | F | |
| n-C₅H₁₁ | OCHF₂ | H | H | F | F | |
| n-C₆H₁₃ | OCHF₂ | H | H | F | F | |
| H | OCHF₂ | F | H | F | F | |
| CH₃ | OCHF₂ | F | H | F | F | |
| C₂H₅ | OCHF₂ | F | H | F | F | |
| n-C₃H₇ | OCHF₂ | F | H | F | F | |
| n-C₄H₉ | OCHF₂ | F | H | F | F | |
| n-C₅H₁₁ | OCHF₂ | F | H | F | F | |
| n-C₆H₁₃ | OCHF₂ | F | H | F | F | |
| H | OCHF₂ | F | F | F | F | |
| CH₃ | OCHF₂ | F | F | F | F | |
| C₂H₅ | OCHF₂ | F | F | F | F | |
| n-C₃H₇ | OCHF₂ | F | F | F | F | |
| n-C₄H₉ | OCHF₂ | F | F | F | F | |
| n-C₅H₁₁ | OCHF₂ | F | F | F | F | |
| n-C₆H₁₃ | OCHF₂ | F | F | F | F | |
| H | OCHFCF₃ | H | H | F | F | |
| CH₃ | OCHFCF₃ | H | H | F | F | |
| C₂H₅ | OCHFCF₃ | H | H | F | F | |
| n-C₃H₇ | OCHFCF₃ | H | H | F | F | |
| n-C₄H₉ | OCHFCF₃ | H | H | F | F | |
| n-C₅H₁₁ | OCHFCF₃ | H | H | F | F | |
| n-C₆H₁₃ | OCHFCF₃ | H | H | F | F | |
| H | OCHFCF₃ | F | H | F | F | |
| CH₃ | OCHFCF₃ | F | H | F | F | |
| C₂H₅ | OCHFCF₃ | F | H | F | F | |
| n-C₃H₇ | OCHFCF₃ | F | H | F | F | |
| n-C₄H₉ | OCHFCF₃ | F | H | F | F | |
| n-C₅H₁₁ | OCHFCF₃ | F | H | F | F | |
| n-C₆H₁₃ | OCHFCF₃ | F | H | F | F | |
| H | OCHFCF₃ | F | F | F | F | |
| CH₃ | OCHFCF₃ | F | F | F | F | |
| C₂H₅ | OCHFCF₃ | F | F | F | F | |
| n-C₃H₇ | OCHFCF₃ | F | F | F | F | |
| n-C₄H₉ | OCHFCF₃ | F | F | F | F | |
| n-C₅H₁₁ | OCHFCF₃ | F | F | F | F | |
| n-C₆H₁₃ | OCHFCF₃ | F | F | F | F | |
| H | OCHFCF₃ | H | H | F | F | |
| CH₃ | OCHFCF₃ | H | H | F | F | |
| C₂H₅ | OCHFCF₃ | H | H | F | F | |
| n-C₃H₇ | OCHFCF₃ | H | H | F | F | |
| n-C₄H₉ | OCHFCF₃ | H | H | F | F | |
| n-C₅H₁₁ | OCHFCF₃ | H | H | F | F | |
| n-C₆H₁₃ | OCHFCF₃ | H | H | F | F | |
| H | OCHFCF₃ | F | H | F | F | |
| CH₃ | OCHFCF₃ | F | H | F | F | |
| C₂H₅ | OCHFCF₃ | F | H | F | F | |
| n-C₃H₇ | OCHFCF₃ | F | H | F | F | |
| n-C₄H₉ | OCHFCF₃ | F | H | F | F | |
| n-C₅H₁₁ | OCHFCF₃ | F | H | F | F | |
| n-C₆H₁₃ | OCHFCF₃ | F | H | F | F | |
| H | OCHFCF₃ | F | F | F | F | |
| CH₃ | OCHFCF₃ | F | F | F | F | |
| C₂H₅ | OCHFCF₃ | F | F | F | F | |
| n-C₃H₇ | OCHFCF₃ | F | F | F | F | |
| n-C₄H₉ | OCHFCF₃ | F | F | F | F | |
| n-C₅H₁₁ | OCHFCF₃ | F | F | F | F | |
| n-C₆H₁₃ | OCHFCF₃ | F | F | F | F | |
| H | OCF₂CHFCF₃ . | H | H | F | F | |
| CH₃ | OCF₂CHFCF₃ | H | H | F | F | |
| C₂H₅ | OCF₂CHFCF₃ | H | H | F | F | |
| n-C₃H₇ | OCF₂CHFCF₃ | H | H | F | F | |
| n-C₄H₉ | OCF₂CHFCF₃ | H | H | F | F | |
| n-C₅H₁₁ | OCF₂CHFCF₃ | H | H | F | F | |
| n-C₆H₁₃ | OCF₂CHFCF₃ | H | H | F | F | |
| H | OCF₂CHFCF₃ | F | H | F | F | |
| CH₃ | OCF₂CHFCF₃ | F | H | F | F | |
| C₂H₅ | OCF₂CHFCF₃ | F | H | F | F | |
| n-C₃H₇ | OCF₂CHFCF₃ | F | H | F | F | |
| n-C₄H₉ | OCF₂CHFCF₃ | F | H | F | F | |
| n-C₅H₁₁ | OCF₂CHFCF₃ | F | H | F | F | |
| n-C₆H₁₃ | OCF₂CHFCF₃ | F | H | F | F | |
| H | OCF₂CHFCF₃ | F | F | F | F | |
| CH₃ | OCF₂CHFCF₃ | F | F | F | F | |
| C₂H₅ | OCF₂CHFCF₃ | F | F | F | F | |
| n-C₃H₇ | OCF₂CHFCF₃ | F | F | F | F | |
| n-C₄H₉ | OCF₂CHFCF₃ | F | F | F | F | |
| n-C₅H₁₁ | OCF₂CHFCF₃ | F | F | F | F | |
| **n-C₆H₁₃** | OCF₂CHFCF₃ | F | F | F | F | |
| H | NCS | H | H | F | F | |
| CH₃ | NCS | H | H | F | F | |
| C₂H₅ | NCS | H | H | F | F | |
| n-C₃H₇ | NCS | H | H | F | F | K 107 N 185,5 I; |
| | | | | | | Δε = 31,4; Δn = 0,2052 |
| n-C₄H₉ | NCS | H | H | F | F | |
| n-C₅H₁₁ | NCS | H | H | F | F | |
| n-C₆H₁₃ | NCS | H | H | F | F | |
| H | NCS | F | H | F | F | |
| CH₃ | NCS | F | H | F | F | |
| C₂H₅ | NCS | F | H | F | F | |
| n-C₃H₇ | NCS | F | H | F | F | |
| n-C₄H₉ | NCS | F | H | F | F | |
| n-C₅H₁₁ | NCS | F | H | F | F | |
| n-C₆H₁₃ | NCS | F | H | F | F | |
| H | NCS | F | F | F | F | |
| CH₃ | NCS | F | F | F | F | |
| C₂H₅ | NCS | F | F | F | F | |
| n-C₃H₇ | NCS | F | F | F | F | |
| n-C₄H₉ | NCS | F | F | F | F | |
| n-C₅H₁₁ | NCS | F | F | F | F | |
| n-C₆H₁₃ | NCS | F | F | F | F | |
| H | C₂F₅ | H | H | F | F | |
| CH₃ | C₂F₅ | H | H | F | F | |
| C₂H₅ | C₂F₅ | H | H | F | F | |
| n-C₃H₇ | C₂F₅ | H | H | F | F | |
| n-C₄H₉ | C₂F₅ | H | H | F | F | |
| n-C₅H₁₁ | C₂F₅ | H | H | F | F | |
| n-C₆H₁₃ | C₂F₅ | H | H | F | F | |
| H | C₂F₅ | F | H | F | F | |
| CH₃ | C₂F₅ | F | H | F | F | |
| C₂H₅ | C₂F₅ | F | H | F | F | |
| n-C₃H₇ | C₂F₅ | F | H | F | F | |
| n-C₄H₉ | C₂F₅ | F | H | F | F | |
| n-C₅H₁₁ | C₂F₅ | F | H | F | F | |
| n-C₆H₁₃ | C₂F₅ | F | H | F | F | |
| H | C₂F₅ | F | F | F | F | |
| CH₃ | C₂F₅ | F | F | F | F | |
| C₂H₅ | C₂F₅ | F | F | F | F | |
| n-C₃H₇ | C₂F₅ | F | F | F | F | |
| n-C₄H₉ | C₂F₅ | F | F | F | F | |
| n-C₅H₁₁ | C₂F₅ | F | F | F | F | |
| n-C₆H₁₃ | C₂F₅ | F | F | F | F | |
| H | C₃F₇ | H | H | F | F | |
| CH₃ | C₃F₇ | H | H | F | F | |
| C₂H₅ | C₃F₇ | H | H | F | F | |
| n-C₃H₇ | C₃F₇ | H | H | F | F | |
| n-C₄H₉ | C₃F₇ | H | H | F | F | |
| n-C₅H₁₁ | C₃F₇ | H | H | F | F | |
| n-C₆H₁₃ | C₃F₇ | H | H | F | F | |
| H | C₃F₇ | F | H | F | F | |
| CH₃ | C₃F₇ | F | H | F | F | |
| C₂H₅ | C₃F₇ | F | H | F | F | |
| n-C₃H₇ | C₃F₇ | F | H | F | F | |
| n-C₄H₉ | C₃F₇ | F | H | F | F | |
| n-C₅H₁₁ | C₃F₇ | F | H | F | F | |
| n-C₆H₁₃ | C₃F₇ | F | H | F | F | |
| H | C₃F₇ | F | F | F | F | |
| CH₃ | C₃F₇ | F | F | F | F | |
| C₂H₅ | C₃F₇ | F | F | F | F | |
| n-C₃H₇ | C₃F₇ | F | F | F | F | |
| n-C₄H₉ | C₃F₇ | F | F | F | F | |
| n-C₅H₁₁ | C₃F₇ | F | F | F | F | |
| n-C₆H₁₃ | C₃F₇ | F | F | F | F | |
| H | SF₅ | H | H | F | F | |
| CH₃ | SF₅ | H | H | F | F | |
| C₂H₅ | SF₅ | H | H | F | F | |
| n-C₃H₇ | SF₅ | H | H | F | F | |
| n-C₄H₉ | SF₅ | H | H | F | F | |
| n-C₅H₁₁ | SF₅ | H | H | F | F | |
| n-C₆H₁₃ | SF₅ | H | H | F | F | |
| H | SF₅ | F | H | F | F | |
| CH₃ | SF₅ | F | H | F | F | |
| C₂H₅ | SF₅ | F | H | F | F | |
| n-C₃H₇ | SF₅ | F | H | F | F | |
| n-C₄H₉ | SF₅ | F | H | F | F | |
| n-C₅H₁₁ | SF₅ | F | H | F | F | |
| n-C₆H₁₃ | SF₅ | F | H | F | F | |
| H | SF₅ | F | F | F | F | |
| CH₃ | SF₅ | F | F | F | F | |
| C₂H₅ | SF₅ | F | F | F | F | |
| n-C₃H₇ | SF₅ | F | F | F | F | K 110 N (83,4) I; |
| | | | | | | △ε = 33,8; Δn = 0,121 I |
| n-C₄H₉ | SF₅ | F | F | F | F | |
| n-C₅H₁₁ | SF₅ | F | F | F | F | |
| n-C₆H₁₃ | SF₅ | F | F | F | F | |
| H | CN | H | H | F | F | |
| CH₃ | CN | H | H | F | F | |
| C₂H₅ | CN | H | H | F | F | |
| n-C₃H₇ | CN | H | H | F | F | |
| n-C₄H₉ | CN | H | H | F | F | |
| n-C₅H₁₁ | CN | H | H | F | F | |
| n-C₆H₁₃ | CN | H | H | F | F | |
| H | CN | F | H | F | F | |
| CH₃ | CN | F | H | F | F | |
| C₂H₅ | CN | F | H | F | F | |
| n-C₃H₇ | CN | F | H | F | F | |
| n-C₄H₉ | CN | F | H | F | F | |
| n-C₅H₁₁ | CN | F | H | F | F | |
| n-C₆H₁₃ | CN | F | H | F | F | |
| H | CN | F | F | F | F | |
| CH₃ | CN | F | F | F | F | |
| C₂H₅ | CN | F | F | F | F | K 98 N_{Re} (71) Sc (84) |
| | | | | | | N 127,6I |
| | | | | | | Δs = 67,8; △n = 0,1459 |
| n-C₃H₇ | CN | F | F | F | F | K 75 S_{c}? (65) N 144,1 I |
| | | | | | | Δn = 0,1561; As = 66,5 |
| n-C₄H₉ | CN | F | F | F | F | K 79 N 139,3 I; |
| | | | | | | Δε = 64,2; Δn = 0,1477 |
| n-C₅H₁₁ | CN | F | F | F | F | K 65 S_{c} (44) N 141,5 I; |
| | | | | | | Δε = 61,8; △n = 0,1490 |
| n-C₆H₁₃ | CN | F | F | F | F | |
| n-C₇H₁₅ | CN | F | F | F | F | K 51 N 130,8 I; |
| | | | | | | Δε = 58,4; △n = 0,1459 |
| H | CF₃ | H | H | F | F | |
| C₂Hs | CF₃ | H | H | F | F | |
| n-C₃H₇ | CF₃ | H | H | F | F | K 95 N (87,5) I; |
| | | | | | | Δε = 31,5; △n = 0,1330 |
| n-C₄H₉ | CF₃ | H | H | F | F | |
| n-C₅H₁₁ | CF₃ | H | H | F | F | |
| n-C₆H₁₃ | CF₃ | H | H | F | F | |
| CH₂=CH | CF₃ | H | H | F | F | |
| H | CF₃ | F | F | F | F | |
| C₂H₅ | CF₃ | F | F | F | F | |
| n-C₃H₇ | CF₃ | F | F | F | F | K 91 I; |
| | | | | | | Δn = 0,1190; Δε = 40,8 |
| n-C₄H₉ | CF₃ | F | F | F | F | |
| n-C₅H₁₁ | CF₃ | F | F | F | F | |
| n-C₆H₁₃ | CF₃ | F | F | F | F | |
| CH₂=CH | CF₃ | F | F | F | F | |
| H | F | H | H | F | F | |
| C₂H₅ | F | H | H | F | F | |
| n-C₃H₇ | F | H | H | F | F | |
| n-C₄H₉ | F | H | H | F | F | |
| n-C₅H₁₁ | F | H | H | F | F | |
| n-C₆H₁₃ | F | H | H | F | F | |
| CH₂=CH | F | H | H | F | F | |

### Beispiel 3

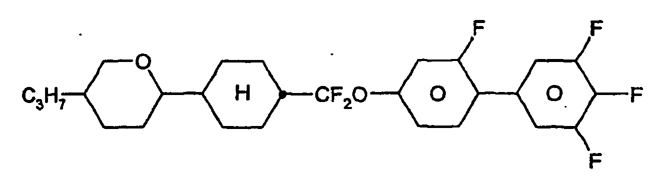

### Schritt 3.1

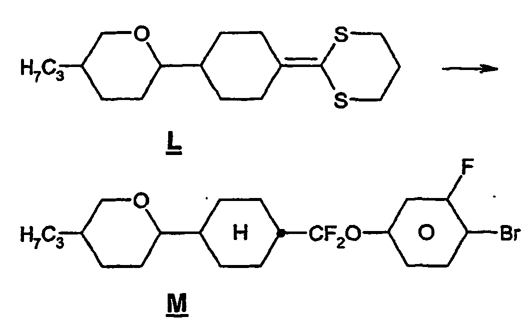

Eine Lösung von 61,2 mmol **L** in 500 ml CH₂Cl₂ wird bei -20 °C tropfenweise mit 62,7 mmol Trifluormethansulfonsäure versetzt. Man lässt für 30 min auf Raumtemperatur kommen und kühlt dann auf -70 °C. Nun werden zuerst eine Lösung von 91 mmol 4-Brom-3-fluorphenol und 101 mmol Triethylamin in 200 ml CH₂Cl₂, 5 min später 310 mmol Triethylamin-Tris(hydrofluorid) zugegeben. Nach weiteren 5 min gibt man in kleinen Portionen eine Suspension von 315 mmol 1,3-Dibrom-5,5-dimethylhydanthoin zu und rührt 1 h bei -70 °C nach. Man lässt auf -10 °C kommen und gießt die Reaktionsmischung in eiskalte NaOH. Man arbeitet wie üblich wässrig auf und reinigt das Rohprodukt durch Chromatographie an Kieselgel (Heptan/MTB-Ether 4:1) und Kristallisation aus Ethanol bei -20 °C.

### Schritt 3.2

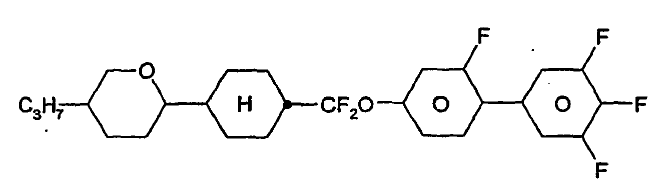

Eine Mischung aus 50 mmol **M**, 50 mmol 3,4,5-Trifluorbenzolboronsäure, 2,5 mmol Pd(PPh₃)₄, 300 ml Toluol und 300 ml Na-Boratpuffer (pH=9) wird 18 h bei 80 °C gerührt. Man gießt die Mischung in 500 ml 0,1 N HCl, extrahiert das Produkt mit CH₂Cl₂, trocknet über Na₂SO₄ und rotiert zur Trockene ein. Das Rohprodukt wird in n-Heptan über Kieselgel chromatographiert und anschließend bei -20 °C aus n-Heptan umkristallisiert. K 61 N 191,8 I; Δn = 0,1220; Δε = 19,1

Analog werden die folgenden Verbindungen der Formel 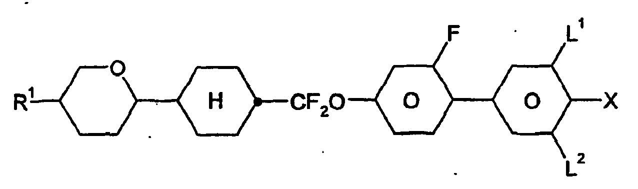 hergestellt:

| R¹ | X | L¹ | L² | |
|---|---|---|---|---|
| H F | | H | H | |
| CH₃ | F | H | H | |
| C₂H₅ | F | H | H | |
| n-C₃H₇ | F | H | H | K 84 N 232,4 I; |
| | | | | Δε = 9,4; Δn = 0,1390 |
| n-C₄H₉ | F | H | H | |
| n-C₅H₁₁ | F | H | H | |
| n-C₆H₁₃ | F | H | H | |
| H | F | F | H | |
| CH₃ | F | F | H | |
| C₂H₅ | F | F | H | |
| n-C₃H₇ | F | F | H | K 44 S_{M}? 45 N 212,6 I; |
| | | | | Δε = 13,4; Δn = 0,1328 |
| n-C₄H₉ | F | F | H | |
| n-C₅H₁₁ | F | F | H | |
| n-C₆H₁₃ | F | F | H | |
| H | F | F | F | |
| CH₃ | F | F | F | |
| C₂H₅ | F | F | F | |
| n-C₄H₉ | F | F | F | |
| n-C₅H₁₁ | F | F | F | |
| n-C₆H₁₃ | F | F | F | |
| H | Cl | H | H | |
| CH₃ | Cl | H | H | |
| C₂H₅ | Cl | H | H | |
| n-C₃H₇ | Cl | H | H | |
| n-C₄H₉ | Cl | H | H | |
| n-C₅H₁₁ | Cl | H | H | |
| n-C₆H₁₃ | Cl | H | H | |
| H | Cl | F | H | |
| CH₃ | Cl | F | H | |
| C₂H₅ | Cl | F | H | |
| n-C₃H₇ | Cl | F | H | |
| n-C₄H₉ | Cl | F | H | |
| n-C₅H₁₁ | Cl | F | H | |
| n-C₆H₁₃ | Cl | F | H | |
| H | Cl | F | F | |
| CH₃ | Cl | F | F | |
| C₂H₅ | Cl | F | F | |
| n-C₃H₇ | Cl | F | F | |
| n-C₄H₉ | Cl | F | F | |
| n-C₅H₁₁ | Cl | F | F | |
| n-C₆H₁₃ | Cl | F | F | |
| H | OCF₃ | H | H | |
| CH₃ | OCF₃ | H | H | |
| C₂H₅ | OCF₃ | H | H | |
| n-C₃H₇ | OCF₃ | H | H | |
| n-C₄H₉ | OCF₃ | H | H | |
| n-C₅H₁₁ | OCF₃ | H | H | |
| n-C₆H₁₃ | OCF₃ | H | H | |
| H | OCF₃ | F | H | |
| CH₃ | OCF₃ | F | H | |
| C₂H₅ | OCF₃ | F | H | |
| n-C₃H₇ | OCF₃ | F | H | |
| n-C₄H₉ | OCF₃ | F | H | |
| n-C₅H₁₁ | OCF₃ | F | H | |
| n-C₆H₁₃ | OCF₃ | F | H | |
| H | OCF₃ | F | F | |
| CH₃ | OCF₃ | F | F | |
| C₂H₅ | OCF₃ | F | F | |
| n-C₃H₇ | OCF₃ | F | F | |
| n-C₄H₉ | . OCF₃ | F | F | |
| n-C₅H₁₁ | OCF₃ | F | F | |
| n-C₆H₁₃ | OCF₃ | F | F | |
| H | OCHF₂ | H | H | |
| CH₃ | OCHF₂ | H | H | |
| C₂H₅ | OCHF₂ | H | H | |
| n-C₃H₇ | OCHF₂ | H | H | |
| n-C₄H₉ | OCHF₂ | H | H | |
| n-C₅H₁₁ | OCHF₂ | H | H | |
| n-C₆H₁₃ | OCHF₂ | H | H | |
| H | OCHF₂ | F | H | |
| CH₃ | OCHF₂ | F | H | |
| C₂H₅ | OCHF₂ | F | H | |
| n-C₃H₇ | OCHF₂ | F | H | |
| n-C₄H₉ | OCHF₂ | F | H | |
| n-C₅H₁₁ | OCHF₂ | F | H | |
| n-C₆H₁₃ | OCHF₂ | F | H | |
| H | OCHF₂ | F | F | |
| CH₃ | OCHF₂ | F | F | |
| C₂H₅ | OCHF₂ | F | F | |
| n-C₃H₇ | OCHF₂ | F | F | |
| n-C₄H₉ | OCHF₂ | F | F | |
| n-C₅H₁₁ | OCHF₂ | F | F | |
| n-C₆H₁₃ | OCHF₂ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₆H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄Hg | OCHFCF₃ | F | H | |
| n-C₅H₁₁ | OCHFCF₃ | F | H | |
| n-C₆H₁₃ | OCHFCF₃ | F | H | |
| H | OCHFCF₃ | F | F | |
| CH₃ | OCHFCF₃ | F | F | |
| C₂Hs | OCHFCF₃ | F | F | |
| n-C₃H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₆H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄H₉ | OCHFCF₃ | F | H | |
| n=C₅H₁₁ | OCHFCF₃ | F | H | |
| n-C₆H₁₃ | OCHFCF₃ | F | H | |
| H | OCHFCF₃ | F | F | |
| CH₃ | OCHFCF₃ | F | F | |
| C₂H₅ | OCHFCF₃ | F | F | |
| n-C₃H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCF₂CHFCF₃ | H | H | |
| CH₃ | OCF₂CHFCF₃ | H | H | |
| C₂H₅ | OCF₂CHFCF₃ | H | H | |
| n-C₃H₇ | OCF₂CHFCF₃ | H | H | |
| n-C₄H₉ | OCF₂CHFCF₃ | H | H | |
| n-C₅H₁₁ | OCF₂CHFCF₃ | H | H | |
| n-C₆H₁₃ | OCF₂CHFCF₃ | H | H | |
| H | OCF₂CHFCF₃ | F | H | |
| CH₃ | OCF₂CHFCF₃ | F | H | |
| C₂H₅ | OCF₂CHFCF₃ | F | H | |
| n-C₃H₇ | OCF₂CHFCF₃ | F | H | |
| n-C₄H₉ | OCF₂CHFCF₃ | F | H | |
| n-C₅H₁₁ | OCF₂CHFCF₃ | F | H | |
| n-C₆H₁₃ | OCF₂CHFCF₃ | F | H | |
| H | OCF₂CHFCF₃ | F | F | |
| CH₃ | OCF₂CHFCF₃ | F | F | |
| C₂H₅ | OCF₂CHFCF₃ | F | F | |
| n-C₃H₇ | OCF₂CHFCF₃ | F | F | |
| n-C₄H₉ | OCF₂CHFCF₃ | F | F | |
| n-C₅H₁₁ | OCF₂CHFCF₃ | F | F | |
| n-C₆H₁₃ | OCF₂CHFCF₃ | F | F | |
| H | NCS | H | H | |
| CH₃ | NCS | H | H | |
| C₂H₅ | NCS | H | H | |
| n-C₃H₇ | NCS | H | H | |
| n-C₄H₉ | NCS | H | H | |
| n-C₅H₁₁ | NCS | H | H | |
| n-C₆H₁₃ | NCS | H | H | |
| H | NCS | F | H | |
| CH₃ | NCS | F | H | |
| C₂H₅ | NCS | F | H | |
| n-C₃H₇ | NCS | F | H | |
| n-C₄H₉ | NCS | F | H | |
| n-C₅H₁₁ | NCS | F | H | |
| n-C₆H₁₃ | NCS | F | H | |
| H | NCS | F | F | |
| CH₃ | NCS | F | F | |
| C₂H₅ | NCS | F | F | |
| n-C₃H₇ | NCS | F | F | |
| n-C₄H₉ | NCS | F | F | |
| n-C₅H₁₁ | NCS | F | F | |
| n-C₆H₁₃ | NCS | F | F | |
| H | C₂F₅ | H | H | |
| CH₃ | C₂F₅ | H | H | |
| C₂H₅ | C₂F₅ | H | H | |
| n-C₃H₇ | C₂F₅ | H | H | |
| n-C₄H₉ | C₂F₅ | H | H | |
| n-C₅H₁₁ | C₂F₅ | H | H | |
| n-C₆H₁₃ | C₂F₅ | H | H | |
| H | C₂F₅ | F | H | |
| CH₃ | C₂F₅ | F | H | |
| C₂H₅ | C₂F₅ | F | H | |
| n-C₃H₇ | C₂F₅ | F | H | |
| n-C₄H₉ | C₂F₅ | F | H | |
| n-C₅H₁₁ | C₂F₅ | F | H | |
| n-C₆H₁₃ | C₂F₅ | F | H | |
| H | C₂F₅ | F | F | |
| CH₃ | C₂F₅ | F | F | |
| C₂H₅ | C₂F₅ | F | F | |
| n-C₃H₇ | C₂F₅ | F | F | |
| n-C₄H₉ | C₂F₅ | F | F | |
| n-C₅H₁₁ | C₂F₅ | F | F | |
| n-C₆H₁₃ | C₂F₅ | F | F | |
| H | C₃F₇ | H | H | |
| CH₃ | C₃F₇ | H | H | |
| C₂H₅ | C₃F₇ | H | H | |
| n-C₃H₇ | C₃F₇ | H | H | |
| n-C₄H₉ | C₃F₇ | H | H | |
| n-C₅H₁₁ | C₃F₇ | H | H | |
| n-C₆H₁₃ | C₃F₇ | H | H | |
| H | C₃F₇ | F | H | |
| CH₃ | C₃F₇ | F | H | |
| C₂H₅ | C₃F₇ | F | H | |
| _{n-C3H7} | C₃F₇ | F | H | |
| n-C₄H₉ | C₃F₇ | F | H | |
| n-C₅H₁₁ | C₃F₇ | F | H | |
| n-C₆H₁₃ | C₃F₇ | F | H | |
| H | C₃F₇ | F | F | |
| CH₃ | C₃F₇ | F | F | |
| C₂H₅ | C₃F₇ | F | F | |
| n-C₃H₇ | C₃F₇ | F | F | |
| n-C₄H₉ | C₃F₇ | F | F | |
| n-C₅H₁₁ | C₃F₇ | F | F | |
| n-C₆H₁₃ | C₃F₇ | F | F | |
| H | SF₅ | H | H | |
| CH₃ | SF₅ | H | H | |
| C₂H₅ | SF₅ | H | H | |
| n-C₃H₇ | SF₅ | H | H | |
| n-C₄H₉ | SF₅ | H | H | |
| n-C₅H₁₁ | SF₅ | H | H | |
| n-C₆H₁₃ | SF₅ | H | H | |
| H | SF₅ | F | H | |
| CH₃ | SF₅ | F | H | |
| C₂H₅ | SF₅ | F | H | |
| n-C₃H₇ | SF₅ | F | H | |
| n-C₄H₉ | SF₅ | F | H | |
| n-C₅H₁₁ | SF₅ | F | H | |
| n-C₆H₁₃ | SF₅ | F | H | |
| H | SF₅ | F | F | |
| CH₃ | SF₅ | F | F | |
| C₂H₅ | SF₅ | F | F | |
| n-C₃H₇ | SF₅ | F | F | |
| n-C₄H₉ | SF₅ | F | F | |
| n-C₅H₁₁ | SF₅ | F | F | |
| n-C₆H₁₃ | SF₅ | F | F | |
| H | CN | H | H | |
| CH₃ | CN | H | H | |
| C₂H₅ | CN | H | H | |
| n-C₃H₇ | CN | H | H | |
| n-C₄H₉ | CN | H | H | |
| n-C₅H₁₁ | CN | H | H | |
| n-C₆H₁₃ | CN | H | H | |
| H | CN | F | H | |
| CH₃ | CN | F | H | |
| C₂H₅ | CN | F | H | |
| n-C₃H₇ | CN | F | H | |
| n-C₄H₉ | CN | F | H | |

### Beispiel 4

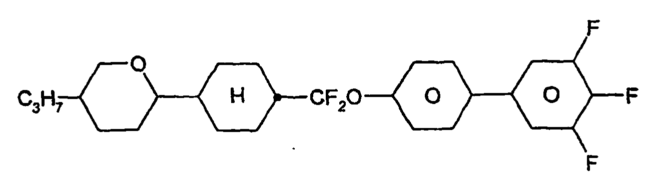

### Schritt 4.1

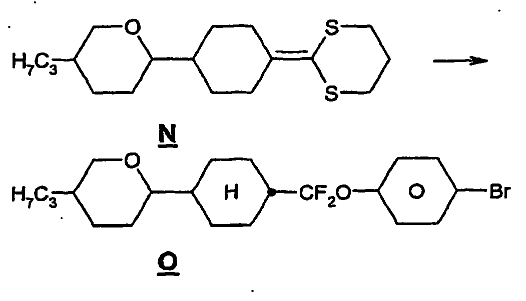

Eine Lösung von 61,2 mmol **N** in 500 ml CH₂Cl₂ wird bei -20 °C tropfenweise mit 62,7 mmol Trifluormethansulfonsäure versetzt. Man lässt für 30 min auf Raumtemperatur kommen und kühlt dann auf -70 °C. Nun werden zuerst eine Lösung von 91 mmol 4-Brom-phenol und 101 mmol Triethylamin in 200 ml CH₂Cl₂, 5 min später 310 mmol Triethylamin-Tris(hydrofluorid) zugegeben. Nach weiteren 5 min gibt man in kleinen Portionen eine Suspension von 315 mmol 1,3-Dibrom-5,5-dimethylhydanthoin zu und rührt 1 h bei -70 °C nach. Man lässt auf -10 °C kommen und gießt die Reaktionsmischung in eiskalte NaOH. Man arbeitet wie üblich wässrig auf und reinigt das Rohprodukt durch Chromatographie an Kieselgel (Heptan/MTB-Ether 4:1) und Kristallisation aus Ethanol bei -20 °C.

### Schritt 4.2

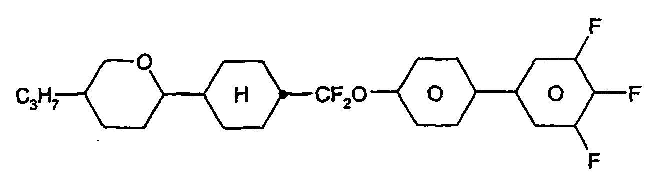

Eine Mischung aus 50 mmol **O**, 50 mmol 3,4,5-Trifluorbenzolboronsäure, 2,5 mmol Pd(PPh₃)₄, 300 ml Toluol und 300 ml Na-Boratpuffer (pH=9) wird 18 h bei 80 °C gerührt. Man gießt die Mischung in 500 ml 0,1 N HCl, extrahiert das Produkt mit CH₂Cl₂, trocknet über Na₂SO₄ und rotiert zur Trockene ein. Das Rohprodukt wird in n-Heptan über Kieselgel chromatographiert und anschließend bei -20 °C aus n-Heptan umkristallisiert. K 60 S_{B} 81 N 206,6 I; Δn =0,1291; Δε = 15,7

Analog werden die folgenden Verbindungen der Formel 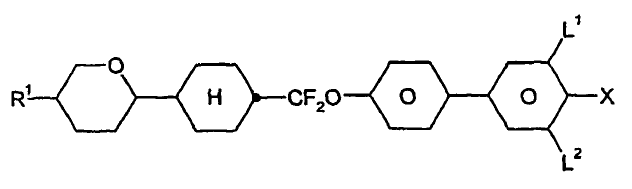 hergestellt:

| R¹ | X | L¹ | L² | |
|---|---|---|---|---|
| H | F | H | H | |
| CH₃ | F | H | H | |
| C₂H₅ | F | H | H | |
| n-C₃H₇ | F | H | H | |
| n-C₄H₉ | F | H | H | |
| n-C₅H₁₁ | F | H | H | |
| n-C₆H₁₃ | F | H | H | |
| H | F | F | H | |
| CH₃ | F | F | H | |
| C₂H₅ | F | F | H | |
| n-C₃H₇ | F | F | H | K 47 S_{B} 91 N 238,0 I; |
| | | | | Δε = 10,7; Δn = 0,1370 |
| n-C₄H₉ | F | F | H | |
| n-C₅H₁₁ | F | F | H | |
| n-C₆H₁₃ | F | F | H | |
| H | F | F | F | |
| CH₃ | F | F | F | |
| C₂H₅ | F | F | F | |
| n-C₄H₉ | F | F | F | |
| n-C₅H₁₁ | F | F | F | |
| n-C₆H₁₃ | F | F | F | |
| H | Cl | H | H | |
| CH₃ | Cl | H | H | |
| C₂H₅ | Cl | H | H | |
| n-C₃H₇ | Cl | H | H | |
| n-C₄H₉ | Cl | H | H | |
| n-C₅H₁₁ | Cl | H | H | |
| n-C₆H₁₃ | Cl | H | H | |
| H | Cl | F | H | |
| CH₃ | Cl | F | H | |
| C₂H₅ | Cl | F | H | |
| n-C₃H₇ | Cl | F | H | |
| n-C₄H₉ | Cl | F | H | |
| n-C₅H₁₁ | Cl | F | H | |
| n-C₆H₁₃ | Cl | F | H | |
| H | Cl | F | F | |
| CH₃ | Cl | F | F | |
| C₂H₅ | Cl | F | F | |
| n-C₃H₇ | Cl | F | F | |
| n-C₄H₉ | Cl | F | F | |
| n-C₅H₁₁ | Cl | F | F | |
| n-C₆H₁₃ | Cl | F | F | |
| H | OCF₃ | H | H | |
| CH₃ | OCF₃ | H | H | |
| C₂H₅ | OCF₃ | H | H | |
| n-C₃H₇ | OCF₃ | H | H | |
| n-C₄H₉ | OCF₃ | H | H | |
| n-C₅H₁₁ | OCF₃ | H | H | |
| n-C₆H₁₃ | OCF₃ | H | H | |
| H | OCF₃. | F | H | |
| CH₃ | OCF₃ | F | H | |
| C₂H₅ | OCF₃ | F | H | |
| n-C₃H₇ | OCF₃ | F | H | |
| n-C₄H₉ | OCF₃ | F | H | |
| n-C₅H₁₁ | OCF₃ | F | H | |
| n-C₆H₁₃ | OCF₃ | F | H | |
| H | OCF₃ | F | F | |
| CH₃ | OCF₃ | F | F | |
| C₂H₅ | OCF₃ | F | F | |
| n-C₃H₇ | OCF₃ | F | F | |
| n-C₄H₉ | OCF₃ | F | F | |
| n-C₅H₁₁ | OCF₃ | F | F | |
| n-C₆H₁₃ | OCF₃ | F | F | |
| H | OCHF₂ | H | H | |
| CH₃ | OCHF₂ | H | H | |
| C₂H₅ | OCHF₂ | H | H | |
| n-C₃H₇ | OCHF₂ | H | H | |
| n-C₄H₉ | OCHF₂ | H | H | |
| n-C_{S}H₁₁ | OCHF₂ | H | H | |
| n-C₆H₁₃ | OCHF₂ | H | H | |
| H | OCHF₂ | F | H | |
| CH₃ | OCHF₂ | F | H | |
| C₂H₅ | OCHF₂ | F | H | |
| n-C₃H₇ | OCHF₂ | F | H | |
| n-C₄H₉ | OCHF₂ | F | H | |
| n-C₅H₁₁ | OCHF₂ | F | H | |
| n-C₆H₁₃ | OCHF₂ | F | H | |
| H | OCHF₂ | F | F | |
| CH₃ | OCHF₂ | F | F | |
| C₂H₅ | OCHF₂ | F | F | |
| n-C₃H₇ | OCHF₂ | F | F | |
| n-C₄H₉ | OCHF₂ | F | F | |
| n-C₅H₁₁ | OCHF₂ | F | F | |
| n-C₆H₁₃ | OCHF₂ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₆H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄H₉ | OCHFCF₃ | F | H | |
| n-C₅H₁₁ | OCHFCF₃ | F | H | |
| n-C₆H₁₃ | OCHFCF₃ | F | H | |
| H | OCHFCF₃ | F | F | |
| CH₃ | OCHFCF₃ | F | F | |
| C₂H₅ | OCHFCF₃ | F | F | |
| n-C₃H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCHFCF₃ | H | H | |
| CH₃ | OCHFCF₃ | H | H | |
| C₂H₅ | OCHFCF₃ | H | H | |
| n-C₃H₇ | OCHFCF₃ | H | H | |
| n-C₄H₉ | OCHFCF₃ | H | H | |
| n-C₅H₁₁ | OCHFCF₃ | H | H | |
| n-C₆H₁₃ | OCHFCF₃ | H | H | |
| H | OCHFCF₃ | F | H | |
| CH₃ | OCHFCF₃ | F | H | |
| C₂H₅ | OCHFCF₃ | F | H | |
| n-C₃H₇ | OCHFCF₃ | F | H | |
| n-C₄H₉ | OCHFCF₃ | F | H | |
| n-C₅H₁₁ | OCHFCF₃ | F | H | |
| n-C₆H₁₃ | OCHFCF₃ | F | H | |
| H | OCHFCF₃ | F | F | |
| CH₃ | OCHFCF₃ | F | F | |
| C₂H₅ | OCHFCF₃ | F | F | |
| n-C₅H₇ | OCHFCF₃ | F | F | |
| n-C₄H₉ | OCHFCF₃ | F | F | |
| n-C₅H₁₁ | OCHFCF₃ | F | F | |
| n-C₆H₁₃ | OCHFCF₃ | F | F | |
| H | OCF₂CHFCF₃ | H | H | |
| CH₃ | OCF₂CHFCF₃ | H | H | |
| C₂H₅ | OCF₂CHFCF₃ | H | H | |
| n-C₃H₇ | OCF₂CHFCF₃ | H | H | |
| n-C₄H₉ | OCF₂CHFCF₃ | H | H | |
| n-C₅H₁₁ | OCF₂CHFCF₃ | H | H | |
| n-C₆H₁₃ | OCF₂CHFCF₃ | H | H | |
| H | OCF₂CHFCF₃ | F | H | |
| CH₃ | OCF₂CHFCF₃ | F | H | |
| C₂H₅ | OCF₂CHFCF₃ | F | H | |
| n-C₃H₇ | OCF₂CHFCF₃ | F | H | |
| n-C₄H₉ | OCF₂CHFCF₃ | F | H | |
| n-C₅H₁₁ | OCF₂CHFCF₃ | F | H | |
| n-C₆H₁₃ | OCF₂CHFCF₃ | F | H | |
| H | OCF₂CHFCF₃ | F | F | |
| CH₃ | OCF₂CHFCF₃ | F | F | |
| C₂H₅ | OCF₂CHFCF₃ | F | F | |
| n-C₃H₇ | OCF₂CHFCF₃ | F | F | |
| n-C₄H₉ | OCF₂CHFCF₃ | F | F | |
| n-C₅H₁₁ | OCF₂CHFCF₃ | F | F | |
| n-C₆H₁₃ | OCF₂CHFCF₃ | F | F | |
| H | NCS | H | H | |
| CH₃ | NCS | H | H | |
| C₂H₅ | NCS | H | H | |
| n-C₃H₇ | NCS | H | H | |
| n-C₄H₉ | NCS | H | H | |
| n-C₅H₁₁ | NCS | H | H | |
| n-C₆H₁₃ | NCS | H | H | |
| H | NCS | F | H | |
| CH₃ | NCS | F | H | |
| C₂H₅ | NCS | F | H | |
| n-C₃H₇ | NCS | F | H | |
| n-C₄H₉ | NCS | F | H | |
| n-C₅H₁₁ | NCS | F | H | |
| n-C₆H₁₃ | NCS | F | H | |
| H | NCS | F | F | |
| CH₃ | NCS | F | F | |
| C₂H₅ | NCS | F | F | |
| n-C₃H₇ | NCS | F | F | |
| n-C₄H₉ | NCS | F | F | |
| n-C₅H₁₁ | NCS . | F | F | |
| n-C₆H₁₃ | NCS | F | F | |
| H | C₂F₅ | H | H | |
| CH₃ | C₂F₅ | H | H | |
| C₂H₅ | C₂F₅ | H | H | |
| n-C₃H₇ | C₂F₅ | H | H | |
| n-C₄H₉ | C₂F₅ | H | H | |
| n-C₅H₁₁ | C₂F₅ | H | H | |
| n-C₆H₁₃ | C₂F₅ | H | H | |
| H | C₂F₅ | F | H | |
| CH₃ | C₂F₅ | F | H | |
| C₂H₅ | C₂F₅ | F | H | |
| n-C₃H₇ | C₂F₅ | F | H | |
| n-C₄H₉ | C₂F₅ | F | H | |
| n-C₅H₁₁ | C₂F₅ | F | H | |
| n-C₆H₁₃ | C₂F₅ | F | H | |
| H | C₂F₅ | F | F | |
| CH₃ | C₂F₅ | F | F | |
| C₂H₅ | C₂F₅ | F | F | |
| n-C₃H₇ | C₂F₅ | F | F | |
| n-C₄H₉ | C₂F₅ | F | F | |
| n-C₅H₁₁ | C₂F₅ | F | F | |
| n-C₆H₁₃ | C₂F₅ | F | F | |
| H | C₃F₇ | H | H | |
| CH₃ | C₃F₇ | H | H | |
| C₂H₅ | C₃F₇ | H | H | |
| n-C₃H₇ | C₃F₇ | H | H | |
| n-C₄H₉ | C₃F₇ | H | H | |
| n-C₅H₁₁ | C₃F₇ | H | H | |
| n-C₆H₁₃ | C₃F₇ | H | H | |
| H | C₃F₇ | F | H | |
| CH₃ | C₃F₇ | F | H | |
| C₂H₅ | C₃F₇ | F | H | |
| n-C₃H₇ | C₃F₇ | F | H | |
| n-C₄H₉ | C₃F₇ | F | H | |
| n-C₅H₁₁ | C₃F₇ | F | H | |
| n-C₆H₁₃ | C₃F₇ | F | H | |
| H | C₃F₇ | F | F | |
| CH₃ | C₃F₇ | F | F | |
| C₂H₅ | C₃F₇ | F | F | |
| n-C₃H₇ | C₃F₇ | F | F | |
| n-C₄H₉ | C₃F₇ | F | F | |
| n-C₅H₁₁ | C₃F₇ | F | F | |
| n-C₆H₁₃ | C₃F₇ | F | F | |
| H | SF₅ | H | H | |
| CH₃ | SF₅ | H | H | |
| C₂H₅ | SF₅ | H | H | |
| n-C₃H₇ | SF₅ | H | H | |
| n-C₄H₉ | SF₅ | H | H | |
| n-C₅H₁₁ | SF₅ | H | H | |
| n-C₆H₁₃ | SF₅ | H | H | |
| H | SF₅ | F | H | |
| CH₃ | SF₅ | F | H | |
| C₂H₅ | SF₅ | F | H | |
| n-C₃H₇ | SF₅ | F | H | |
| n-C₄H₉ | SF₅ | F | H | |
| n-C₅H₁₁ | SF₅ | F | H | |
| n-C₆H₁₃ | SF₅ | F | H | |
| H | SF₅ | F | F | |
| CH₃ | SF₅ | F | F | |
| C₂H₅ | SF₅ | F | F | |
| n-C₃H₇ | SF₅ | F | F | |
| n-C₄H₉ | SF₅ | F | F | |
| n-C₅H₁₁ | SF₅ | F | F | |
| n-C₆H₁₃ | SF₅ | F | F | |
| H | CN | H | H | |
| CH₃ | CN | H | H | |
| C₂H₅ | CN | H | H | |
| n-C₃H₇ | CN | H | H | |
| n-C₄H₉ | CN | H | H | |
| n-C₅H₁₁ | CN | H | H | |
| n-C₆H₁₃ | CN | H | H | |

### Beispiel 5

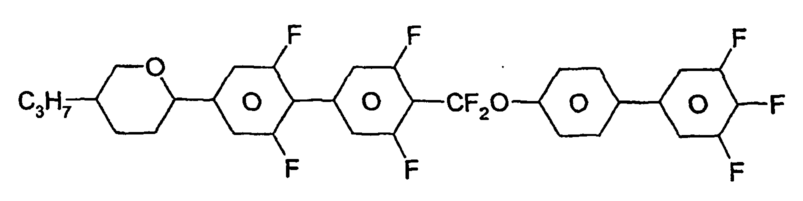

### Schritt 5.1 1

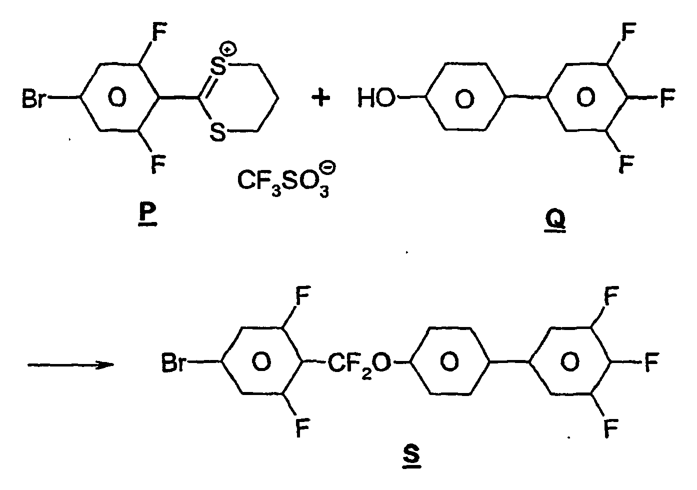

Zu einer auf -70 °C abgekühlten Lösung von 65 mmol **P** in 100 ml Dichlormethan wird ein Gemisch aus 98 mmol **Q** und 16,3 ml Triethylamin (117 mmol) in 80 ml Dichlormethan unter Rühren zugetropft. Nach beendeter Zugabe wird noch 1 h bei -70 °C gerührt. Anschließend wird mit 325 mmol Triethylamintrishydrofluorid bei derselben Temperatur tropfenweise versetzt. Anschließend werden 325 mmol Brom bei -70 °C tropfenweise zugegeben. Nach 1 h Rühren bei -70 °C lässt man auf -10 °C erwärmen und gießt das Reaktionsgemisch in eine Mischung aus 500 ml Eiswasser und 95 ml 32%ige Natronlauge. Die Phasen werden getrennt und die wässrige Phase wird mit Dichlormethan extrahiert. Die vereinigten organischen Phasen werden wie üblich aufgearbeitet.

### Schritt 5.2

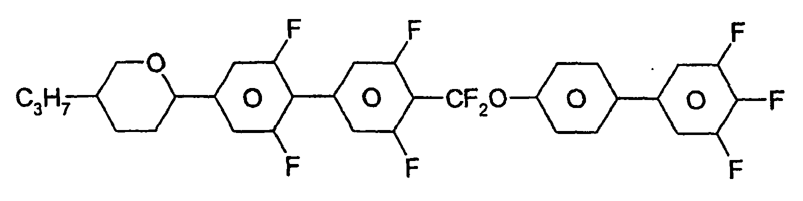

Eine Mischung aus 10 mmol **S** und 10 mmol 2,6-Difluor-4-(trans-5'-propyltetrahydropyranyl-(2))-phenylboronsäure in 60 ml Toluol und 60 ml Natriumborat-Puffertösung (pH = 9) wird mit 0,5 mmol Pd(PPh₃)₄ unter Rühren 16 h bei 80 °C erwärmt. Nach dem Erkalten wird das zweiphasige Reaktionsgemisch unter Rühren auf 100 ml 0,1 N HCl gegossen, die organische Phase abgetrennt und die wässrige Phase mit Toluol zweimal extrahiert. Die vereinigten Toluolphasen werden nach dem Trocknen eingedampft, und der Rückstand wird über Kieselgel (Heptan/Methyl-tert.-butylether) filtriert. Zuletzt wird erst aus Ethanol und dann aus n-Heptan umkristallisiert.
K 115 N 197,7 I; Δε = 35,4; An = 0,1706

Analog werden die folgenden Verbindungen der Formel 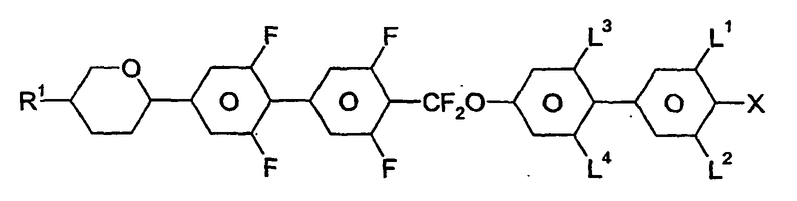 hergestellt.

| R¹ | X | L¹ | L² | L³ | L⁴ | |
|---|---|---|---|---|---|---|
| H | F | H | H | H | H | |
| CH₃ | F | H | H | H | H | |
| C₂H₅ | F | H | H | H | H | |
| C₃H₇ | F | H | H | H | H | |
| n-C₄H₉ | F | H | H | H | H | |
| n-C₅H₁₁ | F | H | H | H | H | |
| n-C₆H₁₃ | F | H | H | H | H | |
| H | F | F | H | H | H | |
| CH₃ | F | F | H | H | H | |
| C₂H₅ | F | F | H | H | H | |
| n-C₃H₇ | F | F | H | H | H | |
| n-C₄H₉ | F | F | H | H | H | |
| n-C₅H₁₁ | F | F | H | H | H | |
| n-C₆H₁₃ | F | F | H | H | H | |
| H | F | F | F | H | H | |
| CH₃ | F | F | F | H | H | |
| n-C₄H₉ | F | F | F | H | H | |
| n-C₅H₁₁ | F | F | F | H | H | |
| n-C₆H₁₃ | F | F | F | H | H | |
| H | Cl | H | H | H | H | |
| CH₃ | Cl | H | H | H | H | |
| C₂H₅ | Cl | H | H | H | H | |
| n-C₃H₇ | Cl | H | H | H | H | |
| n-C₄H₉ | Cl | H | H | H | H | |
| n-C₅H₁₁ | Cl | H | H | H | H | |
| n-C₆H₁₃ | Cl | H | H | H | H | |
| H | Cl | F | H | H | H | |
| CH₃ | Cl | F | H | H | H | |
| C₂H₅ | Cl | F | H | H | H | |
| n-C₃H₇ | Cl | F | H | H | H | |
| n-C₄H₉ | Cl | F | H | H | H | |
| n-C₅H₁₁ | Cl | F | H | H | H | |
| n-C₆H₁₃ | Cl | F | H | H | H | |
| H | Cl | F | F | H | H | |
| CH₃ | Cl | F | F | H | H | |
| C₂H₅ | Cl | F | F | H | H | |
| n-C₃H₇ | Cl | F | F | H | H | |
| n-C₄H₉ | Cl | F | F | H | H | |
| n-C₅H₁₁ | Cl | F | F | H | H | |
| n-C₆H₁₃ | Cl | F | F | H | H | |
| H | OCF₃ | H | H | H | H | |
| CH₃ | OCF₃ | H | H | H | H | |
| C₂H₅ | OCF₃ | H | H | H | H | |
| n-C₃H₇ | OCF₃ | H | H | H | H | |
| n-C₄H₉ | OCF₃ | H | H | H | H | |
| n-C₅H₁₁ | OCF₃ | H | H | H | H | |
| n-C₆H₁₃ | OCF₃ | H | H | H | H | |
| H | OCF₃ | F | H | H | H | |
| CH₃ | OCF₃ | F | H | H | H | |
| C₂H₅ | OCF₃ | F | H | H | H | |
| n-C₃H₇ | OCF₃ | F | H | H | H | |
| n-C₄H₉ | OCF₃ | F | H | H | H | |
| n-C₅H₁₁ | OCF₃ | F | H | H | H | |
| n-C₆H₁₃ | OCF₃ | F | H | H | H | |
| H | OCF₃ | F | F | H | H | |
| CH₃ | OCF₃ | F | F | H | H | |
| C₂H₅ | OCF₃ | F | F | H | H | |
| n-C₃H₇ | OCF₃ | F | F | H | H | |
| n-C₄H₉ | OCF₃ | F | F | H | H | |
| n-C₅H₁₁ | OCF₃ | F | F | H | H | |
| n-C₆H₁₃ | OCF₃ | F | F | H | H | |
| H | OCHF₂ | H | H | H | H | |
| CH₃ | OCHF₂ | H | H | H | H | |
| C₂H₅ | OCHF₂ | H | H | H | H | |
| n-C₃H₇ | OCHF₂ | H | H | H | H | |
| n-C₄H₉ | OCHF₂ | H | H | H | H | |
| n-C₅H₁₁ | OCHF₂ | H | H | H | H | |
| n-C₆H₁₃ | OCHF₂ | H | H | H | H | |
| H | OCHF₂ | F | H | H | H | |
| CH₃ | OCHF₂ | F | H | H | H | |
| C₂H₅ | OCHF₂ | F | H | H | H | |
| n-C₃H₇ | OCHF₂ | F | H | H | H | |
| n-C₄H₉ | OCHF₂ | F | H | H | H | |
| n-C₅H₁₁ | OCHF₂ | F | H | H | H | |
| n-C₆H₁₃ | OCHF₂ | F | H | H | H | |
| H | OCHF₂ | F | F | H | H | |
| CH₃ | OCHF₂ | F | F | H | H | |
| C₂H₅ | OCHF₂ | F | F | H | H | |
| n-C₃H₇ | OCHF₂ | F | F | H | H | |
| n-C₄H₉ | OCHF₂ | F | F | H | H | |
| n-C₅H₁₁ | OCHF₂ | F | F | H | H | |
| n-C₆H₁₃ | OCHF₂ | F | F | H | H | |
| H | OCHFCF₃ | H | H | H | H | |
| CH₃ | OCHFCF₃ | H | H | H | H | |
| C₂H₅ | OCHFCF₃ | H | H | H | H | |
| n-C₃H₇ | OCHFCF₃ | H | H | H | H | |
| n-C₄H₉ | OCHFCF₃ | H | H | H | H | |
| n-C₅H₁₁ | OCHFCF₃ | H | H | H | H | |
| n-C₆H₁₃ | OCHFCF₃ | H | H | H | H | |
| H | OCHFCF₃ | F | H | H | H | |
| CH₃ | OCHFCF₃ | F | H | H | H | |
| C₂H₅ | OCHFCF₃ | F | H | H | H | |
| n-C₃H₇ | OCHFCF₃ | F | H | H | H | |
| n-C₄H₉ | OCHFCF₃ | F | H | H | H | |
| n-C₅H₁₁ | OCHFCF₃ | F | H | H | H | |
| n-C₆H₁₃ | OCHFCF₃ | F | H | H | H | |
| H | OCHFCF₃ | F | F | H | H | |
| CH₃ | OCHFCF₃ | F | F | H | H | |
| C₂H₅ | OCHFCF₃ | F | F | H | H | |
| n-C₃H₇ | OCHFCF₃ | F | F | H | H | |
| n-C₄H₉ | OCHFCF₃ | F | F | H | H | |
| n-C₅H₁₁ | OCHFCF₃ | F | F | H | H | |
| n-C₆H₁₃ | OCHFCF₃ | F | F | H | H | |
| H | OCHFCF₃ | H | H | H | H | |
| CH₃ | OCHFCF₃ | H | H | H | H | |
| C₂H₅ | OCHFCF₃ | H | H | H | H | |
| n-C₃H₇ | OCHFCF₃ | H | H | H | H | |
| n-C₄H₉ | OCHFCF₃ | H | H | H | H | |
| n-C₅H₁₁ | OCHFCF₃ | H | H | H | H | |
| n-C₆H₁₃ | OCHFCF₃ | H | H | H | H | |
| H | OCHFCF₃ | F | H | H | H | |
| CH₃ | OCHFCF₃ | F | H | H | H | |
| C₂H₅ | OCHFCF₃ | F | H | H | H | |
| n-C₃H₇ | OCHFCF₃ | F | H | H | H | |
| n-C₄Hg. | OCHFCF₃ | F | H | H | H | |
| n-C₅H₁₁ | OCHFCF₃ | F | H | H | H | |
| n-C₆H₁₃ | OCHFCF₃ | F | H | H | H | |
| H | OCHFCF₃ | F | F | H | H | |
| CH₃ | OCHFCF₃ | F | F | H | H | |
| C₂H₅ | OCHFCF₃ | F | F | H | H | |
| n-C₃H₇ | OCHFCF₃ | F | F | H | H | |
| n-C₄H₉ | OCHFCF₃ | F | F | H | H | |
| n-C₅H₁₁ | OCHFCF₃ | F | F | H | H | |
| n-C₆H₁₃ | OCHFCF₃ | F | F | H | H | |
| H | OCF₂CHFCF₃ | H | H | H | H | |
| CH₃ | OCF₂CHFCF₃ | H | H | H | H | |
| C₂H₅ | OCF₂CHFCF₃ | H | H | H | H | |
| n-C₃H₇ | OCF₂CHFCF₃ | H | H | H | H | |
| n-C₄H₉ | OCF₂CHFCF₃ | H | H | H | H | |
| n-C₅H₁₁ | OCF₂CHFCF₃ | H | H | H | H | |
| n-C₆H₁₃ | OCF₂CHFCF₃ | H | H | H | H | |
| H | OCF₂CHFCF₃ | F | H | H | H | |
| CH₃ | OCF₂CHFCF₃ | F | H | H | H | |
| C₂H₅ | OCF₂CHFCF₃ | F | H | H | H | |
| n-C₃H₇ | OCF₂CHFCF₃ | F | H | H | H | |
| n-C₄H₉ | OCF₂CHFCF₃ | F | H | H | H | |
| n-C₅H₁₁ | OCF₂CHFCF₃ | F | H | H | H | |
| n-C₆H₁₃ | OCF₂CHFCF₃ | F | H | H | H | |
| H | OCF₂CHFCF₃ | F | F | H | H | |
| CH₃ | OCF₂CHFCF₃ | F | F | H | H | |
| C₂H₅ | OCF₂CHFCF₃ | F | F | H | H | |
| n-C₃H₇ | OCF₂CHFCF₃ | F | F | H | H | |
| n-C₄H₉ | OCF₂CHFCF₃ | F | F | H | H | |
| n-C₅H₁₁ | OCF₂CHFCF₃ | F | F | H | H | |
| n-C₆H₁₃ | OCF₂CHFCF₃ | F | F | H | H | |
| H | NCS | H | H | H | H | |
| CH₃ | NCS | H | H | H | H | |
| C₂H₅ | NCS | H | H | H | H | |
| n-C₃H₇ | NCS | H | H | H | H | |
| n-C₄H₉ | NCS | H | H | H | H | |
| n-C₅H₁₁ | NCS | H | H | H | H | |
| n-C₆H₁₃ | NCS | H | H | H | H | |
| H | NCS | F | H | H | H | |
| CH₃ | NCS | F | H | H | H | |
| C₂H₅ | NCS | F | H | H | H | |
| n-C₃H₇ | NCS | F | H | H | H | |
| n-C₄H₉ | NCS | F | H | H | H | |
| n-C₅H₁₁ | NCS | F | H | H | H | |
| n-C₆H₁₃ | NCS | F | H | H | H | |
| H | NCS | F | F | H | H | |
| CH₃ | NCS | F | F | H | H | |
| C₂H₅ | NCS | F | F | H | H | |
| n-C₃H₇ | NCS | F | F | H | H | |
| n-C₄H₉ | NCS | F | F | H | H | |
| n-C₅H₁₁ | NCS | F | F | H | H | |
| n-C₆H₁₃ | NCS | F | F | H | H | |
| H | C₂F₅ | H | H | H | H | |
| CH₃ | C₂F₅ | H | H | H | H | |
| C₂H₅ | C₂F₅ | H | H | H | H | |
| n-C₃H₇ | C₂F₅ | H | H | H | H | |
| n-C₄H₉ | C₂F₅ | H | H | H | H | |
| n-C₅H₁₁ | C₂F₅ | H | H | H | H | |
| n-C₆H₁₃ | C₂F₅ | H | H | H | H | |
| H | C₂F₅ | F | H | H | H | |
| CH₃ | C₂F₅ | F | H | H | H | |
| C₂H₅ | C₂F₅ | F | H | H | H | |
| n-C₃H₇ | C₂F₅ | F | H | H | H | |
| n-C₄H₉ | C₂F₅ | F | H | H | H | |
| n-C₅H₁₁ | C₂F₅ | F | H | H | H | |
| n-C₆H₁₃ | C₂F₅ | F | H | H | H | |
| H | C₂F₅ | F | F | H | H | |
| CH₃ | C₂F₅ | F | F | H | H | |
| C₂H₅ | C₂F₅ | F | F | H | H | |
| n-C₃H₇ | C₂F₅ | F | F | H | H | |
| n-C₄H₉ | C₂F₅ | F | F | H | H | |
| n-C₅H₁₁ | C₂F₅ | F | F | H | H | |
| n-C₆H₁₃ | C₂F₅ | F | F | H | H | |
| H | C₃F₇ | H | H | H | H | |
| CH₃ | C₃F₇ | H | H | H | H | |
| C₂H₅ | C₃F₇ | H | H | H | H | |
| n-C₃H₇ | C₃F₇ | H | H | H | H | |
| n-C₄H₉ | C₃F₇ | H | H | H | H | |
| n-C₅H₁₁ | C₃F₇ | H | H | H | H | |
| n-C₆H₁₃ | C₃F₇ | H | H | H | H | |
| H | C₃F₇ | F | H | H | H | |
| CH₃ | C₃F₇ | F | H | H | H | |
| C₂H₅ | C₃F₇ | F | H | H | H | |
| n-C₃H₇ | C₃F₇ | F | H | H | H | |
| n-C₄H₉ | C₃F₇ | F | H | H | H | |
| n-C₅H₁₁ | C₃F₇ | F | H | H | H | |
| n-C₆H₁₃ | C₃F₇ | F | H | H | H | |
| H | C₃F₇ | F | F | H | H | |
| CH₃ | C₃F₇ | F | F | H | H | |
| C₂H₅ | C₃F₇ | F | F | H | H | |
| n-C₃H₇ | C₃F₇ | F | F | H | H | |
| n-C₄H₉ | C₃F₇ | F | F | H | H | |
| n-C₅H₁₁ | C₃F₇ | F | F | H | H | |
| n-C₆H₁₃ | C₃F₇ | F | F | H | H | |
| H | SF₅ | H | H | H | H | |
| CH₃ | SF₅ | H | H | H | H | |
| C₂H₅ | SF₅ | H | H | H | H | |
| n-C₃H₇ | SF₅ | H | H | H | H | |
| n-C₄H₉ | SF₅ | H | H | H | H | |
| n-C₅H₁₁ | SF₅ | H | H | H | H | |
| n-C₆H₁₃ | SF₅ | H | H | H | H | |
| H | SF₅ | F | H | H | H | |
| CH₃ | SF₅ | F | H | H | H | |
| C₂H₅ | SF₅ | F | H | H | H | |
| n-C₃H₇ | SF₅ | F | H | H | H | |
| n-C₄H₉ | SF₅ | F | H | H | H | |
| n-C₅H₁₁ | SF₅ | F | H | H | H | |
| n-C₆H₁₃ | SF₅ | F | H | H | H | |
| H | SF₅ | F | F | H | H | |
| CH₃ | SF₅ | F | F | H | H | |
| C₂H₅ | SF₅ | F | F | H | H | |
| n-C₃H₇ | SF₅ | F | F | H | H | |
| n-C₄H₉ | SF₅ | F | F | H | H | |
| n-C₅H₁₁ | SF₅ | F | F | H | H | |
| n-C₆H₁₃ | SF₅ | F | F | H | H | |
| H | CN | H | H | H | H | |
| CH₃ | CN | H | H | H | H | |
| C₂H₅ | CN | H | H | H | H | |
| n-C₃H₇ | CN | H | H | H | H | |
| n-C₄H₉ | CN | H | H | H | H | |
| n-C₅H₁₁ | CN | H | H | H | H | |
| n-C₆H₁₃ | CN | H | H | H | H | |
| H | CN | F | H | H | H | |
| CH₃ | CN | F | H | H | H | |
| C₂H₅ | CN | F | H | H | H | |
| n-C₃H₇ | CN | F | H | H | H | |
| n-C₄H₉ | CN | F | H | H | H | |
| n-C₅H₁₁ | CN | F | H | H | H | |
| n-C₆H₁₃ | CN | F | H | H | H | |
| H | CN | F | F | H | H | |
| CH₃ | CN | F | F | H | H | |
| C₂H₅ | CN | F | F | H | H | |
| n-C₃H₇ | CN | F | F | H | H | |
| n-C₄H₉ | CN | F | F | H | H | |
| n-C₅H₁₁ | CN | F | F | H | H | |
| n-C₆H₁₃ | CN | F | F | H | H | |
| H | F | H | H | F | H | |
| CH₃ | F | H | H | F | H | |
| C₂H₅ | F | H | H | F | H | |
| C₃H₇ | F | H | H | F | H | |
| n-C₄H₉ | F | H | H | F | H | |
| n-C₅H₁₁ | F | H | H | F | H | |
| n-C₆H₁₃ | F | H | H | F | H | |
| H | F | F | H | F | H | |
| CH₃ | F | F | H | F | H | |
| C₂H₅ | F | F | H | F | H | |
| n-C₃H₇ | F | F | H | F | H | |
| n-C₄H₉ | F | F | H | F | H | |
| n-C₅H₁₁ | F | F | H | F | H | |
| n-C₆H₁₃ | F | F | H | F | H | |
| H | F | F | F | F | H | |
| CH₃ | F | F | F | F | H | |
| C₂H₅ | F | F | F | F | H | |
| n-C₃H₇ | F | F | F | F | H | K 98 N 193,0 I, |
| | | | | | | Δε = 37,9; Δn = 0,1649 |
| n-C₄H₉ | F | F | F | F | H | |
| n-C₅H₁₁ | F | F | F | F | H | |
| n-C₆H₁₃ | F | F | F | F | H | |
| H | Cl | H | H | F | H | |
| CH₃ | Cl | H | H | F | H | |
| C₂H₅ | Cl | H | H | F | H | |
| n-C₃H₇ | Cl | H | H | F | H | |
| n-C₄H₉ | Cl | H | H | F | H | |
| n-C₅H₁₁ | Cl | H | H | F | H | |
| n-C₆H₁₃ | Cl | H | H | F | H | |
| H | Cl | F | H | F | H | |
| CH₃ | Cl | F | H | F | H | |
| C₂H₅ | Cl | F | H | F | H | |
| n-C₃H₇ | Cl | F | H | F | H | |
| n-C₄H₉ | Cl | F | H | F | H | |
| n-C₅H₁₁ | Cl | F | H | F | H | |
| n-C₆H₁₃ | Cl | F | H | F | H | |
| H | Cl | F | F | F | H | |
| CH₃ | Cl | F | F | F | H | |
| C₂H₅ | Cl | F | F | F | H | |
| n-C₃H₇ | Cl | F | F | F | H | |
| n-C₄H₉ | Cl | F | F | F | H | |
| n-C₅H₁₁ | Cl | F | F | F | H | |
| n-C₆H₁₃ | Cl | F | F | F | H | |
| H | OCF₃ | H | H | F | H | |
| CH₃ | OCF₃ | H | H | F | H | |
| C₂H₅ | OCF₃ | H | H | F | H | |
| n-C₃H₇ | OCF₃ | H | H | F | H | |
| n-C₄H₉ | OCF₃ | H | H | F | H | |
| n-C₅H₁₁ | OCF₃ | H | H | F | H | |
| n-C₆H₁₃ | OCF₃ | H | H | F | H | |
| H | OCF₃ | F | H | F | H | |
| CH₃ | OCF₃ | F | H | F | H | |
| C₂H₅ | OCF₃ | F | H | F | H | |
| n-C₃H₇ | OCF₃ | F | H | F | H | |
| n-C₄H₉ | OCF₃ | F | H | F | H | |
| n-C₅H₁₁ | OCF₃ | F | H | F | H | |
| n-C₆H₁₃ | OCF₃ | F | H | F | H | |
| H | OCF₃ | F | F | F | H | |
| CH₃ | OCF₃ | F | F | F | H | |
| C₂H₅ | OCF₃ | F | F | F | H | |
| n-C₃H₇ | OCF₃ | F | F | F | H | |
| n-C₄H₉ | OCF₃ | F | F | F | H | |
| n-C₅H₁₁ | OCF₃ | F | F | F | H | |
| n-C₆H₁₃ | OCF₃ | F | F | F | H | |
| H | OCHF₂ | H | H | F | H | |
| CH₃ | OCHF₂ | H | H | F | H | |
| **C₂H₅** | OCHF₂ | H | H | F | H | |
| n-C₃H₇ | OCHF₂ | H | H | F | H | |
| n-C₄H₉ | OCHF₂ | H | H | F | H | |
| n-C₅H₁₁ | OCHF₂ | H | H | F | H | |
| n-C₆H₁₃ | OCHF₂ | H | H | F | H | |
| H | OCHF₂ | F | H | F | H | |
| CH₃ | OCHF₂ | F | H | F | H | |
| C₂H₅ | OCHF₂ | F | H | F | H | |
| n-C₃H₇ | OCHF₂ | F | H | F | H | |
| n-C₄H₉ | OCHF₂ | F | H | F | H | |
| n-C₅H₁₁ | OCHF₂ | F | H | F | H | |
| n-C₆H₁₃ | OCHF₂ | F | H | F | H | |
| H | OCHF₂ | F | F | F | H | |
| CH₃ | OCHF₂ | F | F | F | H | |
| C₂H₅ | OCHF₂ | F | F | F | H | |
| n-C₃H₇ | OCHF₂ | F | F | F | H | |
| n-C₄H₉ | OCHF₂ | F | F | F | H | |
| n-C₅H₁₁ | OCHF₂ | F | F | F | H | |
| n-C₆H₁₃ | OCHF₂ | F | F | F | H | |
| H | OCHFCF₃ | H | H | F | H | |
| CH₃ | OCHFCF₃ | H | H | F | H | |
| C₂H₅ | OCHFCF₃ | H | H | F | H | |
| n-C₃H₇ | OCHFCF₃ | H | H | F | H | |
| n-C₄H₉ | OCHFCF₃ | H | H | F | H | |
| n-C₅H₁₁ | OCHFCF₃ | H | H | F | H | |
| n-C₆H₁₃ | OCHFCF₃ | H | H | F | H | |
| H | OCHFCF₃ | F | H | F | H | |
| CH₃ | OCHFCF₃ | F | H | F | H | |
| C₂H₅ | OCHFCF₃ | F | H | F | H | |
| n-C₃H₇ | OCHFCF₃ | F | H | F | H | |
| n-C₄H₉ | OCHFCF₃ | F | H | F | H | |
| n-C₅H₁₁ | OCHFCF₃ | F | H | F | H | |
| n-C₆H₁₃ | OCHFCF₃ | F | H | F | H | |
| H | OCHFCF₃ | F | F | F | H | |
| CH₃ | OCHFCF₃ | F | F | F | H | |
| C₂H₅ | OCHFCF₃ | F | F | F | H | |
| n-C₃H₇ | OCHFCF₃ | F | F | F | H | |
| n-C₄H₉ | OCHFCF₃ | F | F | F | H | |
| n-C₅H₁₁ | OCHFCF₃ | F | F | F | H | |
| n-C₆H₁₃ | OCHFCF₃ | F | F | F | H | |
| H | OCHFCF₃ | H | H | F | H | |
| CH₃ | OCHFCF₃ | H | H | F | H | |
| C₂H₅ | OCHFCF₃ | H | H | F | H | |
| n-C₃H₇ | OCHFCF₃ | H | H | F | H | |
| n-C₄H₉ | OCHFCF₃ | H | H | F | H | |
| n-C₅H₁₁ | OCHFCF₃ | H | H | F | H | |
| n-C₆H₁₃ | OCHFCF₃ | H | H | F | H | |
| H | OCHFCF₃ | F | H | F | H | |
| CH₃ | OCHFCF₃ | F | H | F | H | |
| C₂H₅ | OCHFCF₃ | F | H | F | H | |
| n-C₃H₇ | OCHFCF₃ | F | H | F | H | |
| n-C₄H₉ | OCHFCF₃ | F | H | F | H | |
| n-C₅H₁₁ | OCHFCF₃ | F | H | F | H | |
| n-C₆H₁₃ | OCHFCF₃ | F | H | F | H | |
| H | OCHFCF₃ | F | F | F | H | |
| CH₃ | OCHFCF₃ | F | F | F | H | |
| C₂H₅ | OCHFCF₃ | F | F | F | H | |
| n-C₃H₇ | OCHFCF₃ | F | F | F | H | |
| n-C₄H₉ | OCHFCF₃ | F | F | F | H | |
| n-C₅H₁₁ | OCHFCF₃ | F | F | F | H | |
| n-C₆H₁₃ | OCHFCF₃ | F | F | F | H | |
| H | OCF₂CHFCF₃ | H | H | F | H | |
| CH₃ | OCF₂CHFCF₃ | H | H | F | H | |
| C₂H₅ | OCF₂CHFCF₃ | H | H | F | H | |
| n-C₃H₇ | OCF₂CHFCF₃ | H | H | F | H | |
| n-C₄H₉ | OCF₂CHFCF₃ | H | H | F | H | |
| n-C₅H₁₁ | OCF₂CHFCF₃ | H | H | F | H | |
| n-C₆H₁₃ | OCF₂CHFCF₃ | H | H | F | H | |
| H | OCF₂CHFCF₃ | F | H | F | H | |
| CH₃ | OCF₂CHFCF₃ | F | H | F | H | |
| C₂H₅ | OCF₂CHFCF₃ | F | H | F | H | |
| n-C₃H₇ | OCF₂CHFCF₃ | F | H | F | H | |
| n-C₄H₉ | OCF₂CHFCF₃ | F | H | F | H | |
| n-C₅H₁₁ | OCF₂CHFCF₃ | F | H | F | H | |
| n-C₆H₁₃ | OCF₂CHFCF₃ | F | H | F | H | |
| H | OCF₂CHFCF₃ | F | F | F | H | |
| CH₃ | OCF₂CHFCF₃ | F | F | F | H | |
| C₂H₅ | OCF₂CHFCF₃ | F | F | F | H | |
| n-C₃H₇ | OCF₂CHFCF₃ | F | F | F | H | |
| n-C₄H₉ | OCF₂CHFCF₃ | F | F | F | H | |
| n-C₅H₁₁ | OCF₂CHFCF₃ | F | F | F | H | |
| n-C₆H₁₃ | OCF₂CHFCF₃ | F | F | F | H | |
| H | NCS | H | H | F | H | |
| CH₃ | NCS | H | H | F | H | |
| C₂H₅ | NCS | H | H | F | H | |
| n-C₃H₇ | NCS | H | H | F | H | |
| n-C₄H₉ | NCS | H | H | F | H | |
| n-C₅H₁₁ | NCS | H | H | F | H | |
| n-C₆H₁₃ | NCS | H | H | F | H | |
| H | NCS | F | H | F | H | |
| CH₃ | NCS | F | H | F | H | |
| C₂H₅ | NCS | F | H | F | H | |
| n-C₃H₇ | NCS | F | H | F | H | |
| n-C₄H₉ | NCS | F | H | F | H | |
| n-C₅H₁₁ | NCS | F | H | F | H | |
| n-C₆H₁₃ | NCS | F | H | F | H | |
| H | NCS | F | F | F | H | |
| CH₃ | NCS | F | F | F | H | |
| C₂H₅ | NCS | F | F | F | H | |
| n-C₃H₇ | NCS | F | F | F | H | |
| n-C₄H₉ | NCS | F | F | F | H | |
| n-C₅H₁₁ | NCS | F | F | F | H | |
| n-C₆H₁₃ | NCS | F | F | F | H | |
| H | C₂F₅ | H | H | F | H | |
| CH₃ | C₂F₅ | H | H | F | H | |
| C₂H₅ | C₂F₅ | H | H | F | H | |
| n-C₃H₇ | C₂F₅ | H | H | F | H | |
| n-C₄H₉ | C₂F₅ | H | H | F | H | |
| n-C₅H₁₁ | C₂F₅ | H | H | F | H | |
| n-C₆H₁₃ | C₂F₅ | H | H | F | H | |
| H | C₂F₅ | F | H | F | H | |
| CH₃ | C₂F₅ | F | H | F | H | |
| C₂H₅ | C₂F₅ | F | H | F | H | |
| n-C₃H₇ | C₂F₅ | F | H | F | H | |
| n-C₄H₉ | C₂F₅ | F | H | F | H | |
| n-C₅H₁₁ | C₂F₅ | F | H | F | H | |
| n-C₆H₁₃ | C₂F₅ | F | H | F | H | |
| H | C₂F₅ | F | F | F | H | |
| CH₃ | C₂F₅ | F | F | F | H | |
| C₂H₅ | C₂F₅ | F | F | F | H | |
| n-C₃H₇ | C₂F₅ | F | F | F | H | |
| n-C₄H₉ | C₂F₅ | F | F | F | H | |
| n-C₅H₁₁ | C₂F₅ | F | F | F | H | |
| n-C₆H,₃ | C₂F₅ | F | F | F | H | |
| H | C₃F₇ | H | H | F | H | |
| CH₃ | C₃F₇ | H | H | F | H | |
| C₂H₅ | C₃F₇ | H | H | F | H | |
| n-C₃H₇ | C₃F₇ | H | H | F | H | |
| n-C₄H₉ | C₃F₇ | H | H | F | H | |
| n-C₅H₁₁ | C₃F₇ | H | H | F | H | |
| n-C₆H₁₃ | C₃F₇ | H | H | F | H | |
| H | C₃F₇ | F | H | F | H | |
| CH₃ | C₃F₇ | F | H | F | H | |
| C₂H₅ | C₃F₇ | F | H | F | H | |
| n-C₃H₇ | C₃F₇ | F | H | F | H | |
| n-C₄H₉ | C₃F₇ | F | H | F | H | |
| n-C₅H₁₁ | C₃F₇ | F | H | F | H | |
| n-C₆H₁₃ | C₃F₇ | F | H | F | H | |
| H | C₃F₇ | F | F | F | H | |
| CH₃ | C₃F₇ | F | F | F | H | |
| C₂H₅ | C₃F₇ | F | F | F | H | |
| n-C₃H₇ | C₃F₇ | F | F | F | H | |
| n-C₄H₉ | C₃F₇ | F | F | F | H | |
| n-C₅H₁₁ | C₃F₇ | F | F | F | H | |
| n-C₆H₁₃ | C₃H₇ | F | F | F | H | |
| H | SF₅ | H | H | F | H | |
| CH₃ | SF₅ | H | H | F | H | |
| C₂H₅ | SF₅ | H | H | F | H | |
| n-C₃H₇ | SF₅ | H | H | F | H | |
| n-C₄H₉ | SF₅ | H | H | F | H | |
| n-C₅H₁₁ | SF₅ | H | H | F | H | |
| n-C₆H₁₃ | SF₅ | H | H | F | H | |
| H | SF₅ | F | H | F | H | |
| CH₃ | SF₅ | F | H | F | H | |
| C₂H₅ | SF₅ | F | H | F | H | |
| n-C₃H₇ | SF₅ | F | H | F | H | |
| n-C₄H₉ | SF₅ | F | H | F | H | |
| n-C₅H₁₁ | SF₅ | F | H | F | H | |
| n-C₆H₁₃ | SF₅ | F | H | F | H | |
| H | SF₅ | F | F | F | H | |
| CH₃ | SF₅ | F | F | F | H | |
| C₂H₅ | SF₅ | F | F | F | H | |
| n-C₃H₇ | SF₅ | F | F | F | H | |
| n-C₄H₉ | SF₅ | F | F | F | H | |
| n-C₅H₁₁ | SF₅ | F | F | F | H | |
| n-C₆H₁₃ | SF₅ | F | F | F | H | |
| H | CN | H | H | F | H | |
| CH₃ | CN | H | H | F | H | |
| C₂H₅ | CN | H | H | F | H | |
| n-C₃H₇ | CN | H | H | F | H | |
| n-C₄H₉ | CN | H | H | F | H | |
| n-C₅H₁₁ | CN | H | H | F | H | |
| n-C₆H₁₃ | CN | H | H | F | H | |
| H | CN | F | H | F | H | |
| CH₃ | CN | F | H | F | H | |
| C₂H₅ | CN | F | H | F | H | |
| n-C₃H₇ | CN | F | H | F | H | |
| n-C₄H₉ | CN | F | H | F | H | |
| n-C₅H₁₁ | CN | F | H | F | H | |
| n-C₆H₁₃ | CN | F | H | F | H | |
| H | CN | F | F | F | H | |
| CH₃ | CN | F | F | F | H | |
| C₂H₅ | CN | F | F | F | H | |
| n-C₃H₇ | CN | F | F | F | H | |
| n-C₄H₉ | CN | F | F | F | H | |
| n-C₅H₁₁ | CN | F | F | F | H | |
| n-C₆H₁₃ | CN | F | F | F | H | |
| H | F | H | H | F | F | |
| CH₃ | F | H | H | F | F | |
| C₂H₅ | F | H | H | F | F | |
| n-C₄H₉ | F | H | H | F | F | |
| n-C₅H₁₁ | F | H | H | F | F | |
| n-C₆H₁₃ | F | H | H | F | F | |
| H | F | F | H | F | F | |
| CH₃ | F | F | H | F | F | |
| C₂H₅ | F | F | H | F | F | |
| n-C₃H₇ | F | F | H | F | F | |
| n-C₄H₉ | F | F | H | F | F | |
| n-C₅H₁₁ | F | F | H | F | F | |
| n-C₆H₁₃ | F | F | H | F | F | |
| H | F | F | F | F | F | |
| CH₃ | F | F | F | F | F | |
| C₂H₅ | F | F | F | F | F | |
| C₂H₅ | F | F | F | F | F | |
| n-C₃H₇ | F | F | F | F | F | K 144 N 181,4 I; |
| | | | | | | Δε = 42,1; Δn = 0,1510 |
| n-C₄H₉ | F | F | F | F | F | |
| n-C₅H₁₁ | F | F | F | F | F | |
| n-C₆H₁₃ | F | F | F | F | F | |
| H | Cl | H | H | F | F | |
| CH₃ | Cl | H | H | F | F | |
| C₂H₅ | Cl | H | H | F | F | |
| n-C₃H₇ | Cl | H | H | F | F | |
| n-C₄H₉ | Cl | H | H | F | F | |
| n-C₅H₁₁ | Cl | H | H | F | F | |
| n-C₆H₁₃ | Cl | H | H | F | F | |
| H | Cl | F | H | F | F | |
| CH₃ | Cl | F | H | F | F | |
| C₂H₅ | Cl | F | H | F | F | |
| n-C₃H₇ | Cl | F | H | F | F | |
| n-C₄H₉ | Cl | F | H | F | F | |
| n-C₅H₁₁ | Cl | F | H | F | F | |
| n-C₆H₁₃ | Cl | F | H | F | F | |
| H | Cl | F | F | F | F | |
| CH₃ | Cl | F | F | F | F | |
| C₂H₅ | Cl | F | F | F | F | |
| n-C₃H₇ | Cl | F | F | F | F | |
| n-C₄H₉ | Cl | F | F | F | F | |
| n-C₅H₁₁ | Cl | F | F | F | F | |
| n-C₆H₁₃ | Cl | F | F | F | F | |
| H | OCF₃ | H | H | F | F | |
| CH₃ | OCF₃ | H | H | F | F | |
| C₂H₅ | OCF₃ | H | H | F | F | |
| n-C₃H₇ | OCF₃ | H | H | F | F | |
| n-C₄H₉ | OCF₃ | H | H | F | -F | |
| n-C₅H₁₁ | OCF₃ | H | H | F | F | |
| n-C₆H₁₃ | OCF₃ | H | H | F | F | |
| H | OCF₃ | F | H | F | F | |
| CH₃ | OCF₃ | F | H | F | F | |
| C₂H₅ | OCF₃ | F | H | F | F | |
| n-C₃H₇ | OCF₃ | F | H | F | F | K 121 N 205,2 I; |
| | | | | | | Δε = 37,7; Δn = 0,1634 |
| n-C₄H₉ | OCF₃ | F | H | F | F | |
| n-C₅H₁₁ | OCF₃ | F | H | F | F | |
| n-C₆H₁₃ | OCF₃ | F | H | F | F | |
| H | OCF₃ | F | F | F | F | |
| CH₃ | OCF₃ | F | F | F | F | |
| C₂H₅ | OCF₃ | F | F | F | F | |
| n-C₃H₇ | OCF₃ | F | F | F | F | K 128 N 201,2 I; |
| | | | | | | Δε = 43,8; Δn = 0,1411 |
| n-C₄H₉ | OCF₃ | F | F | F | F | |
| n-C₅H₁₁ | OCF₃ | F | F | F | F | |
| n-C₆H₁₃ | OCF₃ | F | F | F | F | |
| H | OCHF₂ | H | H | F | F | |
| CH₃ | OCHF₂ | H | H | F | F | |
| C₂H₅ | OCHF₂ | H | H | F | F | |
| n-C₃H₇ | OCHF₂ | H | H | F | F | |
| n-C₄H₉ | OCHF₂ | H | H | F | F | |
| n-C₅H₁₁ | OCHF₂ | H | H | F | F | |
| n-C₆H₁₃ | OCHF₂ | H | H | F | F | |
| H | OCHF₂ | F | H | F | F | |
| CH₃ | OCHF₂ | F | H | F | F | |
| C₂H₅ | OCHF₂ | F | H | F | F | |
| n-C₃H₇ | OCHF₂ | F | H | F | F | |
| n-C₄H₉ | OCHF₂ | F | H | F | F | |
| n-C₅H₁₁ | OCHF₂ | F | H | F | F | |
| n-C₆H₁₃ | OCHF₂ | F | H | F | F | |
| H | OCHF₂ | F | F | F | F | |
| CH₃ | OCHF₂ | F | F | F | F | |
| C₂H₅ | OCHF₂ | F | F | F | F | |
| n-C₃H₇ | OCHF₂ | F | F | F | F | |
| n-C₄H₉ | OCHF₂ | F | F | F | F | |
| n-C₅H₁₁ | OCHF₂ | F | F | F | F | |
| n-C₆H₁₃ | OCHF₂ | F | F | F | F | |
| H | OCHFCF₃ | H | H | F | F | |
| CH₃ | OCHFCF₃ | H | H | F | F | |
| C₂H₅ | OCHFCF₃ | H | H | F | F | |
| n-C₃H₇ | OCHFCF₃ | H | H | F | F | |
| n-C₄H₉ | OCHFCF₃ | H | H | F | F | |
| n-C₅H₁₁ | OCHFCF₃ | H | H | F | F | |
| n-C₆H₁₃ | OCHFCF₃ | H | H | F | F | |
| H | OCHFCF₃ | F | H | F | F | |
| CH₃ | OCHFCF₃ | F | H | F | F | |
| C₂H₅ | OCHFCF₃ | F | H | F | F | |
| n-C₃H₇ | OCHFCF₃ | F | H | F | F | |
| n-C₄H₉ | OCHFCF₃ | F | H | F | F | |
| n-C₅H₁₁ | OCHFCF₃ | F | H | F | F | |
| n-C₆H₁₃ | OCHFCF₃ | F | H | F | F | |
| H | OCHFCF₃ | F | F | F | F | |
| CH₃ | OCHFCF₃ | F | F | F | F | |
| C₂H₅ | OCHFCF₃ | F | F | F | F | |
| n-C₃H₇ | OCHFCF₃ | F | F | F | F | |
| n-C₄H₉ | OCHFCF₃ | F | F | F | F | |
| n-C₅H₁₁ | OCHFCF₃ | F | F | F | F | |
| n-C₆H₁₃ | OCHFCF₃ | F | F | F | F | |
| H | OCHFCF₃ | H | H | F | F | |
| CH₃ | OCHFCF₃ | H | H | F | F | |
| C₂H₅ | OCHFCF₃ | H | H | F | F | |
| n-C₃H₇ | OCHFCF₃ | H | H | F | F | |
| n-C₄H₉ | OCHFCF₃ | H | H | F | F | |
| n-C₅H₁₁ | OCHFCF₃ | H | H | F | F | |
| n-C₆H₁₃ | OCHFCF₃ | H | H | F | F | |
| H | OCHFCF₃ | F | H | F | F | |
| CH₃ | OCHFCF₃ | F | H | F | F | |
| C₂H₅ | OCHFCF₃ | F | H | F | F | |
| n-C₃H₇ | OCHFCF₃ | F | H | F | F | |
| n-C₄H₉ | OCHFCF₃ | F | H | F | F | |
| n-C₅H₁₁ | OCHFCF₃ | F | H | F | F | |
| n-C₆H₁₃ | OCHFCF₃ | F | H | F | F | |
| H | OCHFCF₃ | F | F | F | F | |
| CH₃ | OCHFCF₃ | F | F | F | F | |
| C₂H₅ | OCHFCF₃ | F | F | F | F | |
| n-C₃H₇ | OCHFCF₃ | F | F | F | F | |
| n-C₄H₉ | OCHFCF₃ | F | F | F | F | |
| n-C₅H₁₁ | OCHFCF₃ | F | F | F | F | |
| n-C₆H₁₃ | OCHFCF₃ | F | F | F | F | |
| H | OCF₂CHFCF₃ | H | H | F | F | |
| CH₃ | OCF₂CHFCF₃ | H | H | F | F | |
| C₂H₅ | OCF₂CHFCF₃ | H | H | F | F | |
| n-C₃H₇ | OCF₂CHFCF₃ | H | H | F | F | |
| n-C₄H₉ | OCF₂CHFCF₃ | H | H | F | F | |
| n-C₅H₁₁ | OCF₂CHFCF₃ | H | H | F | F | |
| n-C₆H₁₃ | OCF₂CHFCF₃ | H | H | F | F | |
| H | OCF₂CHFCF₃ | F | H | F | F | |
| CH₃ | OCF₂CHFCF₃ | F | H | F | F | |
| C₂H₅ | OCF₂CHFCF₃ | F | H | F | F | |
| n-C₃H₇ | OCF₂CHFCF₃ | F | H | F | F | |
| n-C₄H₉ | OCF₂CHFCF₃ | F | H | F | F | |
| n-C₅H₁₁ | OCF₂CHFCF₃ | F | H | F | F | |
| n-C₆H₁₃ | OCF₂CHFCF₃ | F | H | F | F | |
| H | OCF₂CHFCF₃ | F | F | F | F | |
| CH₃ | OCF₂CHFCF₃ | F | F | F | F | |
| C₂H₅ | OCF₂CHFCF₃ | F | F | F | F | |
| n-C₃H₇ | OCF₂CHFCF₃ | F | F | F | F | |
| n-C₄H₉ | OCF₂CHFCF₃ | F | F | F | F | |
| n-C₅H₁₁ | OCF₂CHFCF₃ | F | F | F | F | |
| n-C₆H₁₃ | OCF₂CHFCF₃ | F | F | F | F | |
| H | NCS | H | H | F | F | |
| CH₃ | NCS | H | H | F | F | |
| C₂H₅ | NCS | H | H | F | F | |
| n-C₃H₇ | NCS | H | H | F | F | |
| n-C₄H₉ | NCS | H | H | F | F | |
| n-C₅H₁₁ | NCS | H | H | F | F | |
| n-C₆H₁₃ | NCS | H | H | F | F | |
| H | NCS | F | H | F | F | |
| CH₃ | NCS | F | H | F | F | |
| C₂H₅ | NCS | F | H | F | F | |
| n-C₃H₇ | NCS | F | H | F | F | |
| n-C₄H₉ | NCS | F | H | F | F | |
| n-C₅H₁₁ | NCS | F | H | F | F | |
| n-C₆H₁₃ | NCS | F | H | F | F | |
| H | NCS | F | F | F | F | |
| CH₃ | NCS | F | F | F | F | |
| C₂H₅ | NCS | F | F | F | F | |
| n-C₃H₇ | NCS | F | F | F | F | |
| n-C₄H₉ | NCS | F | F | F | F | |
| n-C₅H₁₁ | NCS | F | F | F | F | |
| n-C₆H₁₃ | NCS | F | F | F | F | |
| H | C₂F₅ | H | H | F | F | |
| CH₃ | C₂F₅ | H | H | F | F | |
| C₂H₅ | C₂F₅ | H | H | F | F | |
| n-C₃H₇ | C₂F₅ | H | H | F | F | |
| n-C₄H₉ | C₂F₅ | H | H | F | F | |
| n-C₅H₁₁ | C₂F₅ | H | H | F | F | |
| n-C₆H₁₃ | C₂F₅ | H | H | F | F | |
| H | C₂F₅ | F | H | F | F | |
| CH₃ | C₂Fₛ | F | H | F | F | |
| C₂H₅ | C₂F₅ | F | H | F | F | |
| n-C₃H₇ | C₂F₅ | F | H | F | F | |
| n-C₄H₉ | C₂F₅ | F | H | F | F | |
| n-C₅H₁₁ | C₂F₅ | F | H | F | F | |
| n-C₆H₁₃ | C₂F₅ | F | H | F | F | |
| H | C₂F₅ | F | F | F | F | |
| CH₃ | C₂F₅ | F | F | F | F | |
| C₂H₅ | C₂F₅ | F | F | F | F | |
| n-C₃H₇ | C₂F₅ | F | F | F | F | |
| n-C₄H₉ | C₂F₅ | F | F | F | F | |
| n-C₅H₁₁ | C₂F₅ | F | F | F | F | |
| n-C₆H₁₃ | C₂F₅ | F | F | F | F | |
| H | C₃F₇ | H | H | F | F | |
| CH₃ | C₃F₇ | H | H | F | F | |
| C₂H₅ | C₃F₇ | H | H | F | F | |
| n-C₃H₇ | C₃F₇ | H | H | F | F | |
| n-C₄H₉ | C₃F₇ | H | H | F | F | |
| n-C₅H₁₁ | C₃F₇ | H | H | F | F | |
| n-C₅H₁₃ | C₃F₇ | H | H | F | F | |
| H | C₃F₇ | F | H | F | F | |
| CH₃ | C₃F₇ | F | H | F | F | |
| C₂H₅ | C₃F₇ | F | H | F | F | |
| n-C₃H₇ | C₃F₇ | F | H | F | F | |
| n-C₄H₉ | C₃F₇ | F | H | F | F | |
| n-C₅H₁₁ | C₃F₇ | F | H | F | F | |
| n-C₆H₁₃ | C₃F₇ | F | H | F | F | |
| H | C₃F₇ | F | F | F | F | |
| CH₃ | C₃F₇ | F | F | F | F | |
| C₂H₅ | C₃F₇ | F | F | F | F | |
| n-C₃H₇ | C₃F₇ | F | F | F | F | |
| n-C₄H₉ | C₃F₇ | F | F | F | F | |
| n-C₅H₁₁ | C₃F₇ | F | F | F | F | |
| n-C₆H₁₃ | C₃F₇ | F | F | F | F | |
| H | SF₅ | H | H | F | F | |
| CH₃ | SF₅ | H | H | F | F | |
| C₂H₅ | SF₅ | H | H | F | F | |
| n-C₃H₇ | SF₅ | H | H | F | F | |
| n-C₄H₉ | SF₅ | H | H | F | F | |
| n-C₅H₁₁ | SF₅ | H | H | F | F | |
| n-C₆H₁₃ | SF₅ | H | H | F | F | |
| H | SF₅ | F | H | F | F | |
| CH₃ | SF₅ | F | H | F | F | |
| C₂H₅ | SF₅ | F | H | F | F | |
| n-C₃H₇ | SF₅ | F | H | F | F | |
| n-C₄H₉ | SF₅ | F | H | F | F | |
| n-C₅H₁₁ | SF₅ | F | H | F | F | |
| n-C₆H₁₃ | SF₅ | F | H | F | F | |
| H | SF₅ | F | F | F | F | |
| CH₃ | SF₅ | F | F | F | F | |
| C₂H₅ | SF₅ | F | F | F | F | |
| n-C₃H₇ | SF₅ | F | F | F | F | |
| n-C₄H₉ | SF₅ | F | F | F | F | |
| n-C₅H₁₁ | SF₅ | F | F | F | F | |
| n-C₆H₁₃ | SF₅ | F | F | F | F | |
| H | CN | H | H F | | F | |
| CH₃ | CN | H | H | F | F | |
| C₂H₅ | CN | H | H | F | F | |
| n-C₃H₇ | CN | H | H | F | F | |
| n-C₄H₉ | CN | H | H | F | F | |
| n-C₅H₁₁ | CN | H | H | F | F | |
| n-C₆H₁₃ | CN | H | H | F | F | |
| H | CN | F | H | F | F | |
| CH₃ | CN | F | H | F | F | |
| C₂H₅ | CN | F | H | F | F | |
| n-C₃H₇ | CN | F | H | F | F | |
| n-C₄H₉ | CN | F | H | F | F | |
| n-C₅H₁₁ | CN | F | H | F | F | |
| n-C₆H₁₃ | CN | F | H | F | F | |
| H | CN | F | F | F | F | |
| CH₃ | CN | F | F | F | F | |
| C₂H₅ | CN | F | F | F | F | |
| n-C₃H₇ | CN | F | F | F | F | |
| n-C₄H₉ | CN | F | F | F | F | |
| n-C₅H₁₁ | CN | F | F | F | F | |
| n-C₆H₁₃ | CN | F | F | F | F | |
| H | CF₃ | H | H | F | F | |
| C₂H₅ | CF₃ | H | H | F | F | |
| n-C₃H₇ | CF₃ | H | H | F | F | |
| n-C₄H₉ | CF₃ | H | H | F | F | |
| n-C₅H₁₁ | CF₃ | H | H | F | F | |
| n-C₆H₁₃ | CF₃ | H | H | F | F | |
| CH₂=CH | CF₃ | H | H | F | F | |
| H | CF₃ | F | F | F | F | |
| C₂H₅ | CF₃ | F | F | F | F | |
| n-C₃H₇ | CF₃ | F | F | F | F | |
| n-C₄H₉ | CF₃ | F | F | F | F | |
| n-C₅H₁₁ | CF₃ | F | F | F | F | |
| n-C₆H₁₃ | CF₃ | F | F | F | F | |
| CH₂=CH | CF₃ | F | F | F | F | |
| H | F | H | H | F | F | |
| C₂H₅ | F | H | H | F | F | |
| n-C₃H₇ | F | H | H | F | F | |
| n-C₄H₉ | F | H | H | F | F | |
| n-C₅H₁₁ | F | H | H | F | F | |
| n-C₆H₁₃ | F | H | H | F | F | |
| CH₂=CH | F | H | H | F | F | |

### Beispiel 6

Enantiomerentrennung von

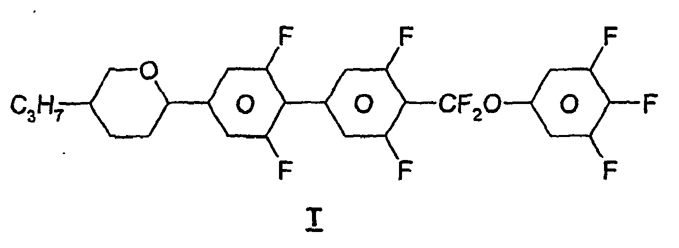

8,7 g **T** werden zur Enantiomerentrennung über eine präparative Enantio-HPLC-Säule gegeben. Nach Erhalt der beiden Fraktionen wird jeweils aus Ethanol umkristallisiert und der Drehwert bestimmt.
3,18 g Enantio-HPLC: 99,68 % - Drehwert: +29,0°
3,74 g Enantio-HPLC: 98,25 % - Drehwert: -28,0°

Analog werden die folgenden Racemate in die Enantiomere getrennt:

| | |
|---|---|
| 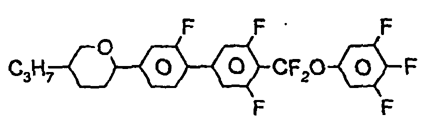 | Enantio-HPLC: 99,97 % - Drehwert: +32,0° |
| | Enantio-HPLC: 99,40 % - Drehwert: -32,1° |
| 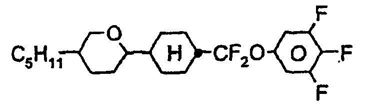 | Enantio-HPLC: 100,0 % - Drehwert: +4,5° |
| | Enantio-HPLC: 99,9 % - Drehwert: -4,9 ° |
| 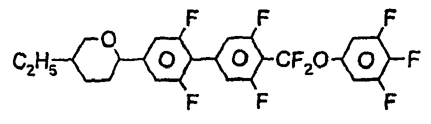 | Enantio-HPLC- 99,98 % - Drehwert: +28,5° |
| | Enantio-HPLC: 100,00 % - Drehwert: -31,4° |

### Mischungsbeispiele

### Beispiel M1

| | | | |
|---|---|---|---|
| CCH-5CF₃ | 3,00 % | Klärpunkt [°C]: | +80,0 |
| CCP-1F.F.F | 3,00 % | Δn [589 nm, 20°C]: | +0,0660 |
| CCP-2F.F.F | 8,00 % | Δε [kHz, 20°C]: | +10,4 |
| CCP-3F.F.F | 8,00 % | d · Δn [20 °C, µm]: | 0,50 |
| CCP-5F.F.F | 5,00 % | Verdrillung [°]: | 90 |
| CCP-20CF₃.F | 8,00 % | V₁₀[V]: | 1,31 |
| CCP-50CF₃.F | 8,00 % | | |
| CCOC-3-3 | 2,00 % | | |
| CCOC-4-3 | 2,00 % | | |
| CCQU-2-F | 10,00 % | | |
| CCQU-3-F | 12,00 % | | |
| CCQU-5-F | 8,00 % | | |
| ACQU-3-F | 15,00 % | | |
| CCH-301 | 3,00 % | | |
| CCH-501 | 5,00 % | | |

### Beispiel M2

| | | | |
|---|---|---|---|
| CCH-501 | 7,00 % | Klärpunkt [°C]: | +88,5- |
| CCH-5CF₃ | 7,00 % | Δn [589 nm, 20°C]: | +0,0657 |
| CCP-2F.F.F | 4,00 % | Δε [kHz, 20 °C]: | +9,9 |
| CCP-3F.F.F | 7,00 % | d · Δn [20 °C, µm]: | 0,50 |
| CCP-5F.F.F | 5,00 % | Verdrillung [°]: | 90 |
| CCP-30CF₃.F | 8,00 % | V₁₀[V]: | 1,45 |
| CCP-50CF₃.F | 8,00 % | | |
| CCOC-3-3 | 3,00 % | | |
| CCOC-3-5 | 2,00 % | | |
| CCOC-4-3 | 4,00 % | | |
| CCQU-2-F | 10,00% | | |
| CCQU-3-F | 12,00 % | | |
| CCQU-5-F | 8,00 % | | |
| ACQU-3-F | 15,00 % | | |

### Beispiel M3

| | | | |
|---|---|---|---|
| CCH-301 | 7,00 % | Klärpunkt [°C]: | +81,0 |
| CCH-501 | 10,00 % | Δn [589 nm, 20°C]: | +0,0608 |
| CCH-5CF₃ | 2,00 % | Δε [kHz, 20°C]: | +8,4 |
| CCP-2F.F.F | 9,00 % | d · Δn [20°C, µm]: | 0,50 |
| CCP-3F.F.F | 4,00 % | Verdrillung [°]: | 90 |
| CCP-5F.F.F | 4,00 % | V₁₀[V]: | 1,49 |
| CCP-30CF₃.F | 2,00 % | | |
| CCP-50CF₃.F | 4,00 % | | |
| CCOC-3-3 | 3,00 % | | |
| CCOC-3-5 | 2,00 % | | |
| CCOC-4-3 | 4,00 % | | |
| ACQU-3-F | 15,00 % | | |
| CCQU-2-F | 10,00 % | | |
| CCQU-3-F | 12,00 % | | |
| CCQU-5-F | 8,00 % | | |
| CCH-35 | 4,00 % | | |

### Beispiel M4

| | | | |
|---|---|---|---|
| CCP-1 F.F.F | 4,00 % | Klärpunkt [°C]: | +79,0 |
| CCP-2F.F.F | 10,00 % | Δn [589 nm, 20 °C]: | +0,0808 |
| CCP-3F.F.F | 9,00 % | Δε [kHz, 20 °C]: | +15,5 |
| CCP-5F.F.F | 5,00 % | d · Δn [20 °C, µm]: | 0,50 |
| CCP-30CF₃.F | 5,00 % | Verdrillung [°]: | 90 |
| CCP-50CF₃.F | 7,00 % | γ₁ [20 °C, mPa·s]: | 150 |
| PUQU-2-F | 5,00 % | V₁₀[V]: | 0,98 |
| PUQU-3-F | 5,00 % | | |
| CCQU-2-F | 11,00 %. | | |
| CCQU-3-F | 12,00 % | | |
| CCQU-5-F | 8,00 % | | |
| CCGU-3-F | 4,00 % | | |
| ACQU-3-F | 15,00 % | | |

### Beispiel M5

| | | | |
|---|---|---|---|
| BCH-3F.F | 10,80 % | Klärpunkt [°C]: | +89,0 |
| BCH-5F.F | 9,00 % | Δn [589 nm, 20 °C]: | +0,0930 |
| ECCP-30CF₃ | 4,50 % | Δε [kHz, 20 °C]: | +6,2 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| ACQU-3-F | 10,00 % | | |

### Beispiel M6

| | | | |
|---|---|---|---|
| CCH-35 | 3,00 % | Klärpunkt [°C]: | +81,0 |
| CC-3-V1 | 4,00 % | Δn [589 nm, 20 °C]: | +0,0912 |
| CCP-1 F.F.F | 10,00 % | d · Δn [20 °C, µm]: | 0,50 |
| CCP-2F.F.F | 9,00% | Verdrillung [°]: | 90 |
| CCP-3F.F.F | 9,00 % | γ₁[20 °C, mPa·s]: | 129 |
| CCP-20CF₃.F | 6,00 % | V₁₀ [V]: | 1,30 |
| CCG-V-F | 9,00 % | | |
| CCP-20CF₃ | 8,00 % | | |
| CCP-30CF₃ | 8,00 % | | |
| CCP-40CF₃ | 6,00 % | | |
| CCP-50CF₃ | 7,00 % | | |
| PUQU-2-F | 5,00 % | | |
| PUQU-3-F | 7,00 % | | |
| APUQU-2-F | 4,50 % | | |
| CGUQU-3-F | 3,50 % | | |
| CBC-33 | 1,00 % | | |

### Beispiel M7

| | | | |
|---|---|---|---|
| CCP-2F.F.F | 11,00 % | Klärpunkt [°C]: | +80,0 |
| CCP-20CF₃ | 7,00 % | Δn [589 nm, 20 °C]: | +0,1034 |
| CCP-30CF₃ | 8,00 % | d · Δn [20 °C, µm]: | 0,50 |
| CCP-40CF₃ | 5,00 % | Verdrillung [°]: | 90 |
| PGU-2-F | 8,00 % | V₁₀ [V]: | 1,22 |
| PGU-3-F | 7,00 % | | |
| CC-3-V1 | 10,00 % | | |
| CCH-35 | 3,00 % | | |
| CCP-V-1 | 5,00 % | | |
| CCP-20CF₃.F | 8,00 % | | |
| CCP-30CF₃.F | 11,00 % | | |
| PUQU-2-F | 4,00 % | | |
| PUQU-3-F | 6,00 % | | |
| ACQU-3-F | 7,00 % | | |

### Beispiel M8

| | | | |
|---|---|---|---|
| CCP-1 F.F.F | 6,00 % | S→N [°C]: | -40,0 |
| CCP-2F.F.F | 10,00 % | Klärpunkt [°C]: | +80,0 |
| CCP-20CF₃ | 8,00 % | Δn [589 nm, 20 °C]: | +0,1029 |
| CCP-30CF₃ | 8,00 % | d · Δn [20 °C, µm]: | 0,50 |
| CCP-40CF₃ | 6,00 % | Verdrillung [°]: | 90 |
| CCP-50CF₃ | 8,00 % | V₁₀ [V]: | 1,24 |
| PGU-2-F | 8,00% | | |
| PGU-3-F | 7,00 % | | |
| CC-3-V1 | 8,00 % | | |
| CCH-35 | 5,00 % | | |
| CCP-V-1 | 5,00 % | | |
| CCP-30CF₃.F | 3,00 % | | |
| PUQU-2-F | 4,00 % | | |
| PUQU-3-F | 6,00 % | | |
| ACQU-3-F | 8,00% | | |

### Beispiel M9

| | | | |
|---|---|---|---|
| CC-3-V1 | 5,00 % | S → N [°C]: | -30,0 |
| CCP-1 F.F.F | 5,00 % | Klärpunkt [°C]: | +85,5 |
| CCP-2F.F.F | 8,00 % | Δn [589 nm, 20 °C]: | +0,0931 |
| CCP-20CF₃.F | 8,00 % | Δε [kHz, 20 °C]: | 12,1 |
| CCP-20CF₃ | 5,00 % | γ₁ [20 °C, mPa.s]: | 135 |
| CCP-30CF₃ | 8,00 % | d · Δn [20 °C, µm]: | 0,50 |
| CCP-40CF₃ | 6,00 % | Verdrillung [°]: | 90 |
| CCP-50CF₃ | 8,00 % | V₁₀ [V]: | 1,23 |
| PUQU-2-F | 5,00 % | | |
| PUQU-3-F | 7,00 % | | |
| PGU-2-F | 5,00 % | | |
| CCP-V-1 | 10,00 % | | |
| ACQU-3-F | 12,00 % | | |
| ACQU-4-F | 8,00 % | | |

### Beispiel M10

| | | | |
|---|---|---|---|
| CC-3-V1 | 6,00 % | S→ N [°C]: | -40,0 |
| CCP-1 F.F.F | 6,00 % | Klärpunkt [°C]: | +83,5 |
| CCP-2F.F.F | 7,00 % | Δn [589 nm, 20 °C]: | +0,0917 |
| CCP-20CF₃.F | 10,00 % | Δε [kHz, 20 °C]: | 11,7 |
| CCP-20CF₃ | 8,00 % | γ₁ [20°C, mPa·s]: | 125 |
| CCP-30CF₃ | 8,00 % | d · Δn [20 °C, µm]: | 0,50 |
| CCP-40CF₃ | 6,00 % | Verdrillung [°]: | 90 |
| CCP-50CF₃ | 4,00 % | V₁₀ [V]: | 1,25 |
| PUQU-2-F | 5,00 % | | |
| PUQU-3-F | 8,00 % | | |
| PGU-2-F | 4,00 % | | |
| CCP-V-1 | 10,00 % | | |
| ACQU-3-F | 10,00 % | | |
| ACQU-4-F | 8,00 % | | |

### Beispiel M11 (IPS)

| | | | |
|---|---|---|---|
| CDU-2-F | 5,00 % | Klärpunkt [°C]: | +81 |
| PGU-2-F | 2,50 % | Δn [589 nm, 20 °C]: | +0,0850 |
| CCZU-2-F | 4,00 % | Δε [kHz, 20 °C]: | 10,1 |
| CCZU-3-F | 11,00 % | γ₁ [20 °C, mPa·s]: | 98 |
| CCP-V-1 | 15,00 % | | |
| CCQU-3-F | 10,00 % | | |
| PUQU-2-F | 4,00 % | | |
| PUQU-3-F | 5,00 % | | |
| CC-3-V1 | 11,00 % | | |
| PCH-302 | 3,50 % | | |
| CC-5-V | 11,00 % | | |
| ACQU-3-F | 9,00 % | | |
| ACQU-4-F | 9,00 % | | |

### Beispiel M12 (IPS)

| | | | |
|---|---|---|---|
| PGU-2-F | 9,00 % | Klärpunkt [°C]: | 81,0 |
| PGU-3-F | 2,00 % | Δn [589 nm, 20 °C]: | 0,1090 |
| CGZP-2-OT | 8,00 % | Δε [kHz, 20 °C]: | 11,0 |
| CGZP-3-OT | 10,00 % | γ₁ [20°C, mPa·s]: | 100 |
| CCP-20CF₃ | 6,00 % | | |
| CCP-30CF₃ | 6,50 % | | |
| PUQU-2-F | 4,00 % | | |
| PUQU-3-F | 3,50 % | | |
| CCP-V-1 | 9,00 % | | |
| CC-3-V1 | 11,00 % | | |
| PCH-302 | 15,00 % | | |
| ACQU-3-F | 8,00 % | | |
| ACQU-4-F | 8,00 % | | |

### Beispiel M13

| | | | |
|---|---|---|---|
| CC-4-V | 17,00 % | Klärpunkt [°C]: | 74,5 |
| CC-3-V1 | 3,00 % | Δn [589 nm, 20 °C]: | +0,0890 |
| CCQU-2-F | 12,00 % | Δε [kHz, 20 °C]: | 12,7 |
| CCQU-3-F | 12,00 % | γ₁ [20 °C, mPa·s]: | 119 |
| CCQU-5-F | 10,00 % | V₁₀ [V]: | 1,09 |
| CCP-20CF₃ | 5,00 % | | |
| PGU-2-F | 3,00 % | | |
| PGU-3-F | 6,00 % | | |
| AUUQGU-3-F | 8,00 % | | |
| CCP-1 F.F.F | 8,00 % | | |
| CCP-3F.F.F | 9,00 % | | |
| BCH-3F.F.F | 7,00 % | | |

### Beispiel M14

| | | | |
|---|---|---|---|
| CC-3-V1 | 6,00 % | S →N [°C]: | < -40,0 |
| CCP-1 F.F.F | 9,00 % | Klärpunkt [°C]: | 83,5 |
| CCP-2F.F.F | 9,00 % | Δn [589 nm, 20 °C]: | 0,0941 |
| CCP-3F.F.F | 10,00 % | Δε [kHz, 20 °C]: | 11,4 |
| CCQU-3-F | 11,00 % | γ₁[20 °C, mPa·s]: | 137 |
| CCQU-5-F | 9,00 % | V₁₀ [V]: | 1,23 |
| CCP-20CF₃ | 6,00 % | | |
| CCP-30CF₃ | 8,00 % | | |
| CCP-50CF₃ | 2,00 % | | |
| CGU-2-F | 4,00 % | | |
| PGU-2-F | 6,00 % | | |
| PGU-3-F | 6,00 % | | |
| CCP-V-1 | 7,00 % | | |
| ACQU-3-F | 7,00 % | | |

### Beispiel M15

| | | | |
|---|---|---|---|
| CC-3-V1 | 5,00 % | S → N [°C]: | < -40,0 |
| CCP-1 F.F.F | 7,00 % | Klärpunkt [°C]: | 84,0 |
| CCP-2F.F.F | 10,00 % | Δn [589 nm, 20 °C]: | 0,0919 |
| ACQU-1-F | 8,00 % | Δε [kHz, 20 °C]: | 11,9 |
| ACQU-3-F | 8,00 % | γ₁ [20 °C, mPa·s]: | 135 |
| CCG-V-F | 11,00 % | V₁₀[V]: | 1,19 |
| BCH-3F.F | 2,50 % | | |
| CCP-20CF₃ | 8,00 % | | |
| CCP-30CF₃ | 8,00 % | | |
| CCP-40CF₃ | 5,00 % | | |
| CCP-V-1 | 8,00 % | | |
| PUQU-2-F | 5,50 % | | |
| PUQU-3-F | 8,00 % | | |
| CCGU-3-F | 6,00 % | | |

### Beispiel M16

| | |
|---|---|
| CC-3-V1 | 5,00 % |
| CCP-1 F.F.F | 7,00 % |
| CCP-2F.F.F | 6,00 % |
| CCQU-3-F | 10,00% |
| CCG-V-F | 6,00 % |
| CCP-20CF₃ | 8,00 % |
| CCP-30CF₃ | 8,00 % |
| CCP-40CF₃ | 6,00 % |
| CCP-50CF₃ | 8,00 % |
| ACQU-2-F | 6,00 % |
| ACQU-3-F | 6,00 % |
| PUQU-2-F | 5,00 % |
| PUQU-3-F | 7,00 % |
| PGU-3-F | 6,00 % |
| CCP-V-1 | 6,00 % |

### Beispiel M17

| | | | |
|---|---|---|---|
| CCP-20CF₃ | 8,00 % | S → N [°C]: | < -30,0 |
| CCP-30CF₃ | 8,00 % | Klärpunkt [°C]: | 75,0 |
| CCP-40CF₃ | 5,00 % | Δn [589 nm, 20 °C]: | 0,0858 |
| PGU-2-F | 5,00 % | Δε [kHz, 20 °C]: | 13,3 |
| PGU-3-F | 5,00 % | γ₁ [20 °C, mPa-s]: | 152 |
| CCP-1 F.F.F | 10,00 % | V₁₀ [V]: | 1,07 |
| CCP-2F.F.F | 11,00 % | | |
| CCP-3F.F.F | 12,00 % | | |
| CCZU-2-F | 3,00 % | | |
| CCZU-3-F | 13,00 % | | |
| ACQU-2-F | 8,00 % | | |
| ACQU-3-F | 8,00 % | | |
| ACQU-5-F | 4,00 % | | |

### Beispiel M18

| | | | |
|---|---|---|---|
| CC-4-V | 11,00 % | S→ N [°C]: | < -40,0 |
| CDU-2-F | 7,00 % | Klärpunkt [°C]: | 76,5 |
| CDU-3-F | 8,00 % | Δn [589 nm, 20 °C]: | 0,0870 |
| CDU-5-F | 9,00 % | Δε [kHz, 20°C]: | 13,6 |
| CCP-1F.F.F | 8,50 % | γ₁ [20 °C, mPa·s]: | 146 |
| CCP-20CF₃ | 8,00 % | V₁₀ [V]: | 1,09 |
| CCP-30CF₃ | 6,50 % | | |
| PGU-2-F | 3,00 % | | |
| PGU-3-F | 6,00 % | | |
| CCGU-3-F | 6,00 % | | |
| CBC-33 | 3,00% | | |
| ACQU-2-F | 8,00% | | |
| ACQU-3-F | 8,00% | | |
| ACQU-5-F | 8,00% | | |

### Beispiel M19

| | | | |
|---|---|---|---|
| CC-4-V | 10,00 % | S → N [°C]: | < -40,0 |
| CCP-1 F.F.F | 9,00 % | Klärpunkt [°C]: | 75,0 |
| CCP-2F.F.F | 9,00 % | Δn [589 nm, 20 °C]: | 0,0869 |
| CCP-30CF₃.F | 8,00 % | Δε [kHz, 20 °C]: | 13,1 |
| CCP-20CF₃ | 8,00 % | γ₁ [20 °C, mPa·s]: | 128 |
| CCP-30CF₃ | 8,00 % | V₁₀[V]: | 1,06 |
| ACQU-2-F | 8,00 % | | |
| ACQU-3-F | 8,00 % | | |
| ACQU-4-F | 8,00 % | | |
| PGU-2-F | 2,00 % | | |
| PUQU-2-F | 5,00% | | |
| PUQU-3-F | 8,00% | | |
| CCGU-3-F | 6,00 % | | |
| CBC-33 | 3,00 % | | |

### Beispiel M20

| | | | |
|---|---|---|---|
| CC-4-V | 18,00 % | S→ N [°C]: | < -40,0 |
| CC-3-V1 | 3,00 % | Klärpunkt [°C]: | 75,0 |
| CCQU-2-F | 11,00 % | Δn [589 nm, 20°C]: | 0,0891 |
| CCQU-3-F | 12,00% | Δε [kHz, 20°C]: | 13,0 |
| CCQU-5-F | 8,00 % | γ₁ [20°C, mPa·s]: | 113 |
| CCP-20CF₃ | 8,00 % | V₁₀ [V]: | 1,08 |
| PGU-2-F | 2,00 % | | |
| PGU-3-F | 6,00 % | | |
| APUQU-2-F | 8,00% | | |
| APUQU-3-F | 9,00 % | | |
| CCP-1F.F.F | 7,00 % | | |
| CCP-2F.F.F | 7,00 % | | |
| CCGU-3-F | 1,00 % | | |

### Beispiel M21

| | | | |
|---|---|---|---|
| CC-4-V | 17,00 % | S → N [°C]: | < -40,0 |
| PUQU-2-F | 5,00 % | Klärpunkt [°C]: | 75,5 |
| PUQU-3-F | 7,00 % | Δn [589 nm, 20 °C]: | 0,0894 |
| CCP-20CF₃ | 6,00 % | Δε [kHz, 20 °C]: | 14,0 |
| CCP-30CF₃ | 5,00 % | γ₁ [20 °C, mPa·s]: | 120 |
| CCP-2F.F.F | 5,00 % | V₁₀[V]: | 1,06 |
| CCZU-2-F | 3,00 % | | |
| CCZU-3-F | 13,00 % | | |
| PGU-3-F | 6,00 % | | |
| ACQU-1-F | 8,00 % | | |
| ACQU-3-F | 8,00 % | | |
| ACQU-4-F | 8,00 % | | |
| CCGU-3-F | 6,00 % | | |
| CBC-33 | 3,00 % | | |

### Beispiel M22

| | | | |
|---|---|---|---|
| CC-4-V | 16,00 % | S→ N[°C]: | < -40,0 |
| CC-3-V1 | 8,00 % | Klärpunkt [°C]: | 75,5 |
| CCP-1 F.F.F | 5,00 % | Δn [589 nm, 20°C]: | 0,0916 |
| CCP-2F.F.F | 6,00 % | Δε [kHz, 20°C]: | 13,6 |
| CCQU-2-F | 10,00 % | γ₁ [20°C, mPa·s]: | 107 |
| CCQU-3-F | 12,00 % | V₁₀ [V]: | 1,08 |
| CCP-20CF₃ | 4,00 % | | |
| CCZU-3-F | 13,00 % | | |
| PGU-2-F | 5,00 % | | |
| PGU-3-F | 5,00 % | | |
| APUQU-2-F | 8,00 % | | |
| APUQU-3-F | 8,00 % | | |

### Beispiel M23

| | | | |
|---|---|---|---|
| CCP-1 F.F.F | 6,00 % | Klärpunkt [°C]: | 78,2 |
| CCP-2F.F.F | 9,00 % | Δn [589 nm, 20°C]: | 0,0791 |
| CCP-3F.F.F | 6,00 % | Δε [kHz, 20 °C]: | 14,3 |
| CCP-5F.F.F | 4.00 % | | |
| CCP-20CF₃.F | 5,00 % | | |
| CCP-30CF₃.F | 5,00 % | | |
| CCP-50CF₃.F | 7,00 % | | |
| CDU-2-F | 7,00 % | | |
| CDU-3-F | 10,00 % | | |
| CDU-5-F | 10,00 % | | |
| CGU-3-F | 4,00 % | | |
| CCGU-3-F | 9,00 % | | |
| ACQU-3-F | 18,00 % | | |

### Beispiel M24

| | | | |
|---|---|---|---|
| CCQU-2-F | 13,00 % | Klärpunkt [°C]: | 84,5 |
| CCQU-3-F | 14,00 % | Δn [589 nm, 20 °C]: | 0,0779 |
| CCQU-5-F | 13,00 % | Δε [kHz, 20 °C]: | 18,7 |
| ACQU-5-F | 33,00 % | γ₁ [20 °C, mPa·s]: | 182 |
| APUQU-2-F | 7,00 % | V₁₀[M]: | 0,95 |
| APUQU-3-F | 9,00 % | | |
| CC-4-V | 11,00 % | | |

### Beispiel M25

| | | | |
|---|---|---|---|
| CC-4-V | 18,00 % | Klärpunkt [°C]: | 74,5 |
| CC-3-V1 | 5,00 % | Δn [589 nm, 20 °C]: | 0,0882 |
| CCP-₂F.F.F | 8,00 % | Δε [kHz, 20 °C]: | 12,9 |
| CCQU-2-F | 9,00 % | γ₁ [20 °C, mPa.s]: | 103 |
| CCQU-3-F | 11,00 % | V₁₀ [V]: | 1,09 |
| CCQU-5-F | 11,00 % | | |
| CCQG-3-F | 6,00 % | | |
| BCH-3F.F.F | 8,00 % | | |
| APUQU-2-F | 6,00 % | | |
| APUQU-3-F | 6,00 % | | |
| PUQU-2-F | 3,00 % | | |
| PUQU-3-F | 6,00 % | | |
| CCGU-3-F | 1,50 % | | |
| PGP-2-3 | 1,50 % | | |

### Beispiel M26 (IPS)

| | | | |
|---|---|---|---|
| CCP-20CF₃ | 7,00 % | Klärpunkt [°C]: | 80,0 |
| CCP-30CF₃ | 7,00 % | Δn [589 nm, 20 °C]: | 0,1102 |
| CCP-40CF₃ | 7,00 % | Δε [kHz, 20 °C]: | 11,1 |
| CCP-50CF₃ | 3,50 % | γ₁ [20 °C, mPa·s]: | 82 |
| CCZU-3-F | 5,00 % | V₁₀[V]: 1,13 | |
| PGU-2-F | 9,00 % | | |
| PGU-3-F | 8,00 % | | |
| PUQU-2-F | 6,00 % | | |
| PUQU-3-F | 6,00 % | | |
| CC-3-V1 | 13,00 % | | |
| CC-4-V | 14,00 % | | |
| CCP-V-1 | 8,00 % | | |
| APUQU-2-F | 6,50 % | | |

### Beispiel M27 (IPS)

| | | | |
|---|---|---|---|
| CCP-20CF₃ | 8,00 % | Klärpunkt [°C]: | 79,5 |
| CCP-30CF₃ | 8,00 % | Δn [589 nm, 20 °C]: | 0,1095 |
| CCP-40CF₃ | 8,00 % | Δε [kHz, 20 °C]: | 11,4 |
| CCZU-3-F | 5,00 % | γ₁ [20 °C, mPa.s]: | 87 |
| PGU-2-F | 9,00 % | V₁₀[V]: 1,11 | |
| PGU-3-F | 8,50 % | | |
| PUQU-2-F | 6,00 % | | |
| PUQU-3-F | 5,00 % | | |
| CC-3-V1 | 12,50 % | | |
| CC-4-V | 14,00 % | | |
| CCP-V-1 | 9,00 % | | |
| AGUQU-2-F | 3,50 % | | |
| AGUQU-3-F | 3,50 % | | |

### Beispiel M28 (IPS)

| | | | |
|---|---|---|---|
| CCP-2F.F.F | 6,50 % | Klärpunkt [°C]: | 78,0 |
| CCP-30CF₃ | 6,00 % | Δn [589 nm, 20 °C]: | 0,0805 |
| CCZU-2-F | 4,00 % | Δε [kHz, 20 °C]: | 14,8 |
| CCZU-3-F | 15,00 % | γ₁ [20°C, mPa·s]: | 121 |
| CDU-2-F | 9,00 % | | |
| CDU-3-F | 4,00 % | | |
| CCQU-3-F | 13,00 % | | |
| CCQU-5-F | 10,00 % | | |
| PUQU-2-F | 5,00 % | | |
| PUQU-3-F | 5,00 % | | |
| APUQU-2-F | 6,00 % | | |
| CC-3-V1 | 12,00 % | | |
| CC-4-V | 4;50 % | | |

### Beispiel 28 (lPS)

| | | | |
|---|---|---|---|
| CDU-2-F | 9,00 % | Klärpunkt [°C]: | 76,5 |
| CDU-3-F | 8,00 % | Δn [589 nm, 20 °C]: | 0,0960 |
| PGU-2-F | 9,00 % | Δε [kHz, 20 °C]: | 12,7 |
| CCZU-2-F | 4,00 % | γ₁ [20°C, mPa·s]: | 92 |
| CCZU-3-F | 11,00 % | V₁₀ [V]: | 1,02 |
| PUQU-2-F | 4,00 % | | |
| PUQU-3-F | 6,00 % | | |
| APUQU-2-F | 7,00 % | | |
| CCP-V-1 | 14,50 % | | |
| CC-3-V1 | 12,50 % | | |
| CC-4-V | 10,00 % | | |
| CCH-35 | 5,00 % | | |

### Beispiel M30 (IPS)

| | | | |
|---|---|---|---|
| CCP-30CF₃ | 3,50 % | Klärpunkt [°C]: | 75,5 |
| CDU-2-F | 5,00 % | Δn [589 nm, 20°C]: . | 0,0975 |
| PGU-2-F | 6,50 % | Δε [kHz, 20 °C]: | 8,4 |
| PUQU-2-F | 8,00 % | γ₁ [20 °C, mPa·s]: | 67 |
| PUQU-3-F | 8,00 % | V₁₀ [V]: | 1,28 |
| CCP-V-1 | 13,00 % | | |
| CCP-V2-1 | 9,50 % | | |
| CC-3-V1 | 13,00 % | | |
| CC-5-V | 9,00 % | | |
| CC-4-V | 14,00 % | | |
| PCH-302 | 3,50 % | | |
| APUQU-2-F | 7,00 % | | |

### Beispiel M31 (IPS)

| | | | |
|---|---|---|---|
| PGU-2-F | 6,50 % | Klärpunkt [°C]: | 74,0 |
| CDU-2-F | 9,00 % | Δn [589 nm, 20°C]: | 0,1005 |
| PUQU-2-F | 11,00 % | Δε [kHz, 20°C]: | 14,1 |
| PUQU-3-F | 10,00 % | γ₁ [20°C, mPa.s]: | 92 |
| CCP-30CF₃ | 8,00 % | | |
| CCZU-3-F | 11,50 % | | |
| CC-4-V | 10,00 % | | |
| CC-5-V | 3,00 % | | |
| CC-3-V1 | 11,00 % | | |
| CCP-V2-1 | 13,00 % | | |
| APUQU-2-F | 7,00 % | | |

### Beispiel M32

| | | | |
|---|---|---|---|
| CCQU-2-F | 10,00 % | Klärpunkt [°C]: | 82,0 |
| CCQU-3-F | 12,00 % | Δn [589 nm, 20 °C]: | 0,0792 |
| CCQU-5-F | 8,00 % | Δε [kHz, 20 °C]: | 11,2 |
| CCP-1 F.F,F | 6,00 % | V₁₀ [V]: | 1,20 |
| CCP-2F.F.F | 5,00 % | | |
| CCP-3F.F.F | 5,00 % | | |
| CC-3-V1 | 10,00 % | | |
| CC-4-V | 14,00 % | | |
| CGU-2-F | 5,00 % | | |
| CCGU-3-F | 5,00 % | | |
| ACQG-3-F | 5,00 % | | |
| ACQG-4-F | 5,00 % | | |
| APUQU-2-F | 5,00 % | | |
| APUQU-3-F | 5,00 % | | |

### Beispiel M33

| | | | |
|---|---|---|---|
| CCQU-2-F | 11,00 % | Klärpunkt [°C]: | 81,5 |
| CCQU-3-F | 13,00 % | Δn [589 nm, 20 °C]: | 0,0804 |
| CCQU-5-F | 11,00 % | Δε [kHz, 20 °C]: | 13,6 |
| CCP-1 F.F.F | 8,00 % | γ₁ [20 °C, mPa.s]: | 153 |
| CCP-2F.F.F | 10,00 % | V₁₀[V]: | 1,06 |
| CCP-3F.F.F | 10,00 % | | |
| CCP-5F.F.F | 6,00 % | | |
| CC-3-V1 | 9,00 % | | |
| CGU-3-F | 4,00 % | | |
| ACQG-3-F | 3,00 % | | |
| ACQG-4-F | 5,00 % | | |
| APUQU-2-F | 5,00 % | | |
| APUQU-3-F | 5,00 % | | |

### Beispiel M34

| | | | |
|---|---|---|---|
| CCH-5CF₃ | 5,00 % | Klärpunkt [°C]: | 80,5 |
| CCP-1 F.F.F | 5,00 % | Δn [589 nm, 20 °C]: | 0,0660 |
| CCP-2F.F.F | 9,00 % | Δε [kHz, 20 °C]: | 9,7 |
| CCP-3F.F.F | 8,00 % | V₁₀ [V]: | 1,27 |
| CCP-5F.F.F | 5,00 % | | |
| CCP-20CF₃.F | 6,00 % | | |
| CCP-50CF₃.F | 6,00 % | | |
| CCOC-3-3 | 2,00 % | | |
| CCOC-4-3 | 2,00% | | |
| CCQU-2-F | 10,00 % | | |
| CCQU-3-F | 12,00 % | | |
| CCQU-5-F | 8,00 % | | |
| CCH-501 | 6,00 % | | |
| ACQG-3-F | 8,00 % | | |
| ACQG-4-F | 8,00 % | | |

### Beispiel M35

| | | | |
|---|---|---|---|
| CCP-1 F.F.F | 7,00 % | Klärpunkt [°C]: | 81,5 |
| CCP-2F.F.F | 8,00 % | Δn [589 nm, 20 °C]: | 0,0658 |
| CCP-3F.F.F | 7,00 % | Δε [kHz, 20 °C]: | 13,5 |
| CCP-5F.F.F | 4,00 % | V₁₀[V]: | 1,06 |
| CCQU-2-F | 11,00 % | | |
| CCQU-3-F | 12,00 % | | |
| CCQU-5-F | 8,00 % | | |
| ACQU-2-F | 8,00 % | | |
| ACQU-3-F | 9,00 % | | |
| ACQU-5-F | 8,00 % | | |
| ACQG-3-F | 7,00 % | | |
| ACQG-4-F | 5,00 % | | |
| CCOC-3-3 | 3,00 % | | |
| CCOC-4-3 | 3,00 % | | |

### Beispiel M36

| | | | |
|---|---|---|---|
| AUUQU-3-F | 6,00 % | Klärpunkt [°C]: | 98,0 |
| AGUQU-3-F | 6,00 % | Δn [589 nm, 20°C]: | 0,0927 |
| APUQU-2-F | 6,00% | Δε [kHz, 20 °C]: | 18,9 |
| CGU-2-F | 5,00 % | | |
| CGU-3-F | 5,00 % | | |
| CGU-5-F | 5,00 % | | |
| CCZU-2-F | 5,50 % | | |
| CCZU-3-F | 10,50 % | | |
| CCZU-5-F | 5,50 % | | |
| CCQU-2-F | 10,00 % | | |
| CCQU-3-F | 10,00 % | | |
| CCQU-5-F | 10,00 % | | |
| CC-5-V | 9,50 % | | |
| CCPC-33 | 2,00 % | | |
| CCPC-34 | 2,00 % | | |
| CCPC-35 | 2,00 % | | |

### Beispiel M37

| | | | |
|---|---|---|---|
| CCQU-2-F | 7,00 % | Klärpunkt [°C]: | 85,5 |
| CCQU-3-F | 8,00 % | Δn [589 nm, 20 °C]: | 0,0783 |
| CCQU-5-F | 8,00 % | Δε [kHz, 20 °C]: | 11,66 |
| CCQG-3-F | 6,00 % | γ₁ [20 °C, mPa·s]: | 213 |
| ACQU-2-F | 17,00 % | V₁₀ [V]: | 0,90 |
| ACQU-5-F | 16,00 % | | |
| PUQU-2-F | 5,00 % | | |
| PUQU-3-F | 5,00 % | | |
| CCGU-3-F | 5,00 % | | |
| CCOC-4-3 | 3,00 % | | |
| CCZU-2-F | 3,00 % | | |
| CCZU-3-F | 14,00 % | | |
| CCZU-5-F | 3,00 % | | |

### Beispiel M38

| | | | |
|---|---|---|---|
| BCH-3F.F | 10,80 % | Klärpunkt [°C]: | 56,9 |
| BCH-5F.F | 9,00 % | Δn [589 nm, 20 °C]: | 0,0834 |
| ECCP-30CF₃ | 4,50 % | Δε [kHz, 20 °C]: | 4,1 |
| ECCP-50CF₃ | 4,50 % | γ₁[20 °C, mPa·s]: | 65 |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00% | | |
| AUUQPU-3-F | 10,00 % | | |

### Beispiel M39

| | | | |
|---|---|---|---|
| CCP-1 F.F.F | 3,00 % | Klärpunkt [°C]: | 79,5 |
| CCP-2F.F.F | 6,00 % | Δn [589 nm, 20°C]: | 0,0796 |
| CCP-3F.F.F | 7,00 % | Δε [kHz, 20 °C]: | 10,12 |
| CCP-5F.F.F | 5,00 % | γ₁ [20°C, mPa·s]: | 202 |
| CCQU-2-F | 11,00 % | V₁₀ [V]: | 0,93 |
| CCQU-3-F | 12,00 % | | |
| CCQU-5-F | 8,00 % | | |
| CGU-2-F | 4,00 % | | |
| CGU-3-F | 7,00 % | | |
| CCGU-3-F | 9,00 % | | |
| ACQU-2-F | 8,00 % | | |
| ACQU-3-F | 10,00 % | | |
| ACQU-4-F | 10,00 % | | |

### Beispiel M40

| | | | |
|---|---|---|---|
| CCH-5CF₃ | 2,00 % | Klärpunkt [°C]: | 79,5 |
| CCP-2F.F.F | 9,00 % | Δn [589 nm, 20 °C]: | 0,0659 |
| CCP-3F.F.F | 7,00 % | Δε [kHz, 20 °C]: | 8,22 |
| CCP-5F.F.F | 4,00 % | γ₁ [20 °C, mPa.s]: | 169 |
| CCP-20CF₃.F | 7,00 % | V₁₀[V]: | 1,14 |
| CCP-50CF₃.F | 6,00 % | | |
| CCOC-3-3 | 2,00 % | | |
| CCOC-4-3 | 2,00 % | | |
| CCQU-2-F | 10,00 % | | |
| CCQU-3-F | 12,00 % | | |
| CCQU-5-F | 8,00 % | | |
| ACQU-2-F | 8,00 % | | |
| ACQU-3-F | 10,00 % | | |
| ACQU-4-F | 8,00% | | |
| CCH-501 | 5,00 % | | |

### Beispiel M41

| | | | |
|---|---|---|---|
| CCP-1 F.F.F | 6,00 % | Klärpunkt [°C]: | 80,0 |
| CCP-2F.F.F | 9,00 % | Δn [589 nm, 20 °C]: | 0,0694 |
| CCP-3F.F.F | 10,00 % | Δε [kHz, 20 °C]: | 8,96 |
| CCP-5F.F.F | 6,00 % | γ₁ [20 °C, mPa·s]: | 175 |
| CCP-20CF₃.F | 4,00 % | V₁₀[V]: | 1,11 |
| CCP-50CF₃.F | 8,00 % | | |
| CCQU-2-F | 11,00 % | | |
| CCQU-3-F | 12,00 % | | |
| CCQU-5-F | 8,00 % | | |
| ACQU-3-F | 26,00 % | | |

### Beispiel M42

| | | | |
|---|---|---|---|
| CCP-1F.F.F | 8,00 % | Klärpunkt [°C]: | 88,0 |
| CCP-2F.F.F | 7,00 % | Δn [589 nm, 20°C]: | 0,0788 |
| CCP-3F.F.F | 9,00 % | Δε [kHz, 20°C]: | 8,51 |
| CCP-5F.F.F | 6,00 % | γ₁ [20 °C, mPa-s]: | 192 |
| CCP-30CF₃.F | 9,00 % | V₁₀[V]: | 1,13 |
| CCP-50CF₃.F | 9,00 % | | |
| CGU-2-F | 5,00 % | | |
| CCGU-3-F | 5,00 % | | |
| CCQU-2-F | 11,00 % | | |
| CCQU-3-F | 12,00 % | | |
| CCQU-5-F | 8,00 % | | |
| ACQU-3-F | 6,00 % | | |
| ACQU-4-F | 5,00 % | | |

### Beispiel M43

| | | | |
|---|---|---|---|
| CCP-1F.F.F | 2,00 % | Klärpunkt [°C]: | 81,0 |
| CCP-20CF₃ | 8,00 % | Δn [589 nm, 20 °C]: | 0,0785 |
| CCP-30CF₃ | 8,00 % | Δε [kHZ, 20°C]: | 7,27 |
| CCP-40CF₃ | 6,00 % | γ₁ [20°C, mPa·s]: | 108 |
| CCP-50CF₃ | 8,00 % | V₁₀ [V]: | 1,34 |
| CCP-20CF₃.F | 12,00 % | | |
| ACQU-2-F | 8,00 % | | |
| ACQU-3-F | 8,00 % | | |
| ACQU-4-F | 8,00 % | | |
| PUQU-2-F | 5,00 % | | |
| PUQU-3-F | 7,00% | | |
| CC-3-V1 | 8,00% | | |
| CC-4-V | 9,00 % | | |
| CCOC-4-3 | 3,00 % | | |

### Beispiel M44

| | | | |
|---|---|---|---|
| CC-3-V1 | 5,00 % | S → N [°C]: | < 20,0 |
| CCP-1 F.F.F | 8,00 % | Klärpunkt [°C]: | 82,5 |
| CCP-2F.F.F | 10,00 % | An [589 nm, 20°C]: | 0,0939 |
| CCQU-2-F | 10,00 % | Δε [kHz, 20 °C]: | 10,6 |
| CCQU-3-F | 5,00 % | γ₁ [20 °C, mPa·s]: | 128 |
| CCP-20CF₃ | 8,00 % | V₁₀[V]: | 1,19 |
| CCP-30CF₃ | 8,00 % | | |
| CGU-2-F | 9,00 % | | |
| PGU-3-F | 5,00 % | | |
| CCP-V-1 | 6,00 % | | |
| CCG-V-F | 18,00 % | | |
| APUQU-3-F | 8,00 % | | |

### Beispiel M45

| | | | |
|---|---|---|---|
| CCP-2F.F.F | 7,00 % | Klärpunkt [°C]: | 88,0 |
| CCP-3F.F.F | 6,00 % | Δn [589 nm, 20°C]: | 0,0720 |
| CCP-5F.F.F | 6,00 % | Δε [kHz, 20°C]: | 16,1 |
| ACQU-2-F | 10,00 % | γ₁ [20 °C, mPa·s]: | 210 |
| ACQU-3-F | 10,00 % | V₁₀[V]: | 0,97 |
| ACQU-5-F | 11,00 % | | |
| CCQU-2-F | 10,00 % | | |
| CCQU-3-F | 12,00 % | | |
| CCQU-5-F | 10,00 % | | |
| CCGU-3-F | 5,00 % | | |
| CCZU-2-F | 4,00 % | | |
| CCZU-3-F | 9,00.% | | |

## Patentansprüche

1. Flüssigkristalline Verbindungen der Formel I, 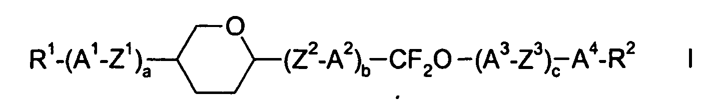 worin
R¹ und R² jeweils unabhängig voneinander H, Halogen, einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, dass O-Atome nicht direkt miteinander verknüpft sind, wobei einer der Reste R¹ und R² auch CN, OCN, SCN, NCS oder SF₅ bedeuten kann,
A¹, A², A³ und A⁴ jeweils unabhängig voneinander 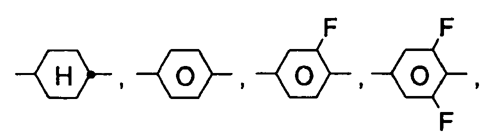 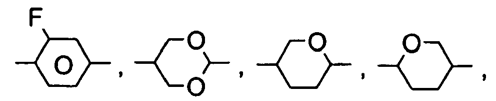 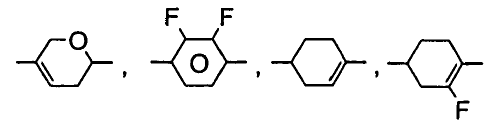 oder 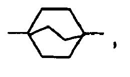
Z¹, Z² und Z³ jeweils unabhängig voneinander -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- oder eine Einfachbindung, und
a, b und c jeweils unabhängig voneinander 0,1,2 oder 3, wobei a + b + c ≤ 3 ist.
bedeuten.

2. Flüssigkristalline Verbindungen der Formel lA 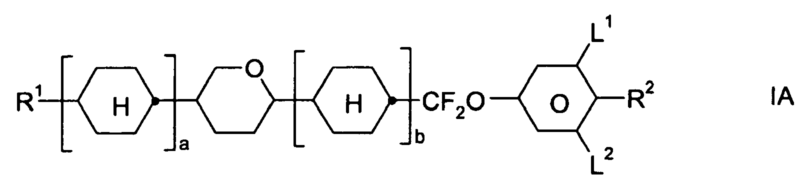 worin
R¹, R², a, b und die in Anspruch 1 angegebenen Bedeutungen haben, wobei a + b = 1 oder 2 ist,
L¹ und L² jeweils unabhängig voneinander H oder F, und
bedeuten.

3. Flüssigkristalline Verbindungen nach Anspruch 1 oder 2, **dadurch gekennzeichnet, dass** a = 1 und b = 0 ist.

4. Flüssigkristalline Verbindungen nach Anspruch 2, **dadurch gekennzeichnet, dass** L¹ Fluor und L² Fluor oder Wasserstoff bedeuten.

5. Flüssigkristalline Verbindungen nach Anspruch 2, **dadurch gekennzeichnet, dass** L¹ und L² Fluor bedeuten.

6. Flüssigkristalline Verbindungen der Formeln I1 bis I31, 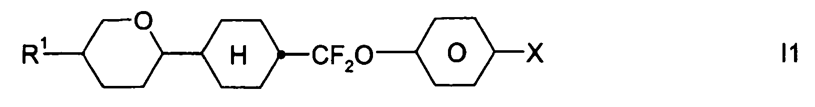 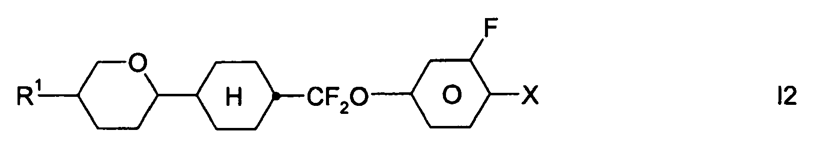 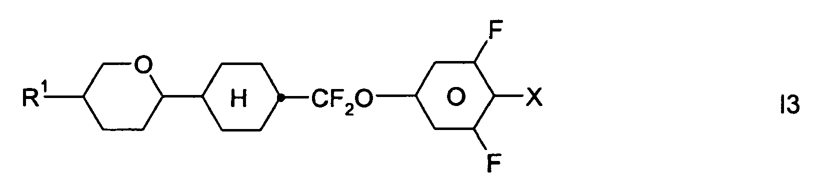 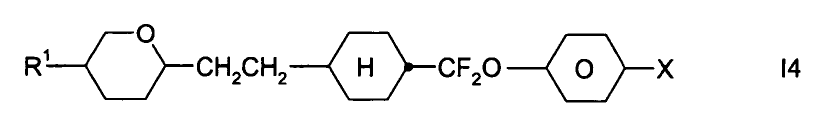 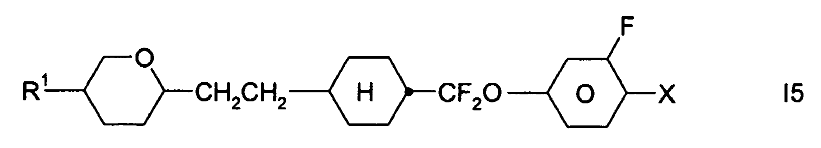 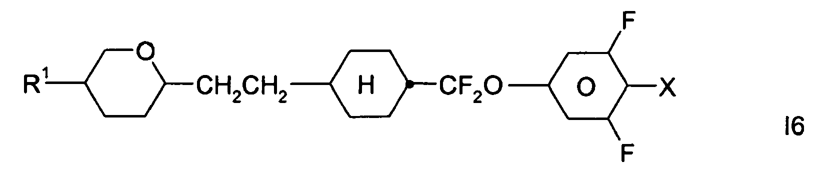 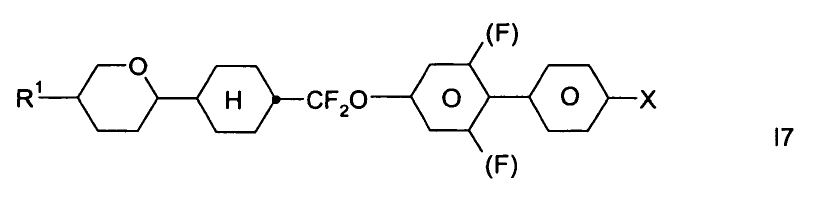 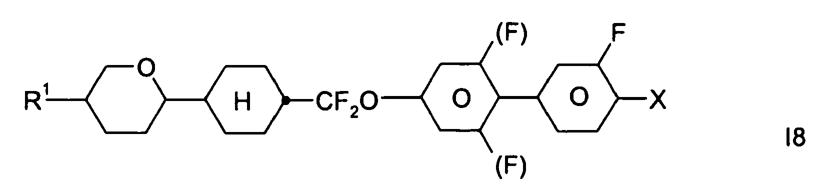 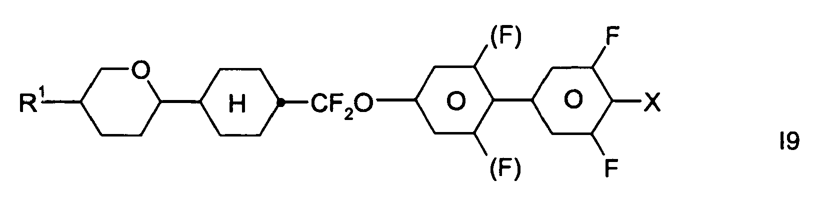 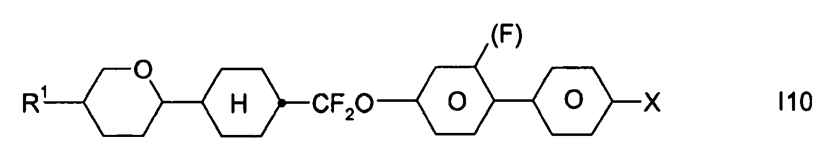 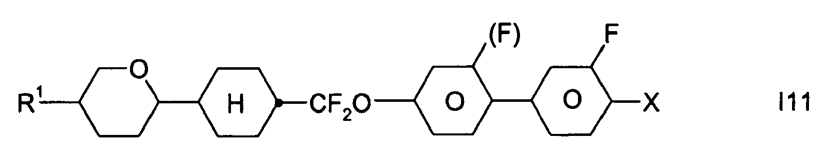 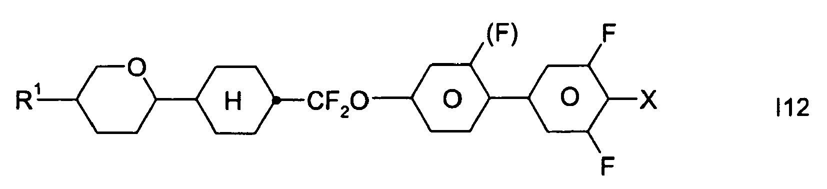 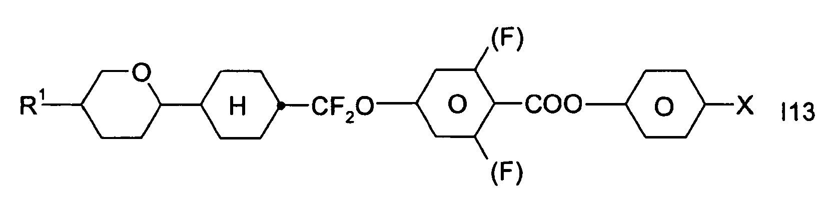 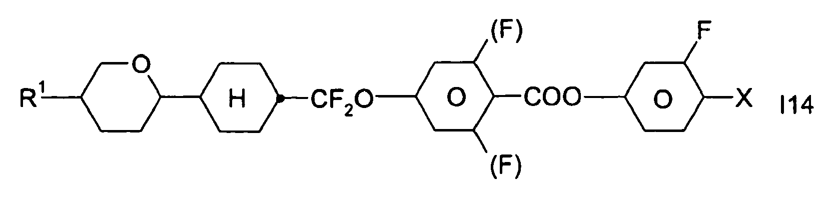 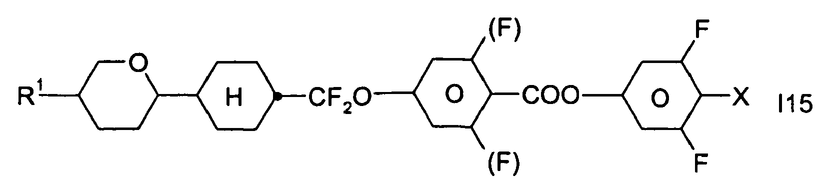 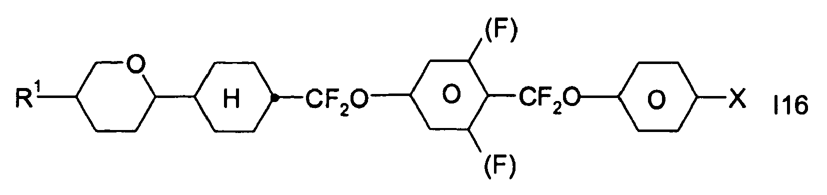 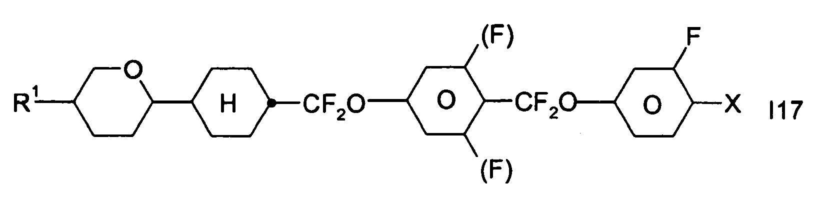 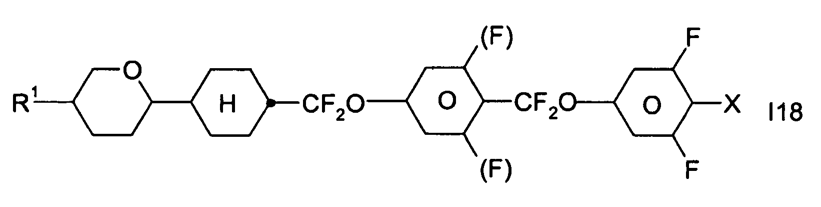 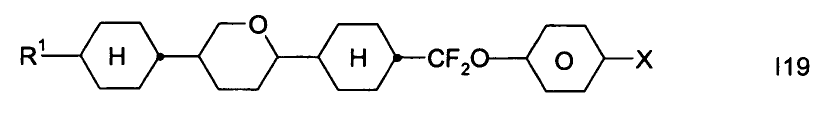 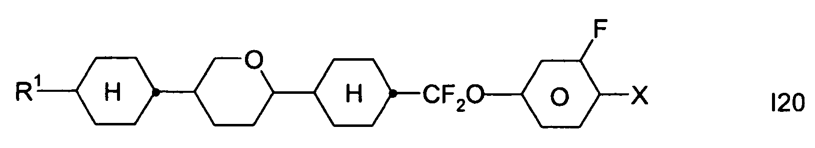 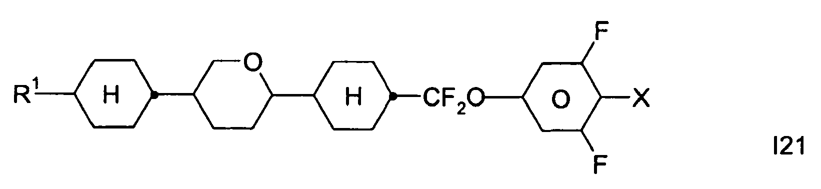 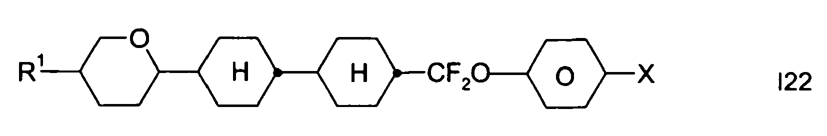 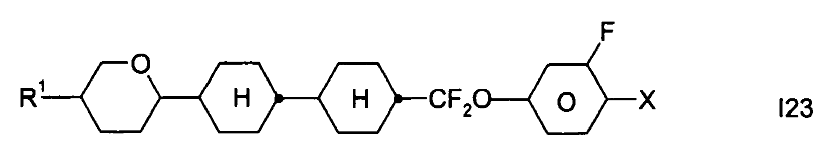 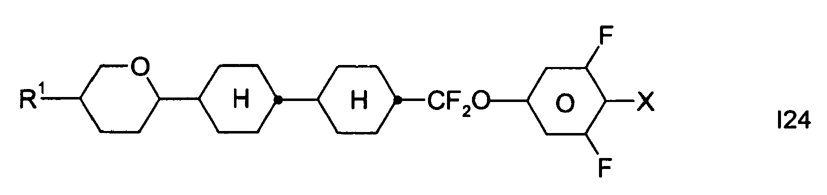 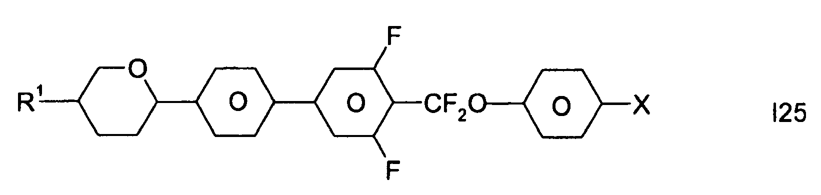 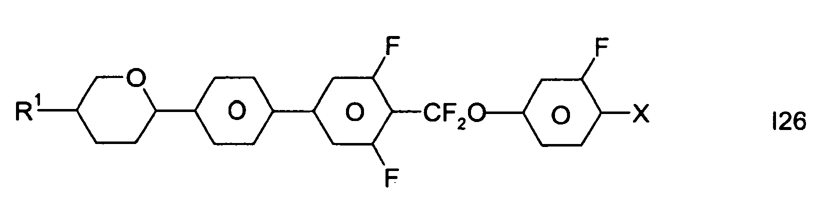 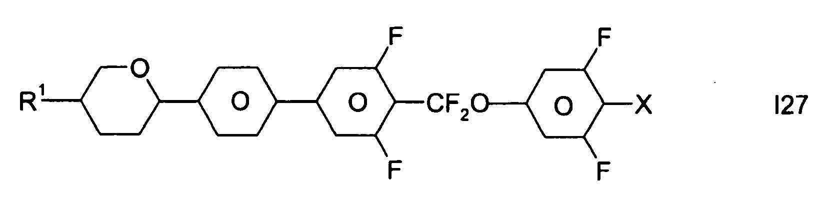 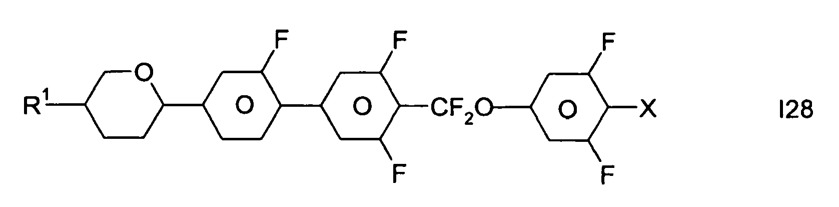 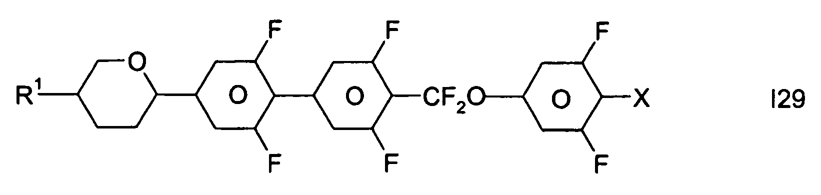 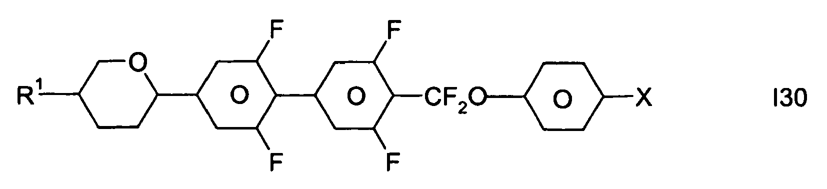 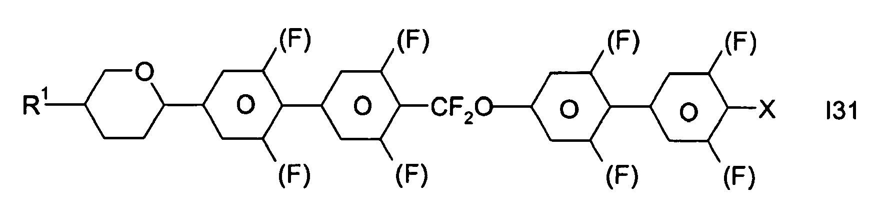 worin R¹ die in Anspruch 1 angegebenen Bedeutungen hat und X die Bedeutung von R² hat.

7. Flüssigkristallines Medium enthaltend mindestens zwei mesogene Verbindungen, **dadurch gekennzeichnet, dass** es mindestens eine Verbindung der Formel I nach Anspruch 1 enthält.

8. Flüssigkristallines Medium nach Anspruch 7, **dadurch gekennzeichnet, dass** es eine oder mehrere Verbindungen ausgewählt aus der Gruppe bestehend aus den allgemeinen Formeln II bis IX, 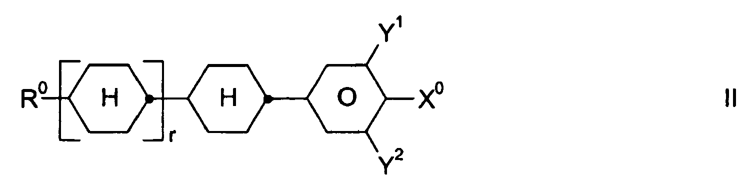 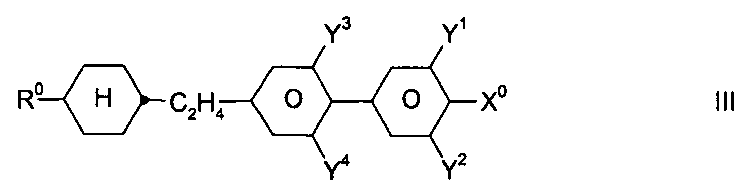 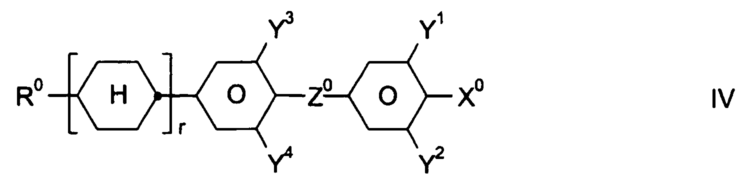 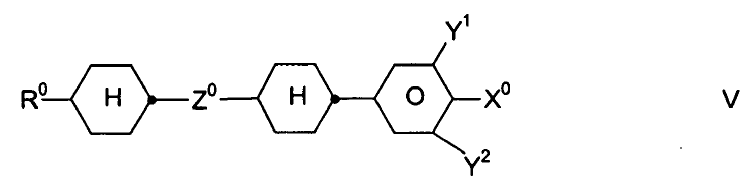 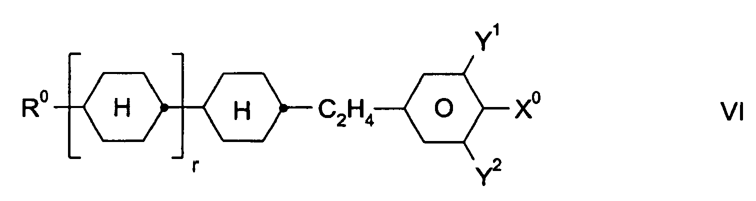 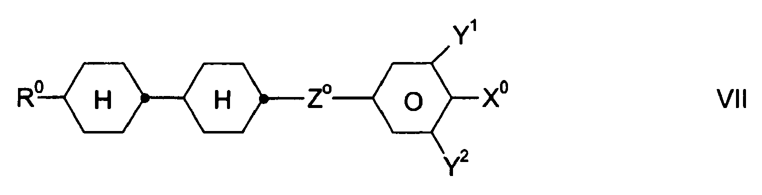 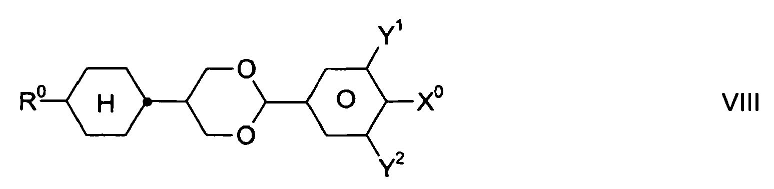 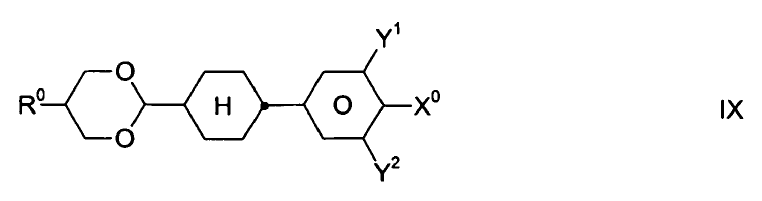 worin
R⁰ n-Alkyl, Oxaalkyl, Fluoralkyl, Alkenyloxy oder Alkenyl mit jeweils bis zu 9 C-Atomen
x⁰ F, Cl, halogeniertes Alkyl, halogeniertes Alkenyl, halogeniertes Alkenyloxy oder halogeniertes Alkoxy mit bis zu 7 C-Atomen,
Z⁰ -CH=CH-, -C₂H₄-, -(CH₂)₄-, -C₂F₄-, -CH₂O- -OCH₂-, -CF=CF-, -CF₂O-, -OCF₂- oder -COO-,
Y¹, Y², Y³ und Y⁴ jeweils unabhängig voneinander H oder F, und
r 0 oder 1
bedeuten,
enthält.

9. Verwendung des flüssigkristallinen Mediums nach Anspruch 7 oder 8 für elektrooptische Zwecke.

10. Elektrooptische Flüssigkristallanzeige enthaltend ein flüssigkristallines Medium nach Anspruch 7 oder 8.

## Claims

1. Liquid-crystalline compounds of the formula I 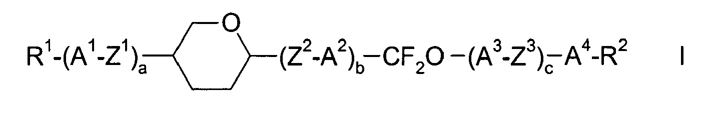 in which
R¹ and R² each, independently of one another, denote H, halogen, a halogenated or unsubstituted alkyl or alkoxy radical having 1 to 15 C atoms, where, in addition, one or more CH₂ groups in these radicals may each, independently of one another, be replaced by -C≡C-, -CH=CH-, -O-, -CO-O- or -O-CO- in such a way that O atoms are not linked directly to one another, where one of the radicals R¹ and R² may alternatively denote CN, OCN, SCN, NCS or SF₅,
A¹, A², A³ and A⁴ each, independently of one another, denote 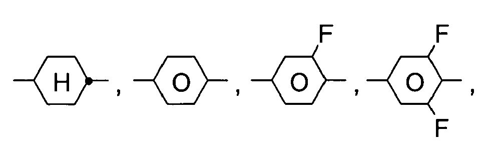 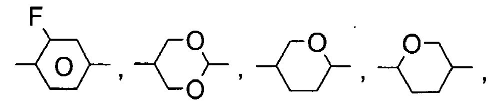 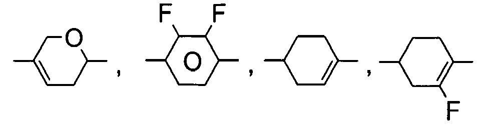 or 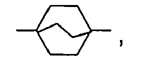
Z¹, Z² and Z³ each, independently of one another, denote -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- or a single bond, and
a, b and c each, independently of one another, denote 0, 1, 2 or 3, where a + b + c ≤ 3.

2. Liquid-crystalline compounds of the formula IA 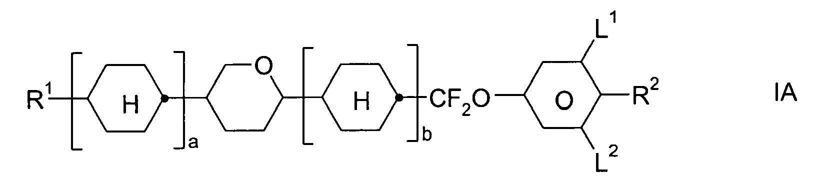 in which
R¹, R², a and b have the meanings indicated in Claim 1, where a + b = 1 or 2, and
L¹ and L² each, independently of one another, denote H or F.

3. Liquid-crystalline compounds according to Claim 1 or 2, **characterised in that** a = 1 and b = 0 or a=0 and b=1.

4. Liquid-crystalline compounds according to Claim 2, **characterised in that** L¹ denotes fluorine and L² denotes fluorine or hydrogen.

5. Liquid-crystalline compounds according to Claim 2, **characterised in that** L¹ and L² denote fluorine.

6. Liquid-crystalline compounds of the formulae 11 to 131 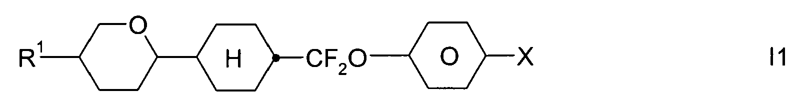 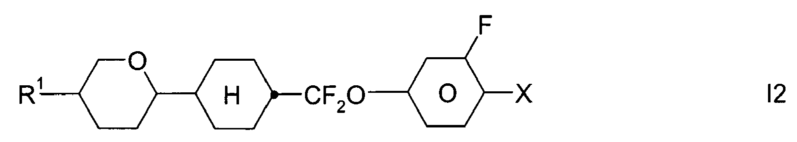 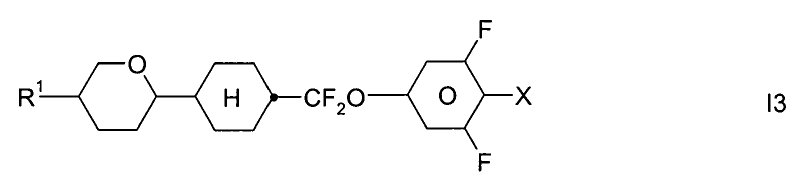 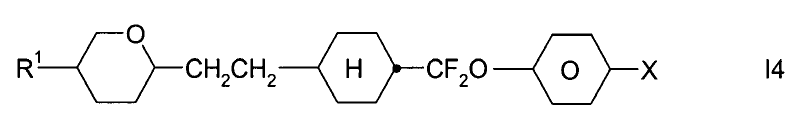 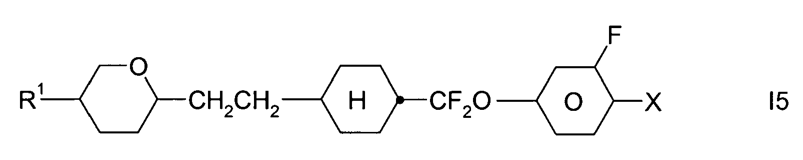 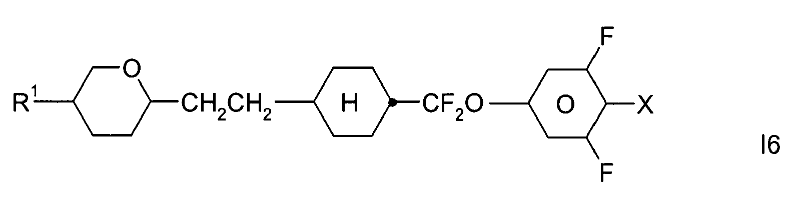 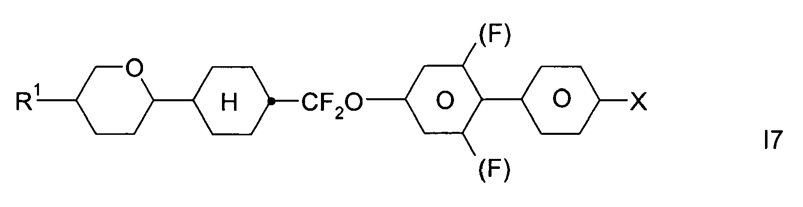 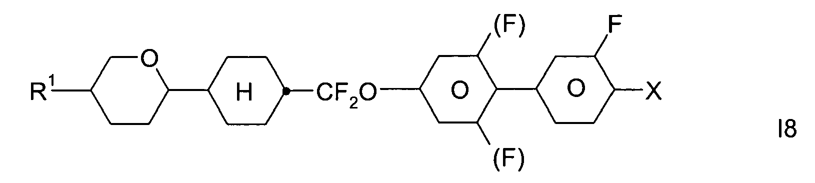 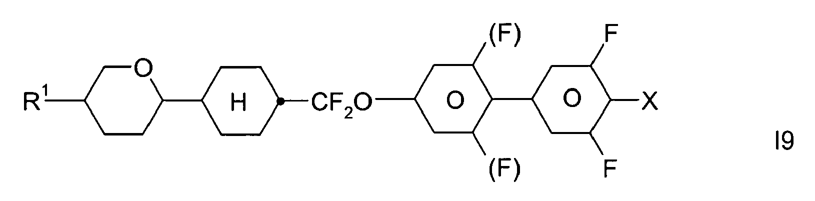 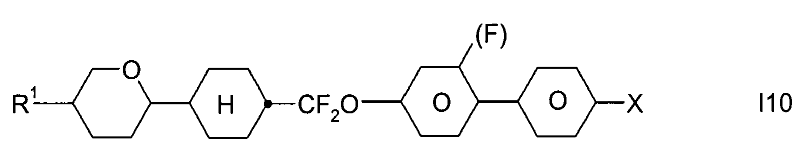 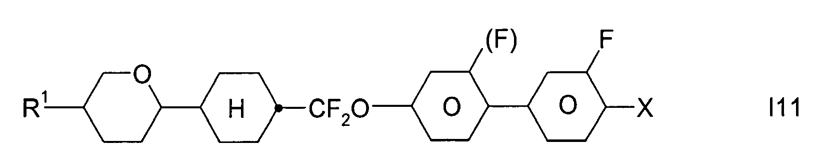 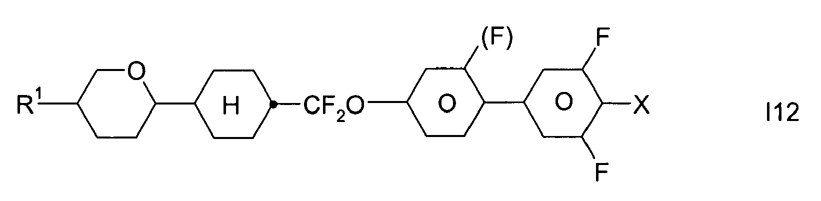 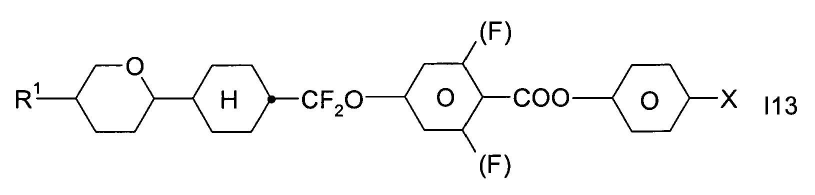 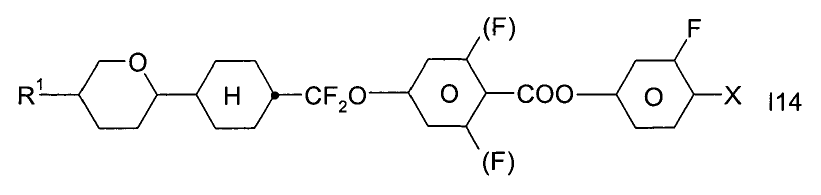 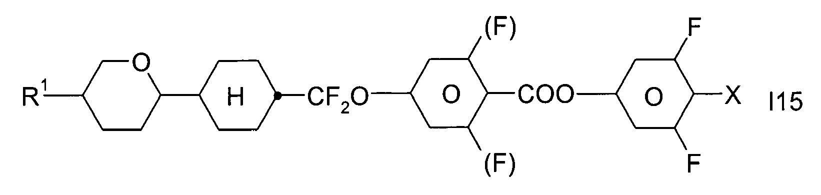 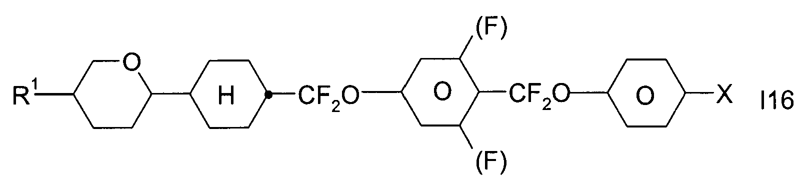 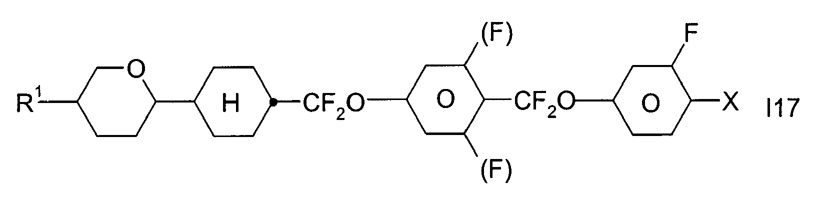 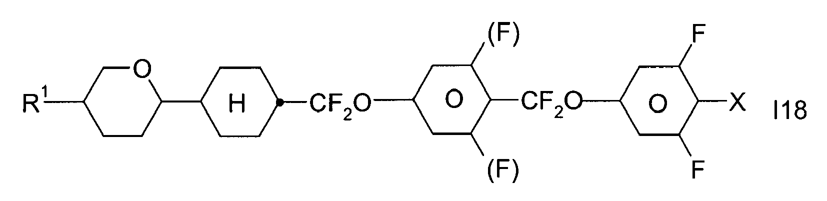 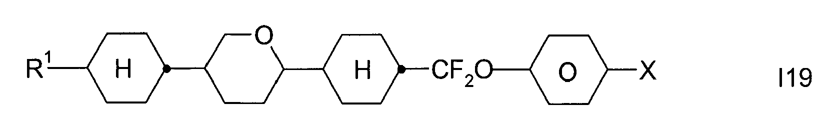 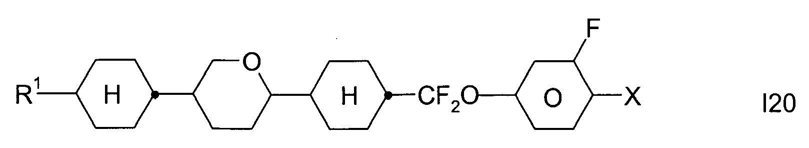 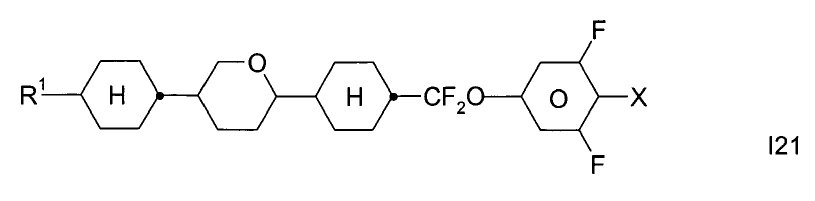 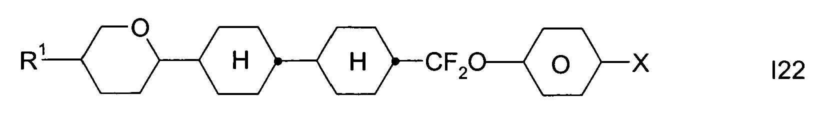 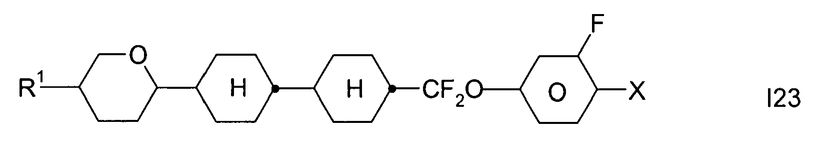 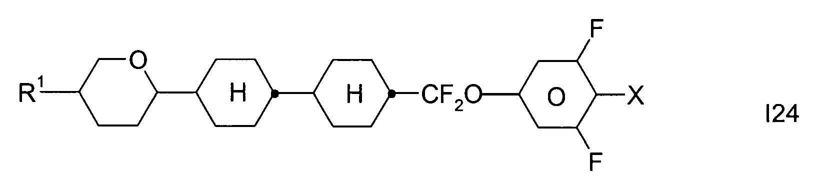 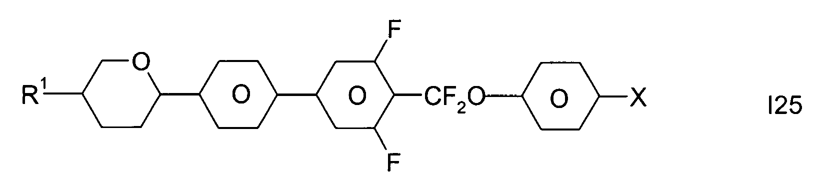 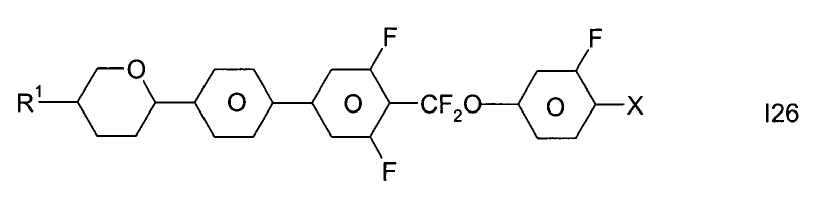 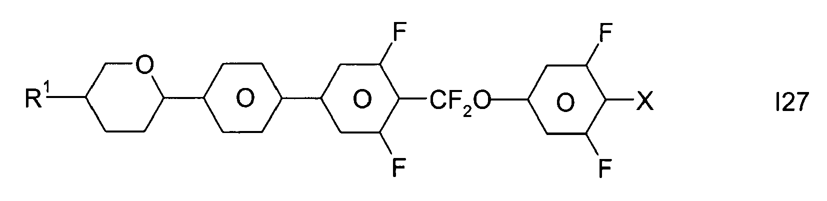 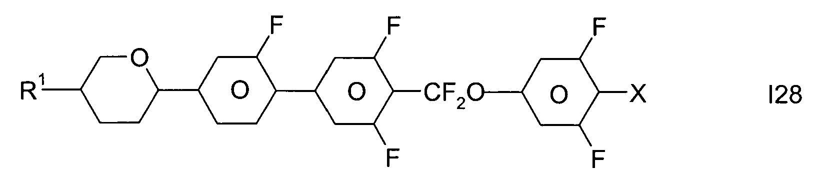 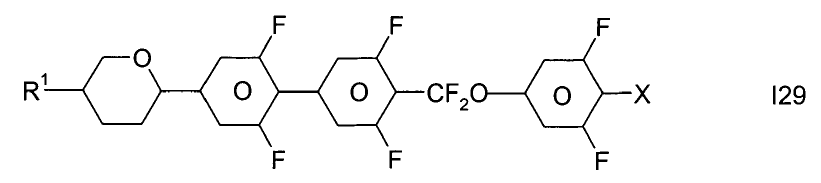 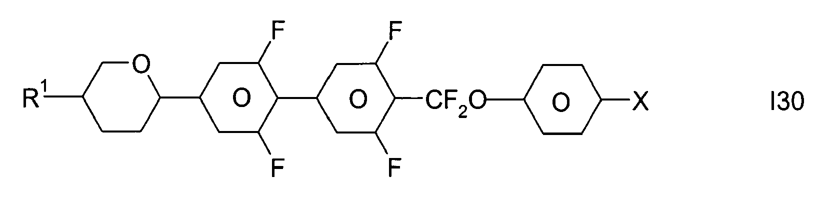 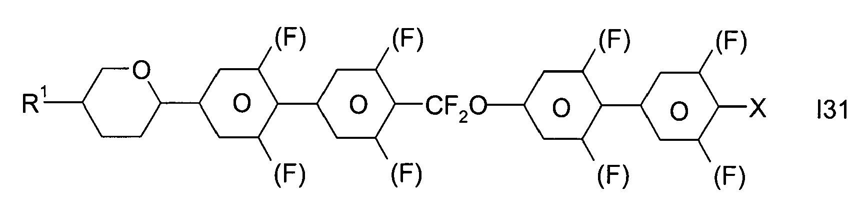 in which R¹ has the meanings indicated in Claim 1 and X has the meaning of R².

7. Liquid-crystalline medium comprising at least two mesogenic compounds, **characterised in that** it comprises at least one compound of the formula I according to Claim 1.

8. Liquid-crystalline medium according to Claim 7, **characterised in that** it comprises one or more compounds selected from the group consisting of the general formulae II to IX 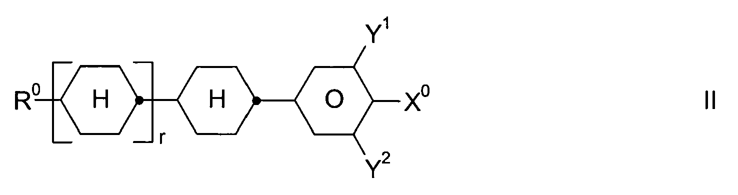 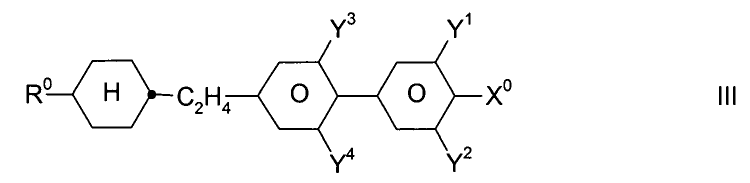 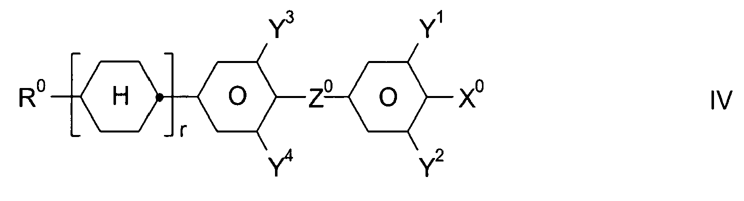 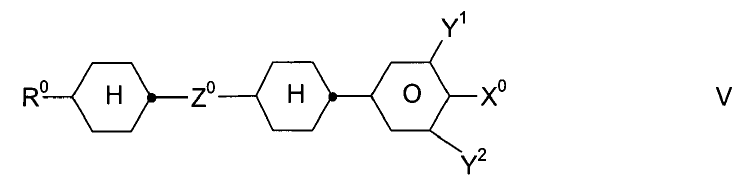 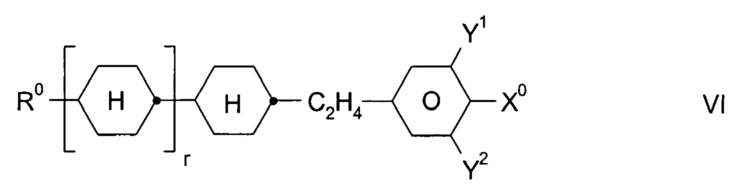 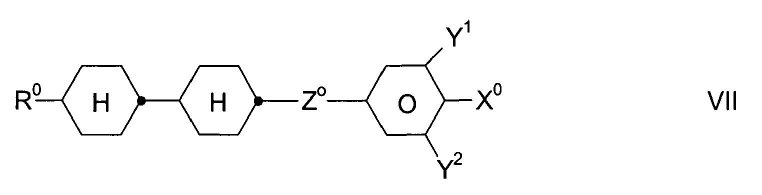 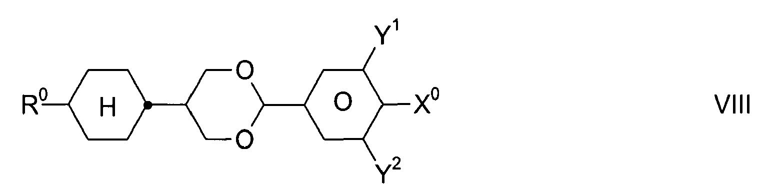 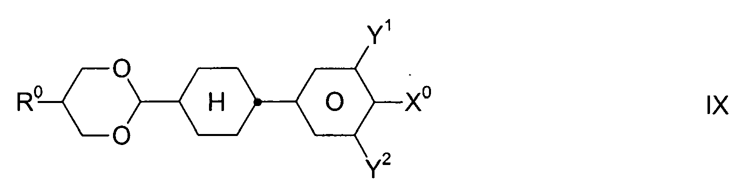 in which
R⁰ denotes n-alkyl, oxaalkyl, fluoroalkyl, alkenyloxy or alkenyl, each having up to 9 C atoms,
X⁰ denotes F, Cl, halogenated alkyl, halogenated alkenyl, halogenated alkenyloxy or halogenated alkoxy having up to 7 C atoms,
Z⁰ denotes -CH=CH-, -C₂H₄-, -(CH₂)₄-, -C₂F₄-, -CH₂O-, -OCH₂-, -CF=CF-, -CF₂O-, -OCF₂- or -COO-,
Y¹,Y², Y³ and Y⁴ each, independently of one another, denote H or F, and
r denotes 0 or 1.

9. Use of the liquid-crystalline medium according to Claim 7 or 8 for electro-optical purposes.

10. Electro-optical liquid-crystal display containing a liquid-crystalline medium according to Claim 7 or 8.

## Revendications

1. Composés cristallins liquides de la formule 1 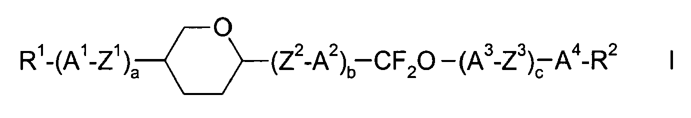 dans laquelle
R¹ et R² chacun indépendamment de l'autre, représentent H, halogène, un radical alkyle ou alcoxy halogéné ou non substitué comportant de 1 à 15 atomes de C, où, en plus, un ou plusieurs groupes CH₂ dans ces radicaux peuvent, chacun indépendamment des autres, être remplacés par -C≡C-, -CH=CH-, -O-, -CO-O- ou -O-CO- de telle sorte que des atomes de O ne soient pas liés directement les uns aux autres, où l'un des radicaux R¹ et R² peut à titre d'alternative représenter CN, OCN, SCN, NCS ou SF₅,
A¹, A², A³ et A⁴ chacun indépendamment des autres, représentent 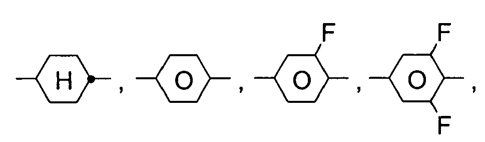 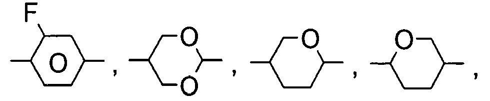 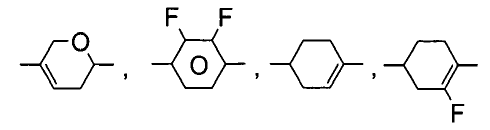 ou 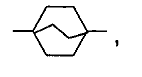
Z¹, Z² et Z³ chacun indépendamment des autres, représentent -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- ou une liaison simple, et
a, b et c chacun indépendamment des autres, représentent 0, 1,2 ou 3, où a + b + c ≤ 3.

2. Composés cristallins liquides de la formule IA 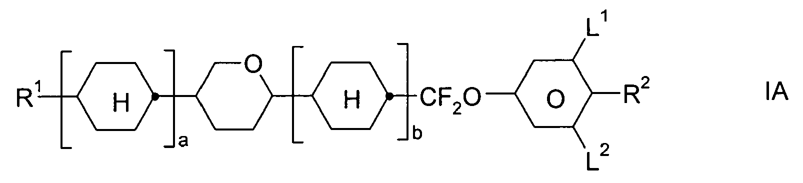 dans laquelle
R¹, R², a et b présentent les significations indiquées dans la revendication 1, où a + b = 1 ou 2, et
L¹ et L² chacun indépendamment de l'autre, représentent H ou F.

3. Composés cristallins liquides selon la revendication 1 ou 2, **caractérisés en ce que** a = 1 et b = 0 ou a = 0 et b = 1.

4. Composés cristallins liquides selon la revendication 2, **caractérisés en ce que** L¹ représente fluor et L² représente fluor ou hydrogène.

5. Composés cristallins liquides selon la revendication 2, **caractérisé en ce que** L¹ et L² représentent fluor.

6. Composés cristallins liquides des formules I1 à I31 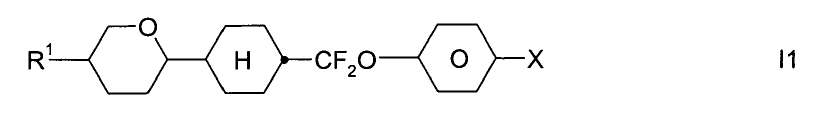 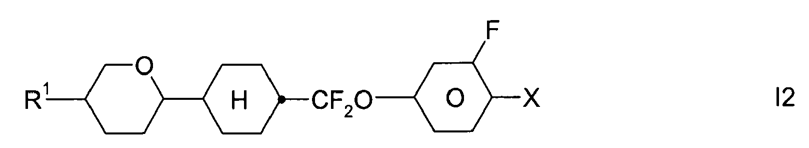 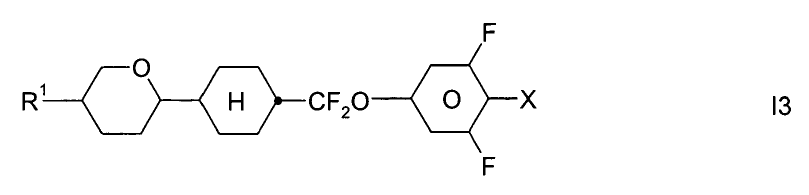 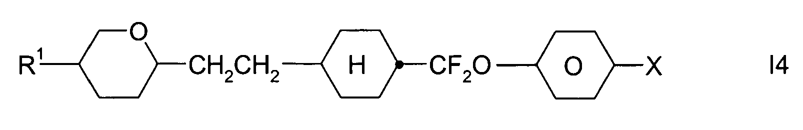 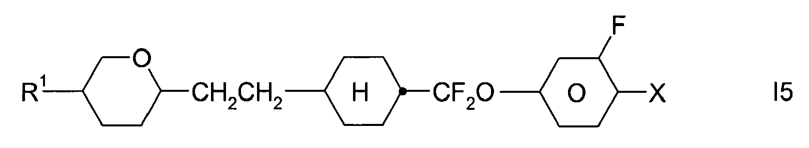 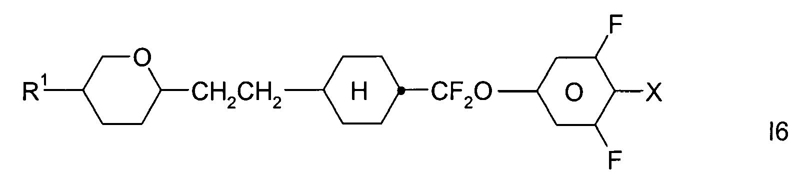 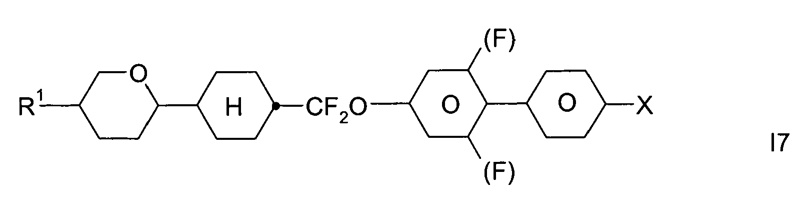 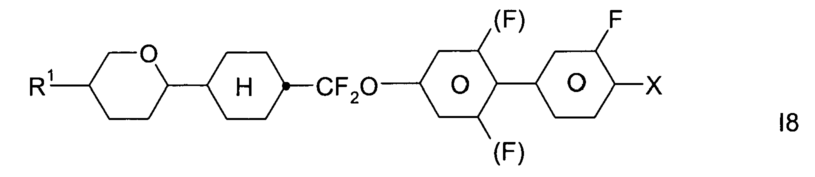 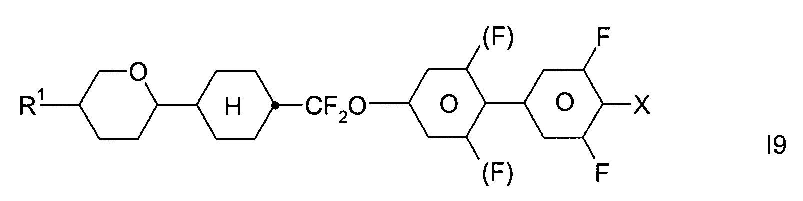 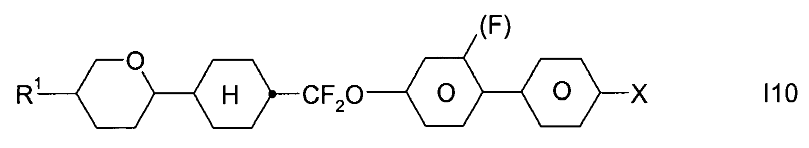 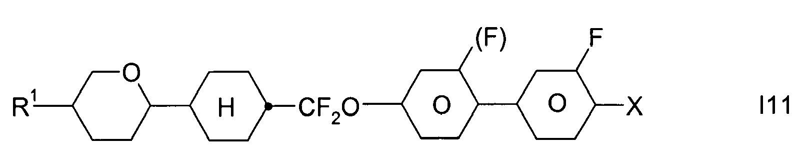 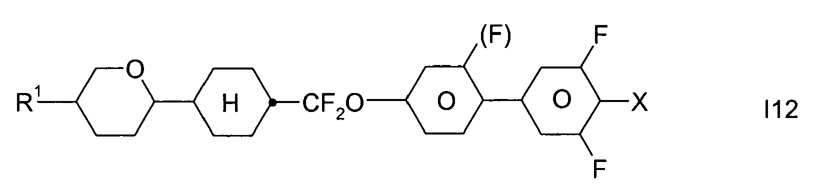 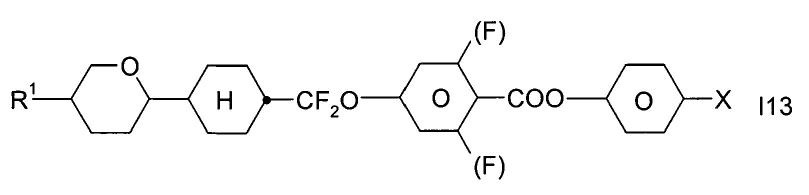 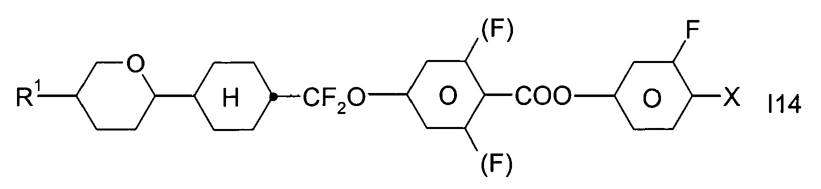 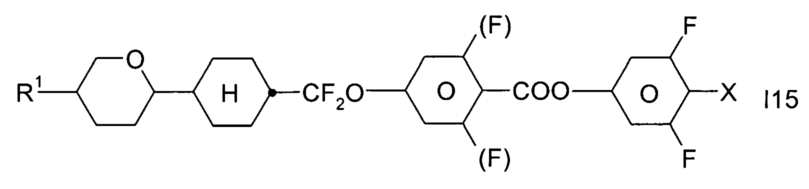 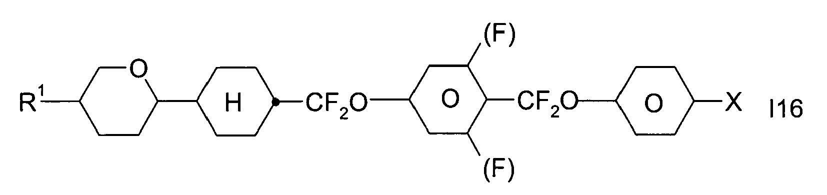 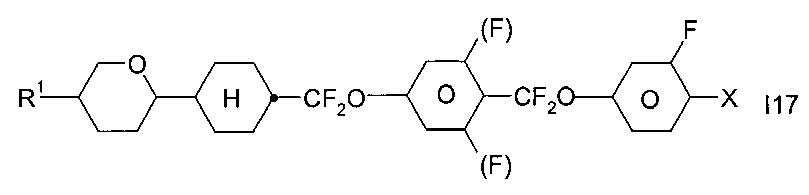 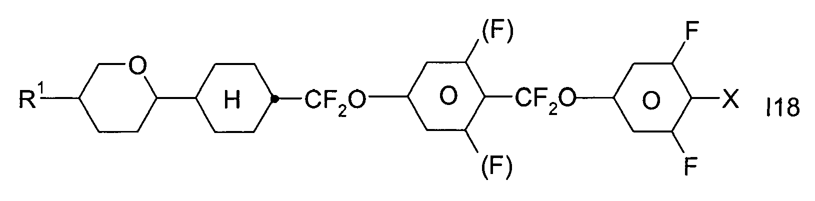 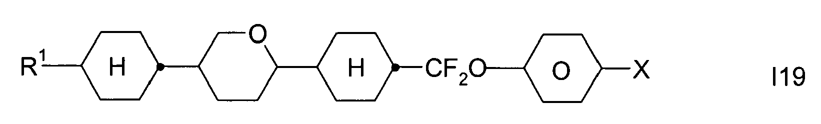 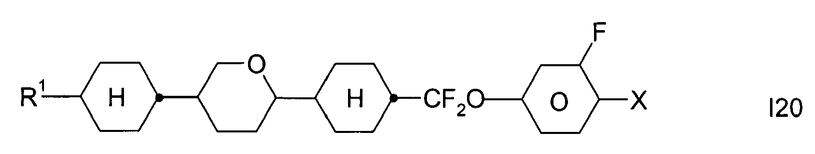 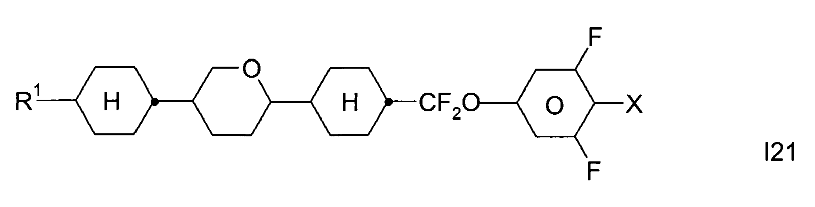 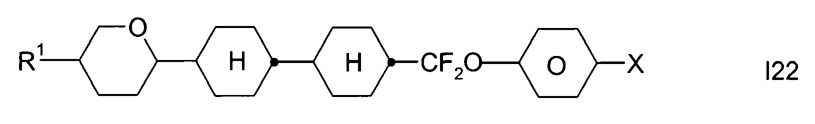 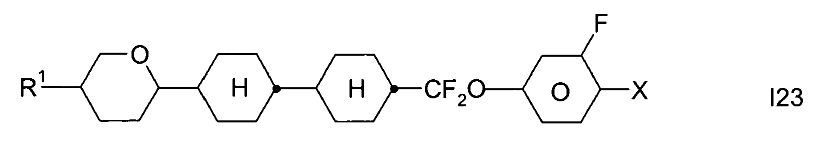 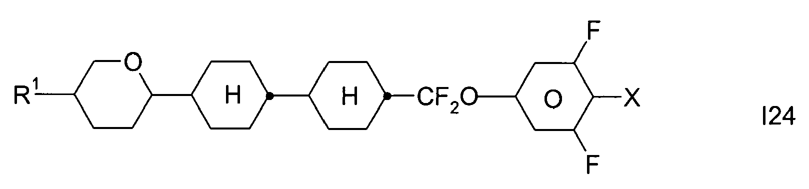 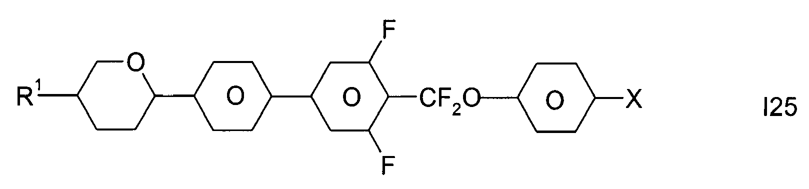 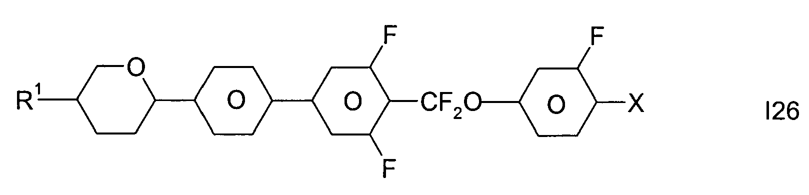 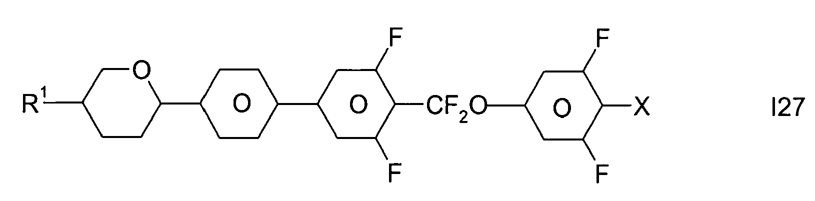 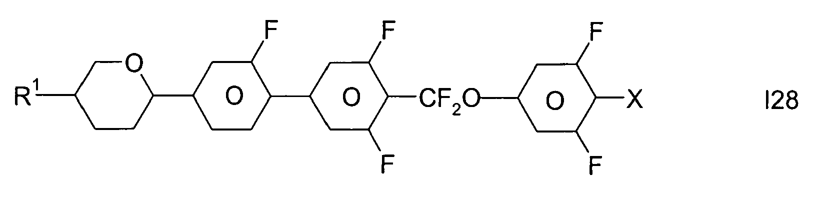 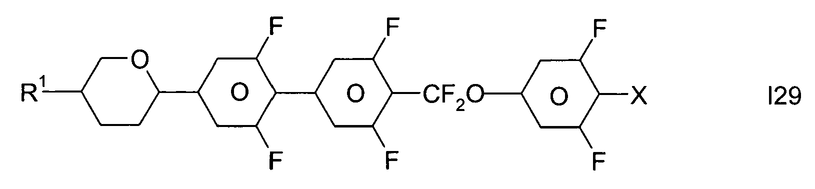 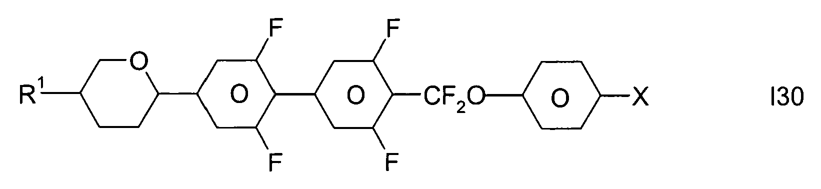 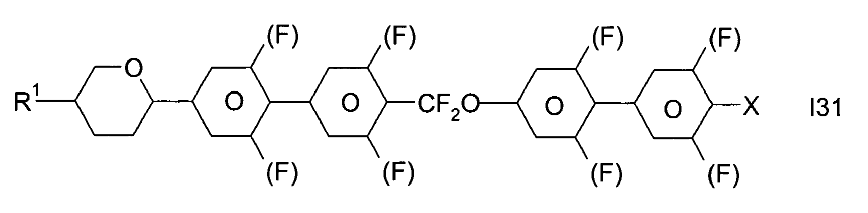 dans lesquelles R¹ présente les significations indiquées selon la revendication 1 et X présente la signification de R².

7. Milieu cristallin liquide comprenant au moins deux composés mésogènes, **caractérisé en ce qu'**il comprend au moins un composé de la formule 1 selon la revendication 1.

8. Milieu cristallin liquide selon la revendication 7, **caractérisé en ce qu'**il comprend un ou plusieurs composés choisis parmi le groupe constitué par les formules générales II à lX 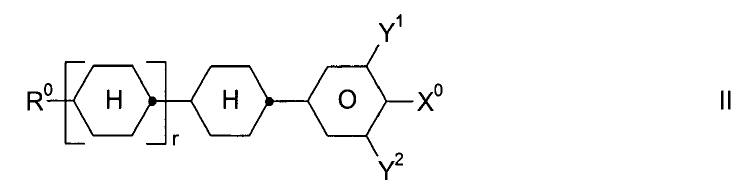 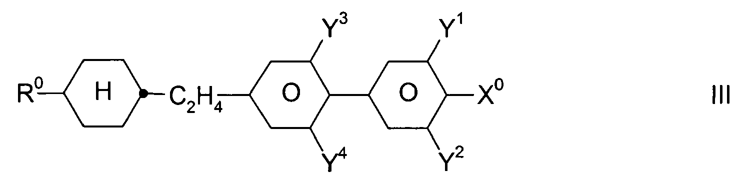 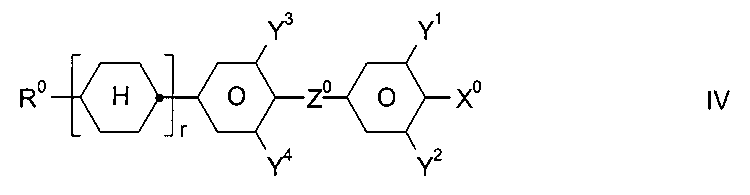 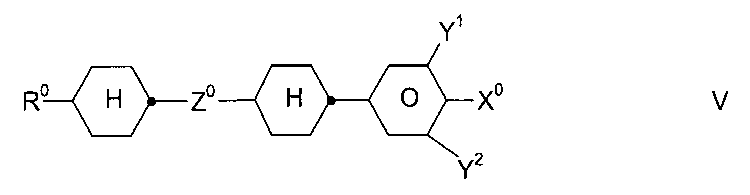 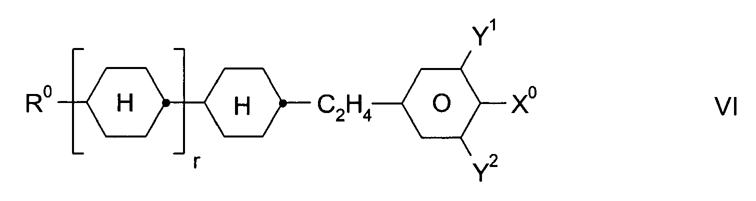 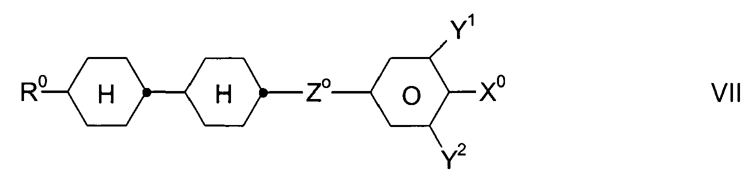 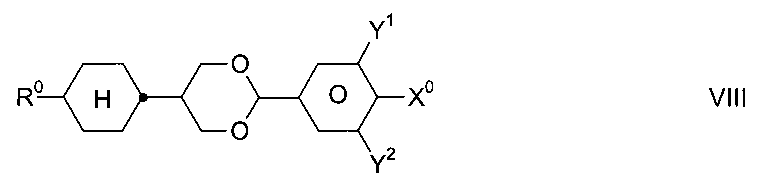 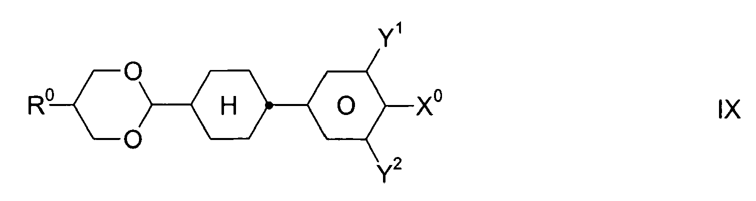 dans lesquelles
R⁰ représente n-alkyle, oxaalkyle, fluoroalkyle, alkényloxy ou alkényle, chacun comportant jusqu'à 9 atomes de C,
X⁰ représente F, Cl, alkyle halogéné, alkényle halogéné, alkényloxy halogéné ou alcoxy halogéné comportant jusqu'à 7 atomes de C,
Z⁰ représente -CH=CH-, -C₂H₄-, -(CH₂)₄-, -C₂F₄-, -CH₂O-, -OCH₂-, -CF=CF-, -CF₂O-, -OCF₂- ou -COO-,
Y¹,Y², Y³ et Y⁴ chacun indépendamment des autres, représentent H ou F, et
r représente 0 ou 1.

9. Utilisation du milieu cristallin liquide selon la revendication 7 ou 8 à des fins électro-optiques.

10. Affichage à cristaux liquides électro-optique contenant un milieu cristallin liquide selon la revendication 7 ou 8.
